# EUROPEAN PATENT SPECIFICATION

(11) **EP 0 437 105 B1**
(45) Date of publication and mention of the grant of the patent: **13.11.1996**
(21) Application number: 90314335.2
(22) Date of filing: 28.12.1990
(51) Int. Cl.: C09B 69/10, C08G 65/28

(54) **Intermediates and colorants having primary hydroxyl enriched poly(oxyalkylene) moieties and their preparation**
Zwischenprodukte und Farbstoffe mit vermehrt primären Hydroxylgruppen enthaltenden Poly(oxyalkylen)-Resten sowie deren Herstellung
Intermédiaires et colorants ayant des groupes poly(oxyalkylène) avec hydroxyles primaires augmentés et leur préparation

(30) Priority: 08.01.1990 US 461852; 01.03.1990 US 486992
(43) Date of publication of application: 17.07.1991
(73) Proprietor: MILLIKEN RESEARCH CORPORATION, Spartanburg South Carolina 29304 (US)
(72) Inventor: Moody, David Jesse, Spartanburg, South Carolina 29301 (US); Kluger, Edward William, Pauline, South Carolina 29374 (US); Rekers, John William, Spartanburg, South Carolina 28301 (US)
(74) Representative: Pacitti, Pierpaolo A.M.E.

(56) References cited:
- EP-A- 0 072 621
- CH-A- 557 860
- US-A- 3 446 757
- US-A- 4 086 151
- US-A- 4 284 729
- US-A- 4 751 254

## Description

### FIELD OF THE INVENTION

This invention concerns organic materials, especially organic intermediates and colorant materials or chromophores therefrom, containing at least one poly(oxyalkylene) moiety having primary hydroxyl site enhancement or enrichment which contributes to one or more characteristics of enhanced functionality such as higher density hydroxyl distribution, increased branching and branching density, more uniform branch chain lengths, or the like, which characteristics appear to contribute to improved reactivity and/or compatibility of the present materials in polymeric substrates, as well as improvements in other properties such as non-extractibility from such substrates. In this regard, the chemical structures of the present colorants are readily tailorable to meet, in exceptional manner, the physical and chemical requirements of the specific industrial application, particularly in the coloring of formed thermosetting or thermoplastic resins and articles formed therefrom.

Some of the desired physical and chemical characteristics of such colorants for coloring polymers per se or compositions containing polymer, in addition to having at least substantial tinctorial power, include one or more of excellent clarity and light fastness, high heat stability, crystal structure and shade immutability, availability as liquids or at least good resin compatibility at processing temperatures for easy blending with the polymer or compositions, easy clean-up from processing, homogeneity of dispersal in the polymer or composition, non-nucleating propensity of the colorant, and resistance to migration, settling, streaking, plating, subliming, blooming, solvent or water extractibility or the like of the colorant from the polymer or composition or article formed therefrom.

### DESCRIPTION OF RELATED ART

Multi-functional reactants such as compounds containing poly(oxyalkylene) moieties having a plurality of hydroxyls, primary and/or secondary, are described, for example, in U.S. patents: 3,535,382; 4,761,502; 3,154,535; 4,298,764; 4,659,774; 3,446,757; 4,751,254; 4,086,151; and 3,945,894. Note, the production of primary and secondary hydroxyls through the base catalyzed polymerization of glycidol is described in the Journal of Polymer Science, Vol. 23, pages 915-949(1985), E.J. Vandenberg. The utility disclosures and process disclosures of these patents and literature reference concerning entry of the reactants into polymeric or resinous materials or substrates are incorporated herein by reference. Colorants having polyhydroxyl functionalities are particularly useful for permanent incorporation into polymeric materials or substrates such as polyurethanes as described for certain poly(oxyalklene) materials in the aforesaid U.S. Patents 4,751,254 and 3,446,757. Further, the nature of the epoxide chain propogation step influences the positions of the hydroxyl sites in the epoxide chain, their molar concentrations, and the ratio of their primary/secondary character all of which are quite important, particularly in regard to the reactivity of the colorant and its extractability from polymeric substrates.

US-A-4,751,254 describes the reaction of 1-chloro-2,3-propanediol to introduce a diol structure into the poly(oxyalkylene) chain. In practice, only one mole of 1-chloro-2,3-propanediol can be added per chain. Moreover, the poly(oxyalkylene) chain in the colorants of US-A-4,751,254 were initially reacted to have ethylene oxide residues immediately adjacent the glycidol segment formed from the 1-chloro-2,3-propanediol.

US-A-3,446,757 discloses high molecular weight polyethers prepared from silicon esters of epoxy alcohols, or copolymers of the silicon esters with an epoxide-containing monomer having an oxirane or acetone ring.

US-A-4,086,151 refers to compounds having up to 2, substantially linear, poly(oxyalkylene) chains.

In two particularly important utilities for the prior art poly(oxyalkylene) colorants, (1) the reactive, primary hydroxyls of the poly(oxyalkylene) moiety or moieties which are associated with the colorant are reacted into isocyanate based glues for carpet underlays, and (2) the colorants are reacted into polyurethanes which are formed into slab foam configuration for the production of shoe soles or the like.

The carpet underlay application (1) employs an isocyanate based glue which may be colored by reaction with a polyhydroxyl containing poly(oxyalkylene) colorant. In this application, should the carpet underlay become flooded, for example, with soapy water, as in steam cleaning thereof, unreacted poly(oxyalkylene) colorant would extract from the underlay and migrate into the carpet, leaving the carpet unacceptably colored upon drying.

In the second application (2) in the coloration of polyurethane shoe soles, the ratio of isocyanate is much lower than in carpet underlay production, making it more difficult to react the prior art poly(oxyalkylene) colorant during polyurethane formation. The benefits of soluble colorants, particularly when storing pre-formulations of polyol and colorant for extended periods of time prior to reaction with isocyanates and sole formation, are well recognized in the field, the problem of their insufficient reactivity, resulting in excessive migration of the colorant is highly evident from their trial uses. Consequently, the soles, although quite pleasing in appearance, tend to leave colored marks on the floor when worn due to the migration of unreacted colorant out of the system. It is noted that in these prior disclosures, the epoxide chain propagation both branched and unbranched, proceed according to the natural polymerization tendencies of the epoxide reactant, without further directive influence. As a result and as more clearly perceived through theoretical considerations, the degree of branching is thus limited and chain propagation appears to prodeed principally from primary hydroxyl nucleophilic sites, producing long, unbranched chains. Such limited branching, particularly where the residual functional sites are distributed in a low density pattern, appear to have a restricting effect on the propensity of the poly(oxyalkylene) moiety to affix itself, either ahemioally or physically by moleoular intertwining to substrates such as polymers or the like.

It is further noted that substantial difficulty is encountered in reacting any secondary hydroxyls of a colorant with e.g., toluene diisocyanate for incorporation thereof into a polyurethane substrate. For such purpose, the present invention provides a means for converting the secondary hydroxyls to primary and thus markedly enhancing the reactivity of the intermediate or colorant with toluene diisocyanate or other such reactant to greatly increase the permanency of the colorant in the substrate. While this conversion of secondary to primary would appear to be straightforward through reaction with ethylene oxide, it has been found that with this reactant an unacceptably high proportion of secondary hydroxyls remain in the intermediate or colorant and result in diminished permanency of the colorant moiety in the substrate. As aforesaid, this diminished permanency is especially noticeable in the case of higher concentrations of colorant which can migrate from the substrate polymer and tranfer to rugs, furniture, or the like.

### SUMMARY OF THE INVENTION

The present invention has as a principal object therefore, to provide a process, whereby a positive directive influence is brought to bear on such epoxide polymerizations to effect the aforesaid molecular improvements, especially the apparent branching and functional density enhancements, and particularly where the branched segments are ultimately terminated by primary hydroxyls.

This and other objects hereinafter appearing have been attained in accordance with the present invention through the discovery of a process and product therefrom, which process provides the aforementioned directive influence on the epoxide polymerizations, the process comprising the steps of (1) providing a reaction system containing an initial reactant having at least one glycidol segment comprised of at least one glycidol residue and containing at least one primary hydroxyl and at least one secondary hydroxyl, and (2) sequentially contacting said reaction system with epoxide reactant material to (a) firstly produce at least one secondary hydroxyl containing epoxide residue segment linked directly to at least one primary oxy site on said glycidol segment by reacting the system with a secondary hydroxyl producing epoxide of three or more carbons, and (b) secondly to terminate at least a major portion of the resulting poly(oxyalkylene) chains or branches with primary hydroxyl groups by reacting the system with a primary hydroxyl producing epoxide.

In certain preferred embodiments of the above process:
(a) in step (2) said reaction system is first contacted in a step (2a) with a first epoxide reactant material of at least three carbons in stoichiometric excess of at least a major portion of total primary hydroxyl in said glycidol segment, and the resulting reaction system is then contacted in a step (2b) with a second epoxide reactant material which produces primary hydroxyls, the amount of said second epoxide reactant material added being in stoichiometric excess of at least a major portion of total secondary hydroxyls in the product of step 2a);
(b) in steps (2a) and (2b) the first and second epoxide reactant materials respectively are added in stoichiometric excess of the total hydroxyl groups present in said reactant from step (1) and in the poly(oxyalkylene) moiety from step (2a);
(c) the molar ratio of each of said first and second epoxide reactant materials to total glycidol residues is from about 1/1 to about 60/1, preferably from 1/1 to 50/1;
(d) said glycidol segment contains two to eight glycidol residues (ie is a polyglycidol segment); and
(e) said first epoxide reactant material is propylene oxide or butylene oxide or mixtures thereof, and said second epoxide reactant material is ethylene oxide.

The glycidol segment is preferably linked to a chromophore or to an intermediate which may find utility in the production of colorants. In a broad sense, the present invention may be useful with virtually any organic nucelophile when the character of branching in a poly(oxyalkylene) substituent is critical.

### DESCRIPTION OF THE PREFERRED EMBODIMENT OF THE INVENTION

Without limiting the scope of the invention, the preferred features of the invention are hereinafter set forth.

The present invention provides marked improvements in reactivity of the intermediates or colorants and allows their successful use in the above and many other applications. It is believed that the present molecular improvements results from the diminishment of reactivity disparity between the available primary and secondary hydroxyls of the glycidol segment through conversion of at least some of the initial primary hydroxyls thereof to secondary hydroxyls by means of the initial reaction with the first epoxide reactant material, which reaction theoretically occurs more readily at primary hydroxyl sites.

The secondary hydroxyls originally present or formed by this first reaction thus have diminished competition from primary hydroxyls for reaction with subsequent first and second epoxide reactants. Consequently, the possibility for unlimited, single, unbranched chain propagation from primary hydroxyl sites is markedly reduced. It is noted that the present process appears to distribute reactive hydroxyl functionality in the final product in a more dense spatial relationship than heretofore attainable, for subsequent and improved reaction with polymeric reactants or the like.

The improved materials so produced find special utility, e.g., as reactive or blendable intermediates for permanently incorporating various organic moieties such as, for example, organic colorants as aforesaid into polymeric substrates. Such incorporation into polyurethanes is described in detail in the aforesaid U.S. patent 4,284,729. Also, the present materials find utility as aqueous dispersion aids in a variety of systems, or for reactive incorporation into compounds for markedly increasing the water dispersibility thereof. In the use of poly(oxyalkylene) materials, particularly as reactive intermediates, the degree of chain branching, the positions of the functional sites on the poly(oxyalkylene) moiety and their molar concentrations thereon, and the ratio of their primary/secondary character can become quite important, particularly in regard to the permanancy and non-extractibility with which these intermediates can chemically or physically affix various moieties, such as colorants, into various polymeric substrates. In addition to the intermediates which may be useful in the manufacture of colorants, the invention is directed to the colorants themselves having poly(oxyalkylene) moieties as set forth herein.

in its broad aspect, the present invention discloses a process for preparing a compound having the formula

Y-(Z)₁₋₆

wherein
Y is the residue of an organic nucleophile;
each group Z is a poly(oxyalkylene) moiety comprising at least one glycidol segment comprising at least one glycidol residue, said process comprising the steps of:
1. providing a reaction system containing an initial reactant having at least one glycidol segment comprised of at least one glycidol residue of formula -CH₂CH(OH)CH₂O- or -CH₂CH(OH)CH₂OH, said glycidol segment containing at least one primary hydroxyl group and at least one secondary hydroxyl group;
2. contacting said reaction system with a first epoxide reactant material comprised of a secondary hydroxyl producing epoxide having three or more carbon atoms;
3. contacting said reaction system with a second epoxide reactant material comprised of a primary hydroxyl producing epoxide,
the addition of said epoxide reactant materials being in a selective sequence firstly to produce a secondary hydroxyl containing epoxide residue segment linked directly to at least one primary oxy site on said glycidol segment and secondly to terminate at least a major portion of the resulting poly(oxyalkylene) chains or branches with primary hydroxyl groups.

At least one secondary hydroxyl of said glycidol residue segment may be linked directly to a third epoxide segment having the characteristics of said first epoxide segment or said second epoxide segment. Preferably, the third epoxide segment has a primary terminal hydroxyl.

As stated in a more limited embodiment, each Z is a poly(oxyalkylene) moiety containing at least one polyglycidol segment of at least two glycidol residues, said polyglycidol segment being directly linked to a terminating moiety containing a first epoxide segment comprised of (a) the residue of one or more epoxide reactants of three or more carbons, and (b) a second epoxide segment directly linked to said first epoxide segment and comprised of the residue of one or more epoxide reactants and containing at least one primary terminal hydroxyl.

The above Z moieties can vary in molecular weights, for example, from about 200 to about 10,000, depending on the use intended for these reactive materials products. The Z moieties in another preferred embodiment contain in close proximity to the nucleophile a segment of at least two linked glycidol residues, which segment has been reacted with propylene oxide or butylene oxide in stoichiometric excess of the glycidol residue hydroxyl sites, and wherein the resultant product is reacted with ethylene oxide reactant to provide at least two terminal -CH₂CH₂OH groups. It is also preferred that in the Z moiety the glycidol residues comprise at least about 0.5 mole percent of all epoxide residues, preferably from about 2.0 to about 30.0 mole percent, and most preferably from about 8.0 to about 22.0 mole percent.

Inherent in the above described process and composition is the optional provision for reacting one or more additional glycidol molecules into the Z poly(oxyalkylene) moiety at sites separated from the initial glycidol segment. In this event, it is preferred that the additional glycidol residue be subsequently reacted with one or more molecules of a secondary hydroxyl providing epoxide, and that the product thereof subsequently be reacted with one or more molecules of a primary hydroxyl providing epoxide such as ethylene oxide.

In certain other preferred embodiments:
(a) the glycidol segment is linked directly to a nitrogen linked directly to an aromatic compound;
(b) the glycidol segment is connected directly to an aromatic compound through or by an oxy, thio, sulfinyl, sulfonamido or imido linkage;
(c) the glycidol segment is comprised of from two to eight linked glycidol residues;
(d) the segment of (c) is directly linked to at least two terminating moieties;
(e) each terminating moiety is comprised of a first segment of one or more linked residues of propylene oxide (P0) or butylene oxide (BO) or mixtures thereof bonded directly to the segment of (d), and of a second segment bonded directly to said first segment and containing one or more linked residues of ethylene oxide (EO); and
(f) the first segment of each terminating moiety of (e) contains a total of from about 2 to about 15 residues of PO, BO, or mixtures thereof, and the second segment contains from about 2 to about 50 residues of EO.
In another embodiment, the present invention may be defined in terms of a process for enhancing the primary hydroxyl content of an organic compound of the formula

Y₁-(Z₁)₁₋₄

wherein Y₁ is a nucleophilic residue and Z₁ is a poly(oxyalkylene) moiety comprised of (1) at least two (A₁) units independently selected from those of the formulae:

-CH₂CH(OH)CH₂O- or -CH₂CH(OH)CH₂OH

and (2) from none to about 200 (B) units of the formula, (-RO-) wherein R is straight or branched chain hydrocarbon of 2-4 carbons, wherein the sum of A₁ + B is from about 3 to about 200, said process comprising the steps of (a) reacting at least about 75 percent of all hydroxyls of said (A₁) units with an organic epoxide which gives a secondary hydroxyl, and then (b) reacting at least about 50 percent of all hydroxyls present in the resulting product of (a) each with from 1 to about 40 alkyleneoxide units of 2-4 carbons, with the provision that the terminating unit residue thereof is hydroxyethyl.

In a preferred embodiment, colorants produced according to the invention have the formula

C-(Z)₁₋₄

wherein C is an azo, methine or azamethine chromophore and Z is a poly(oxyalkylene) moiety comprised of (1) at least two (A) units independently selected from those of the formulae

-CH₂CH(O-T)CH₂O- or -CH₂CH(O-T)CH₂O-T

and (2) from none to about 200 (B) units of the formula (-RO-) wherein R is straight or branched chain hydrocarbon of 2-4 carbons, T is a moiety of the formula

-CH₂CH(R₁)-O-(RO)₀₋₄₀-CH₂CH₂OH

wherein R₁ is selected from substituted or unsubstituted alkenyloxyalkyl, alkoxyalkyl, aryloxyalkyl, alkyl, or aryl, and said A units comprise at least about 0.5 percent of the total A + B units.

In certain other preferred embodiments:
said A or A₁ units comprise from about 5.0 percent to about 50 percent of the total A or A₁ + B units, and conversely the (-RO-) units comprise from about 50 percent to about 95 percent of the total A or A₁ + B units; and
at least about 50 percent of the (-RO-) units in T are derived from propylene or butylene oxide or mixtures thereof.

The preferable colorants have the following general formulae:

| | | | |
|---|---|---|---|
| Q-N=N-Ar | M=CH-Ar | M=N-Ar | D-N=N-Ar |
| Azo | Methine | Azamethine | Quaterary Azo |

wherein Q is the residue of a carbocyclic or heterocyclic aromatic, diazotizable amine reactant selected from unsubstituted or substituted: phenyl; naphthyl; thiazol-2-yl; benzothiazol-2-yl; 1,3,4-thiadiazol-2-yl; 1,2,4,-thiadiazol-5-yl; isothiazol-5-yl; isoxazol-5-yl; 2,1-bensisothiasol-3-yl; 2-thienyl; 3-and 4-pyridyl; pyrazol-5-yl; 3-and 4-phthalimidyl; 1,2,4-triazol-3-yl or 4,5 (3,3-dimethyl-1-oxotetramethylene)thiazol-2-yl;
M is an active methylene residue and Ar is the residue of a reactant selected from substituted or unsubstituted: anilines; naphthylamines; 1,2,3,4-tetrahydroquinolines; 3,4-dihydro-2H-1,4-benzoxazines; 2-aminothiazoles; indoles; diphenylamines; 2,3-dihydroindoles; carbazoles; phenoxazines;
D is an aromatic heterocyclic radical which contains a quaternary nitrogen atom, said radical being selected from unsubstituted or substituted: thiazol-2-yl; benzothiazol-2-yl; 1,3,4-thiadiazol-2-yl; 1,2,4-thiadiazol-5-yl; isothiazol-5-yl; 2,1-benzisothiazol-3-yl; pyrazol-5-yl; 1,3,4-triazol-2-yl; 3-or 4-pyridyl; or 4,5-(3,3-dimethyl-1-oxotetramethylene)thiazol-2-yl; phenothiazines; 2-aminothiophenes; aminopyridines or julolidines;
and wherein at least one -Z moiety is present on either Q- or -Ar.

A more preferred group of colorants of the invention are those with the specific formulae for the Q-, -Ar, M- and D- moieties as given below. These preferred colorants are those wherein the aromatic residue Q- is selected from those of the formulae: 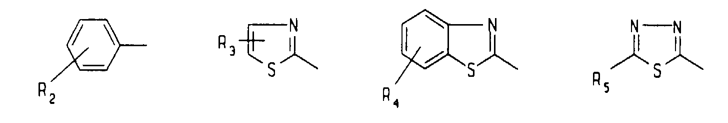 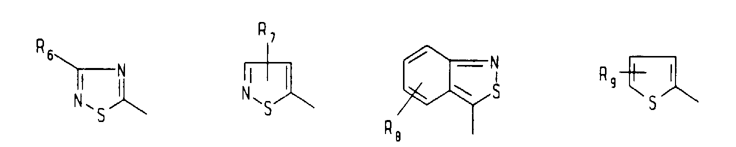 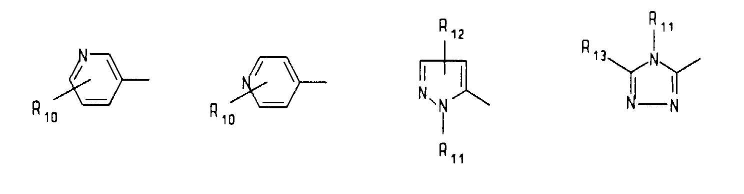 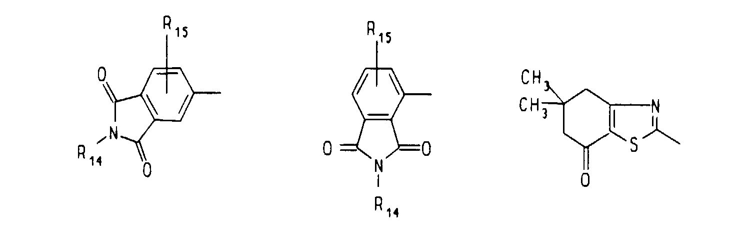 wherein:
R₂ is hydrogen or 1-3 substituents selected from lower alkyl, lower alkoxy, halogen, cyano, nitro, formyl, alkanoyl, aroyl, thiocyano, lower alkylthio, arylthio, lower alkylsulfonyl, arylsulfonyl, carbalkoxy, unsubstituted or substituted sulfamoyl, unsubstituted or substituted carbamoyl, nitro, trifluoromethyl or arylazo;
R₃ is hydrogen or 1-2 substituents selected from lower alkyl, aryl, halogen, cyano, formyl, carbalkoxy, nitro, arylazo, thiocyano, lower alkylsulfonyl, arylsulfonyl, trifluoromethyl, alkanoyl, aroyl, unsubstituted or substituted sulfamoyl or unsubstituted or substituted carbamoyl;
R₄ is hydrogen or 1-3 substituents selected from lower alkyl, lower alkoxy, halogen, cyano, carbalkoxy, alkanoyl, aroyl, arylazo, -SO₃-aryl, alkylsulfonyl, arylsulfonyl, unsubstituted or substituted carbamoyl, unsubstituted or substituted sulfamoyl, alkylthio, thiocyano, 2-cyanoethylthio, 2-cyanoethylsulfonyl, or alkanoylamino;
R₅ is hydrogen or a group selected from lower alkyl, cycloalkyl, aryl, alkylthio, arylthio, cyanomethylthio, halogen, alkysulfonyl, arylsulfonyl, lower alkoxy, benzylthio, allylthio, unsubstituted or substituted sulfamoyl, thiocyano or alkanoylamino;
R₆ is hydrogen or a group selected from lower alkyl, aryl, alkylthio, alkylsulfonyl, halogen, cyano, 2-carbalkoxyethylthio or benzylthio;
R₇ is hydrogen or 1-2 substituents selected from lower alkyl, halogen, nitro, cyano, alkylthio, 2-hydroxyethylthio, arylthio, alkylsulfonyl or arylsulfonyl;
R₈ is hydrogen or a group selected from lower alkyl, lower alkoxy, nitro, halogen or unsubstituted or substituted sulfamoyl;
R₉ is hydrogen or 1-3 substituents selected from lower alkyl, aryl, cyano, lower carbalkoxy, alkanoyl, aroyl, halogen, formyl, unsubstituted or substituted carbamoyl, thiocyano, alkysulfonyl, arylsulfonyl, unsubstituted or substituted sulfamoyl, nitro, arylazo or cinnamoyl;
R₁₀ is hydrogen or 1-3 substituents selected from lower alkyl, halogen, lower alkoxy, lower alkylsulfonyl, arylsulfonyl, carbalkoxy, aryl, unsubstituted or substituted carbamoyl; unsubstituted or substituted sulfamoyl, formyl, or thiocyano;
R₁₁ is hydrogen, lower alkyl, aryl, alkylsulfonyl, or arylsulfonyl;
R₁₂ is hydrogen or 1-2 substituents selected from lower alkyl, aryl, unsubstituted or substituted carbamoyl, arylthio, lower alkylthio, cyanomethyl, cyano, nitro, carbalkoxy;
R₁₃ is hydrogen, lower alkyl, lower thioalkyl, arylthio, carbalkoxy, halogen, lower alkylsulfonyl, or arylsulfonyl;
R₁₄ is selected from hydrogen or unsubstituted or substituted: alkyl; aryl; cycloalkyl; or allyl; and
R₁₅ is hydrogen or 1-2 substituents selected from lower alkyl, lower alkoxy, halogen, nitro, cyano, alkylthio, arylthio, alkylsulfonyl, arylsulfonyl or aryloxy; and
wherein D is an aromatic heterocyclic radical which contains a quaternary nitrogen atom selected from those of the formulae: 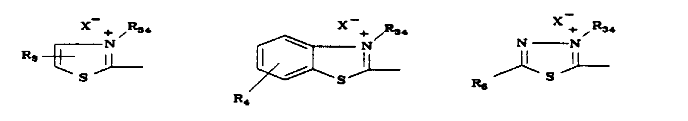 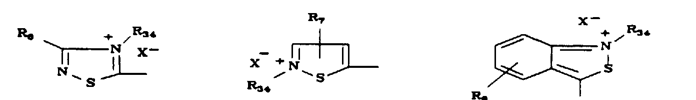 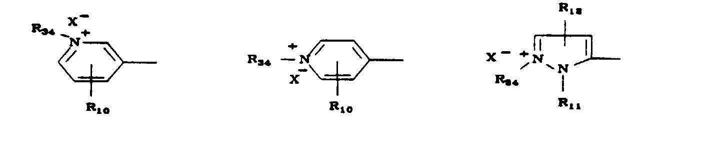 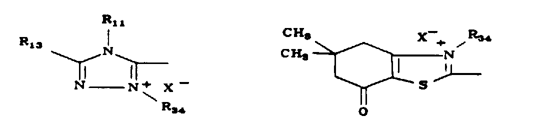 wherein R₃₄ is selected from lower alkenyl, lower alkyl, optionally substituted benzyl, hydroxyalkyl, carbamoylalkyl, -alkylene-CO₂ ⁻M⁺ or -alkylene-SO₃ ⁻M⁺; wherein M⁺ is H⁺, Na⁺, K⁺ Li⁺ or WH₄ ⁺; and wherein X⁻ is a counter anion selected from Cl⁻ Br⁻, CH₃SO₄ ⁻, C₂H₅SO₄ ⁻, or ZnCl₄ ⁻²/2 and R₃, R₄, R₅, R₆, R₇, R₈, R₁₀, R₁₁, R₁₂, and R₁₃ are as defined in the aromatic residue Q-;
wherein Ar is an aromatic residue selected from those formulae: 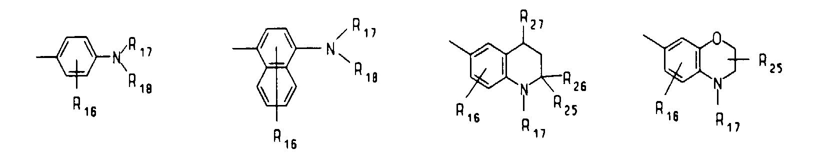 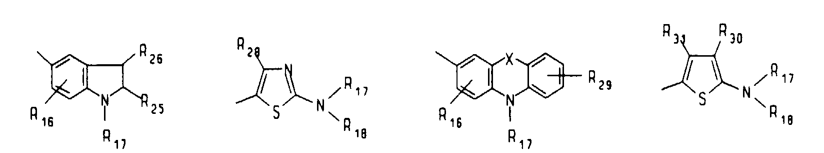 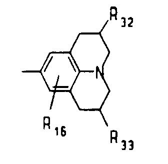 wherein:
R₁₆ is hydrogen or 1-2 substituents selected from lower alkyl, trifluoromethyl, lower alkoxy, arylthio, aryloxy, halogen, -CH₂-O-Z or -O-alkylene-O-Z;
R₁₇ and R₁₈ are each independently selected from: -Z; straight or branched lower alkenyl; cycloalkyl; cycloalkyl substituted with hydroxy, alkoxy, alkyl, halogen or alkanoyloxy; phenyl; phenyl substituted with one or more groups selected from lower alkyl, lower alkoxy, cyano, alkanoyloxy or -L-Z; straight or branched chain alkyl of 1-12 carbons and such alkyl substituted with one or more moieties of the formula -L-Z or 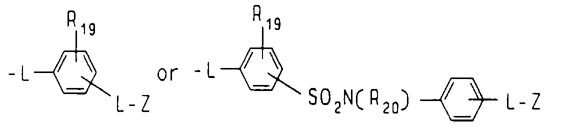 cyano, halogen, 2-pyrrolidino, phthalimidino, vinylsulfonyl, acrylamido, o-benzoic sulfonimido, a group of the formula 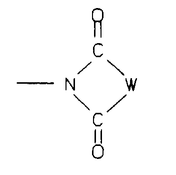 phenyl, and phenyl substituted with lower alkyl, lower alkoxy, halogen, carbalkoxy, cyano, carboxy or acyloxy; wherein Z as defined above;
R₁₉ is selected from hydrogen, lower alkyl, or lower alkanoylamino, lower alkoxy, halogen;
R₂₀ is selected from hydrogen; lower alkyl; lower alkyl substituted with hydroxy, acyloxy, phenyl, cycloalkyl, halogen or alkoxy; cycloalkyl; phenyl; phenyl substituted with lower alkyl, lower alkoxy, halogen, hydroxy, alkanoylamino, carbalkoxy, carboxy, cyano, or alkanoyloxy;
wherein the alkyl group represented by R₁₇ and R₁₈ can be further substituted with a group selected from those of the formulae:
-O-R₂₁; -SO₂-R₂₂; -CON(R₂₁)R₂₃; -SO₂N(R₂₁)R₂₃; -N(R₂₁)SO₂R₂₂; -OCO-R₂₃; -OCO₂R₂₃; -OCON(R₂₁)R₂₃; -SR₂₄ or -SO₂CH₂CH₂SR₂₄;
wherein R₂₁ and R₂₃ are selected from hydrogen; lower alkyl; lower alkyl substituted with hydroxy, aryloxy, halogen, cycloalkyl or phenyl; cycloalkyl; phenyl; phenyl substituted with lower alkyl, lower alkoxy, halogen, hydroxy, alkanoylamino, carbalkoxy, carboxy, cyano or alkanoyloxy;
R₂₂ represents the same substituents listed for R₂₁ and R₂₃ excepting hydrogen;
R₂₄ is selected from a group listed above for R₂₁ and R₂₃ plus benzothiazol-2-yl, benoxazol-2-yl, benzimidazol-2-yl, pyridyl, pyrimidinyl, 1,3,4-thiadiazolyl, 1,3,4-oxadiazolyl, naphthyl or triazolyl;
W is selected from: lower alkylene of 1-3 carbons; lower alkylene substituted with hydroxy, halogen, alkoxy or acyloxy; vinyl; 1,2-phenylene; 1,2-phenylene substituted with lower alkyl, lower alkoxy halogen, carboxy or carbalkoxy; 1,2-cyclohexylene; -O-CH₂-; -CH₂OCH₂-; -SCH₂-; -N(R₂₁)CH₂-; -N(R₂₁)CH₂CH₂-; or -CH₂N(R₂₁)CH₂-;
L is selected from a covalent bond, oxygen, sulfur, -SO₂-, -SO₂N(R₂₁)-, -N(SO₂R₂₂)-, -N(R₂₁)-, -COO-, or -CON(R₂₁)-;
R₂₅, R₂₆, and R₂₇ are independently selected from hydrogen or lower alkyl;
R₂₈ is hydrogen, cycloalkyl, alkyl, 2-thienyl, phenyl, phenyl substituted with halogen, lower alkyl, or lower alkoxy;
R₂₉ is hydrogen or 1-2 substituents selected from lower alkyl, lower alkoxy or halogen;
R₃₀ is selected from cyano, carbalkoxy, alkylsulfonyl, arylsulfonyl or unsubstituted or substituted carbamoyl;
R₃₁ is hydrogen, lower alkyl or aryl;
R₃₂ and R₃₃ are independently selected from hydrogen, lower alkyl, lower alkoxy, halogen or -L-Z;
wherein X is a covalent bond, oxygen or sulfur;
wherein M is an active methylene residue selected from those of the formulae: 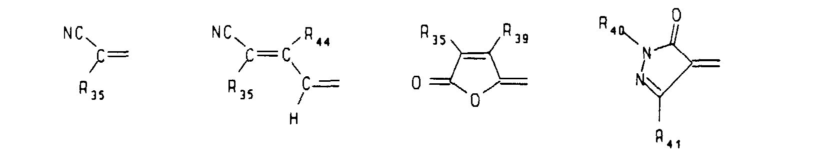 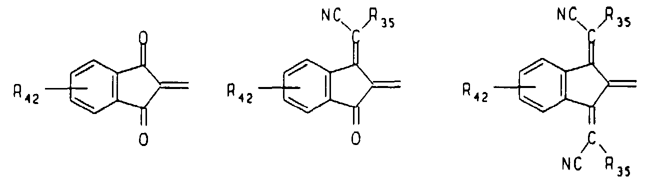 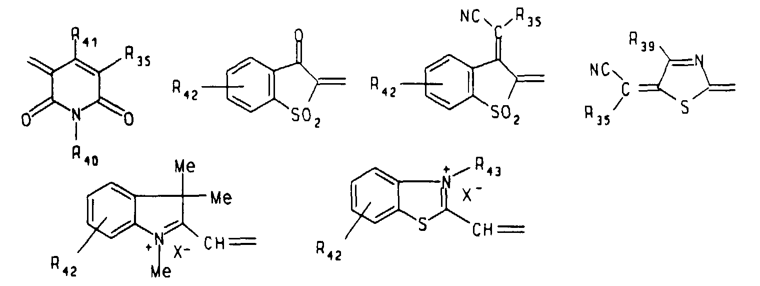 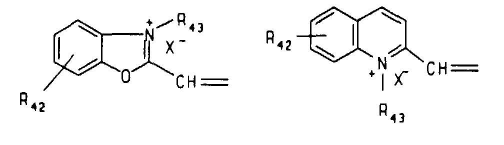 wherein:
R₃₅ is selected from cyano, -CON(R₃₆)R₃₇, -CO₂R₃₆, -COR₃₈, or -SO₂R₃₈;
R₃₆ and R₃₇ are selected from hydrogen, cycloalkyl, unsubstituted or substituted alkyl, phenyl, phenyl substituted with lower alkyl, lower alkoxy or halogen;
R₃₈ is selected from substituents represented by R₃₆ and R₃₇ excepting hydrogen;
R₃₉ is selected from lower alkyl, cycloalkyl or aryl;
R₄₀ is selected from hydrogen, alkyl or aryl;
R₄₁ is selected from hydrogen, lower alkyl, aryl or carbalkoxy;
R₄₂ is hydrogen or 1-2 substituents selected from lower alkyl, lower alkoxy or halogen;
R₄₃ is selected from lower alkenyl, lower alkyl, benzyl, substituted benzyl, hydroxyalkyl, carbamoylalkyl, -alkylene-CO₂⁻M⁺ or -alkylene-SO₃⁻M⁺ wherein M⁺ is H⁺, Na⁺, K⁺, Li⁺ or NH₄⁺ and wherein X⁻ is a counter anion selected from Cl⁻, Br⁻ , CH₃SO₄⁻, C₂H₅SO₄⁻, or ZnCl₄⁻²/2; and
R₄₄ is aryl or substituted aryl;
with the proviso that the colorant contain at least one poly(oxyalkylene) moiety -Z.

The chromophore intermediates and generally, the organic nucleophiles, are compounds wherein Y is a residue derived from primary or secondary amines, hydroxyl compounds, mercapto compounds, sulfinic acids, sulfonamides, imides or sulfoic imides.

More specific intermediates are those compounds wherein Y is derived from a nucleophile selected from those of the formulae: 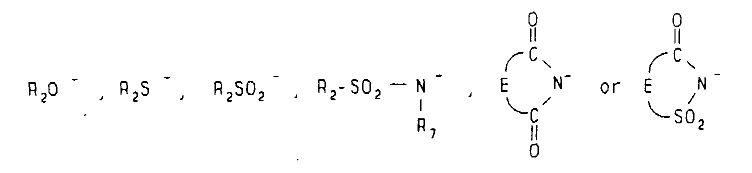 wherein each R₂ is selected from hydrogen, substituted or unsubstituted alkyl of 1-20 carbons, substituted or unsubstituted aryl of 6-10 ring carbons, substituted or unsubstituted cycloalkyl of 5-7 ring carbons, and E comprises a divalent ring moiety.

Examples of preferred intermediates are compounds described as Ar residues above, either by class or as specific compounds. More preferably, intermediates are selected from the following formulae: 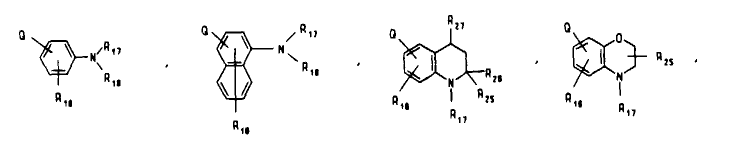 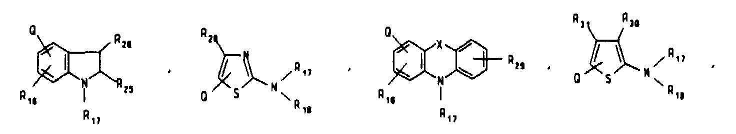 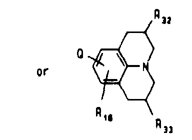 wherein:
Q is selected from: hydrogen; -N=O; NH₂; -NH-NH₂; NO₂; COR₅ wherein R₅ is selected from hydrogen, unsubstituted or substituted alkyl, cycloalkyl, or aryl; N₂⁺X⁻ wherein X⁻ is a counterion; -N=CH-R₆ wherein R₆ is selected from alkyl, cycloalkyl or aryl; or -CH=N-R₆;
wherein R₁₆, R₃₂, W, X and L are selected from the corresponding groups set forth herein under the formulae for the Ar residues useful with colorants.
Additional preferred intermediates of the invention are those compounds selected from the formulae 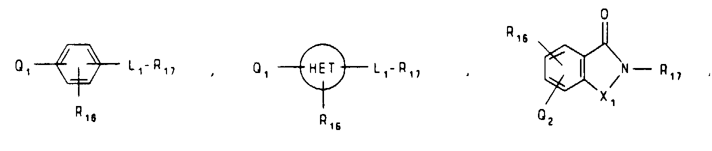 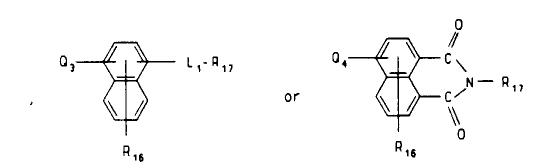 Q₁, Q₂, Q₃, and Q₄ are selected from hydrogen, nitro, amino, hydrazino, or a diazonium salt moiety;

HET is an aromatic radical derived from benzothiazole; thiazole; 1,3,4-thiadiazole; 1,2,4-thiadiazole; pyridine; thiophene or 2,1-benzisothiazole.

L₁ is a linking moiety selected from -O-, -S-, -SO₂-, -N(R₃)-, -SO₂N(R₃)-, or -N(SO₂R₄)-, wherein R₃ is selected from hydrogen, -Z, or an unsubstituted or substituted group selected from alkyl, aryl, cycloalkyl, and R₄ is an unsubstituted or substituted group selecetd from alkyl, aryl or cycloalkyl.

X₁ is selected from -C(=O)-, -SO₂-, or -S-. In all of the above alkyl, alkylene, alkyoxy, and the like groups or moieties which are or which contain aliphatic hydrocarbon components, said groups or moieties contain 1-12 carbons which are unsubstituted or substituted unless otherwise specified. Also, the term cycloalkyl includes 5-7 membered cycloaliphatic groups and the term aryl includes unsubstituted or substituted carbocyclic and heterocyclic aromatic groups containing 2-14 carbons.

Preferred polymeric compositions or substrates incorporating the present invention are polyurethanes and thermoplastics containing a total of from about 0.001 to about 10.0 weight percent of one or a mixture of any of the colorants defined above, and particularly preferred compositions are polyurethanes containing a total of from about 0.01 to about 3.0 weight percent of one or more colorants defined above.

According to the present process, the colorant may be incorporated into the resins during their preparation by simply adding the colorant to the reaction mixture or to one of the components of the reaction mixture before or during the polyaddition reaction. For example the colorant may be admixed with chain extending diols, e.g., ethylene glycol, diethylene glycol and butane diol in the case of polyester preparation. In general, it is desirable not to use more than about 20 percent by weight of colorant based on the weight of polyol. In most cases very strong colorations are produced with a small proportion of the colorant, for example, from about 0.1 to about 2 percent, preferably 0.5 to 1 percent by weight colorant based on the weight of polyol. For instance, when the thermosetting resin to be colored is a polyurethane resin the process may be carried out by adding the coloring agent in the form of a solid, solution, diespersion or liquid to the polyol or even in some instances to the polyisocyanate component of the reaction mixture either before or during polyurethane formation. The subsequent reaction may be carried out in the usual manner,ie., in the same way as for polyurethane resins which are not colored.

It is particularly noted that the coloring agents produced by one embodiment of the present invention are polymeric, liquid, reactive coloring materials. As such, they may be added to the reaction mixture or to one of the components thereof in solvent-free form rather than as a of solution or dispersion in solvent or dispersing medium. Obviously, such liquids have significant processing advantages over solids in solvent systems in eliminating the need for extraneous nonreactive or reactive solvent or dispersing agent and thus the need for removing such from product.

The thermosetting resins to which the process of the present invention may be applied may be made by the reaction of a nucleophile with an electrophile. Examples of such resins include alkyds, allylics, the amines, e.g., melamine and urea, epoxies, phenolics, polyesters, silicones and urethanes. These resins colored according to the present invention can be used in a variety of end uses, including moldings, sealants, elastomers, films, fibers, lacquers, coatings and foamed materials. It has been found in particular that the present colorants may be quite advantageously employed for the production of foams, such as polyurethane foams which may be soft, semi-rigid or rigid, or the so-called polyurethane integral skin and microcellular foams. Such foams are useful for producing shaped products by injection molding, extrusion or the like. The polyols may be hydroxy terminated polyesters which contain hydroxyl groups, in particular, reaction products of dihydric alcohols and dibasic carboxylic acids, or polyethers which contain hydroxyl groups, in particular products of the addition of ethylene oxide, propylene oxide, styrene oxide or epichlorohydrin to water, alcohols or amines, preferably dialcohols.

The colorants produced by the present invention are, in themselves, polymeric compounds, thus they may be soluble, for instance, in most polyols which would be used in polyurethane manufacture, in most epoxy formulations, in polyester formulations, as well as in colorant admixtures. This property may be particularly valuable in that this solubility permits rapid mixing and homogeneous distribution throughout the resin, thus eliminating shading differences and streaks when properly mixed. The colorants also have greatly reduced no tendency to settle as compared to pigment dispersions. The intersolubilities of the colorants makes it possible to prepare a blend of two or more colorants to provide a wide range of colors or shades.

In the use of the present primary hydroxyl enhanced compounds, which contain hydroxyls, in the production of polyurethane foams, several reactions generally take place. First an isocyanate such as toluene diisocyanate is reacted with a polyol such as polypropylene glycol in the presence of heat and suitable catalyst. If both the isocyanate and the polyol are difunctional, a linear polyurethane results, whereas should either have functionalities greater than two, a cross linked polymer will result. If the hydroxylic compound available to react with the -NCO group is water, the initial reaction product is a carbamic acid which is unstable and breaks down into a primary amine and carbon dioxide. Since excess isocyanate is typically present, the reaction of the isocyanate with the amine generated by decarboxylation of the carbamic acids occurs, and if controlled, the liberated carbon dioxide becomes the blowing agent for the production of the foam. Further, the primary amine produced also reacts with isocyanate to yield a substituted urea which affords strength and increased firmness characteristics to the polymer.

In general, amine and tin catalysts are used to delicately balance the reaction of isocyanate with water, the blowing reaction, and the reaction of isocyanate with polymer building substituents. If the carbon dioxide is released too early, the polymer has no strength and the foam collapses. If polymer formation advances to rapidly a closed cell foam results which will collapse on cooling. If the colorant or another component reacts to upset the catalyst balance, poorly formed foam will result. It is particularly noted, that the present colorants are especially stable to the tin catalysts and to excess isocyanate materials employed.

The present liquid reactive coloring agents may also be of considerable value in reaction injection molding (RIM) applications. The RIM process is a method of producing molded polyurethanes and other polymers wherein the two reactive streams are mixed while being poured into a mold. Upon reaction, the polymer is "blown" by chemicals to produce a foam structure. This process may be hindered by the presence of solid particles, such as conventional pigments. By comparsion, the present colorants do not effect this hinderance since there are no solid particles in the system and the colorant becomes part of the polymer through chemical reaction.

Thermoplastic resins which may be used according to the present invention include a wide range of resins and synthetic resin compositions which are known in the art as being essentially thermoplastic in nature. The term "thermoplastic" is used herein in its conventional sense to mean a resin having the property of softening or fusing when heated and of hardening again when cooled" (see Webster,s Seventh Collegiate Dictionary, G & C Merriam Co., 1965). Thermoplastic resins are to be clearly distinguished both in terms of their essential physical and chemical characteristics from thermosetting resins. The term "thermosetting" used herein is also used in its conventional sense to means a resin "having the property of becoming permanently rigid when heated or cured.

Examples of thermoplastic resin systems which may be employed include a wide range of polyolefin polymers, e.g., polyethylene, linear low density polyethylene, polypropylene, polybutylene and copolymers made from ethylene, propylene and/or butylene. Other thermoplastic polymers which may be employed according to the present invention include polyvinyl chloride, polyvinylidene chloride, cellulosic resins such as cellulose acetate, cellulose acetate butyrate and cellulose acetate propionate, acrylic resins such as poly(methyl methacrylate), styrene-acrylonitrile copolymer, polystyrene, polycarbonate and acrylonitrile-butadiene-styrene terpolymer(herein ABS), polyamides such as nylon 6 and nylon 66 and polyesters such as poly(ethylene terephthalate), especially glycol modified poly(ethylene terephthalate) and poly(butylene terephthalate).

As mentioned above, the colorants may be employed in the thermoplastic resins in a minor amount sufficient to provide the desired degree of coloration therein. The actual amount used will, in addition to the desired depth of shade, depend upon the tinctorial strength of the chromophore used and the overall molecular weight of the colorant, e.g., chromophore plus poly(oxyalkylene) chain length. Typically the amount of colorant employed may be from about 0.001 percent to about 10 percent, preferably from about 0.01 percent to about 3 percent, and most preferably from about 0.01 to about 1.0 percent by weight based upon the overall weight of the resin composition.

Other conventional additives may also be present in the resin compositions of the present invention. For instance, such additives may include plasticizers, antioxidants, stabilizers, lubricants, flame retardants, nucleating agents and other additives as will be readily recognized by those skilled in the art. In general, the present colorants have been observed to have little or no adverse interactions with these conventional additives.

The colorants if used properly ordinarily do not detract from the clarity of the resin, and it has been found that additives which improve the clarity may be used in combination with colorants as described herein to provide resin products that are both colored and which also have excellent clarity. One particular class of additives which have been found to be useful in this regard are the benzylidene sorbitols including substituted benzylidene sorbitols such as those described in: U.S. Pat. No. 4,016,118 to Hamada, et al. (E.C. Chemical); U.S. Pat. No. 4,371,645 to Mahaffey (Milliken Research Corporation); and Japanese Pat. No. SHO [1977] 53-117044 to Kobsyashi, et al. (New Japan Chemical); all of these patents being hereby incorporated herein by reference.

The particular shade of the colorant will depend primarily upon substituents present on the basic chromophore. A large variety of colors and shades may be obtained by blending two or more colorants. Blending the colorants of the present invention can be readily accomplished as the colorants are polymeric materials which may have substantially identical solubility characteristics dictated by the nature of the polymeric chain. Therefore, the colorants are in general soluble in one another, and are also, in general, completely compatible with each other.

According to the process of the invention, the colorant may be incorporated into the thermoplastic resin using conventional techniques such as those employed to incorporate other additives in such resins. For instance, the colorant may he incorporated into the resin by simply adding it to the resin while the resin is in a plasticized or molten state, typically prior to formation of the polymer into its final shape, e.g., by molding, extrusion, blow-molding and the like. For instance, when the thermoplastic resin to be colored is a polyolefin resin the process may be carried out by adding a colorant comprised of a poly(oxyalkylene) substituted chromophore group directly to the molten polymer, by tumbling it onto a pre-extruded pelletized resin, or by mixing it into the resin powder prior to extrusion. The polymer may then be molded or extruded in the usual manner, i.e., in the same way as for polyolefin resins which are not colored.

Alternatively, a concentrate of the colorant in an appropriate resin or vehicle may first be prepared. Such concentrate may contain an appropriately high percentage of colorant. The concentrates may be in the form of liquids, solids, e.g., powders, pellets, or the like, as may be desired. These may then be incorporated into the thermoplastic resin. Obviously, liquids may have certain processing advantages over solids, and moreover liquids may, if desired, be added directly to the molten polymer and therefore contain no extraneous solvent or dispersing agents. This process may, therefore, provide unusual and advantageous properties in the final thermoplastic resin product. Alternatively, however, the colorants may be premixed with minor amounts of or solvent or dispersing agent which is compatible with the resin, thus providing certain processing advantages.

The highly branched intermediates and colorants of the invention are prepared in three steps. In the first step, a nucleophile, such as an aromatic amine, is hydroxyalkylated by the reaction with glycidol at about 80-150°C to give a intermediate having both primary and secondary hydroxyls. Useful nucleophiles are primary or secondary amines, hydroxy compounds, mercapto compounds, sulfinic acids, sulfonamides, imides or sulfoic acids.

The glycidol is added in the presence of an inert gas such as nitrogen until the desired amount of glycidol is reacted. This base catalyzed reaction is carried out with or without solvents. If solvents are desired, toluene, xylenes, nitrobenzene, dioxane are representive solvents that may be used. Exemplary of the useful base catalysts are potassium hydroxide, lithium hydroxide, calcium hydroxide, and barium hydroxide. The amount of basic catalyst can vary but is usually in the range of from about 0.05 percent to about 2 percent by weight. In addition, certain tertiary organic amines are useful catalysts, such as dimethylaminocyclohexane, triethylamine, and benzyldimethylamine.

In the second step, the intermediate from step one containing the glycidol segment is converted into a substantially solely secondary hydroxyl containing intermediate by further hydroxyalkylation with one or more alkylene oxides containing more than two carbon atoms at about 80-150°C. This reaction is carried out as in step one.

In the third step, an intermediate from step two is converted into the final intermediate containing substantially solely primary hydroxyls by hydroxyethylation with ethylene oxide at about 80-150°C. The ethylene oxide is added in the presence of an inert gas such as nitrogen until the desired amount of ethylene oxide is absorbed. This reaction is carried out as in step one.

The primary hydroxyl enriched aromatic colorants produced by the present invention can be prepared by many different methods depending, e.g., on the chromophoric group desired in the polymer. Some of these routes are illustrated in (I) through (VI) below. These routes are given as illustrations and are not intended to limit the scope of the present invention.

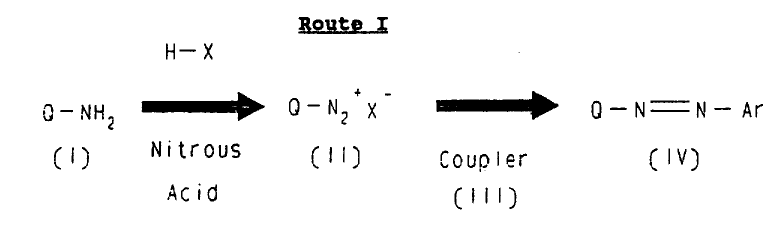

In Route I the azo colorants of the invention are prepared by diazotizing carbocylic or heterocyclic amines (I) to give diazonium salts (II) which are coupled with intermediate aromatic coupling components (III) to give the azo colorants (IV) wherein Q- and -Ar are as defined above, and wherein either one or both of Q- and -Ar contain at least one -Z moiety. Various methods for diazotizing aromatic amines are known in the chemistry of azo dyes. The couplings are usually carried out in dilute mineral acids or organic acids such as acetic or propionic acid, with coupling being facilitated by addition of some base to raise the pH to a least 3-4.

Intermediates containing a hydrazo functionality are set out below in Route IA.

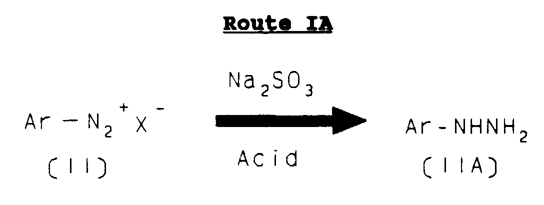

The corresponding diazonium salts (II) from Route I above are reduced with sodium sulfite in the presence of mineral acid at a temperature of about 70-100°C to form the hydrazo intermediates (IIA) of the invention.

The methine colorants of the invention are prepared in according to Route II, wherein Route II comprises three steps.

In the first step, primary hydroxyl enriched aromatic amine intermediate, H-Ar, is reacted with an organic acid anhydride to form the diester intermediate. Most generally, the aromatic amine intermediate, H-Ar, is reacted with acetic anhydride at a temperature within the range of about 60-130°C. Certain tertiary organic amines are useful catalysts, such as triethylamine, dimethylaminocyclohexane and benzyldimethylamine.

In the second step, the aromatic diester intermediate, from step one is reacted with the Vilsmeier reagent to get the corresponding aldehydes, [Bull. Societe Chim. de France, No.10:1989-99(October 1962);Angewanate Chemie 72, No.22, 836-845,(Nov. 1960)] generally using N,N-dimethylformamide (DMF) and phosphorous oxychloride. After base hydrolysis, the corresponding aromatic aldehyde intermediate, Ar-COH is isolated.

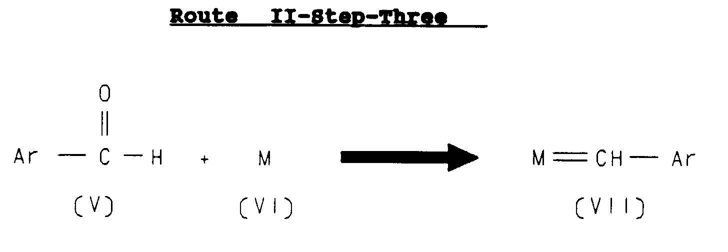

Finally, in the third step, the aromatic aldehyde intermediate Ar-COH (V) is reacted under Knoeveneagel conditions with an active methylene compound (VI) to give the methine compound (VII).

The azamethine colorants of the invention are prepared in two steps according to Route III.

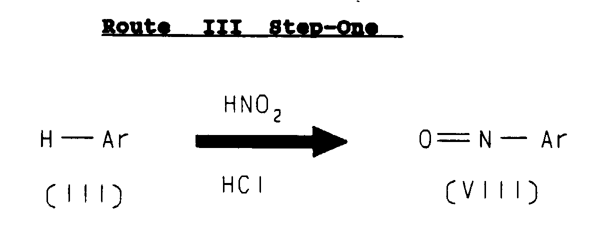

In step one, the aromatic amine intermediate (III) is nitrosated using nitrous acid to give nitroso aromatic amine intermediates (VIII).

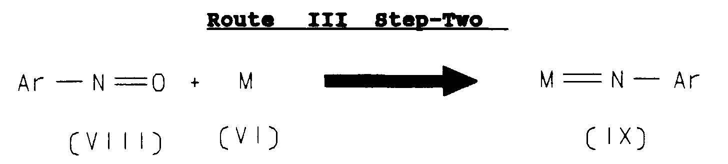

In the second step, the nitroso aromatic amine intermediate (VIII) is reacted with an active methylene compound (VI) to give the azamethine compound (IX).

The cationic azo or cationic methine colorants of the invention can be prepared by many different methods. Some of these methods are illustrated in Routes (IV) through (VI) below. These routes are given as illustrations and are not intended to limit the scope of the present invention.

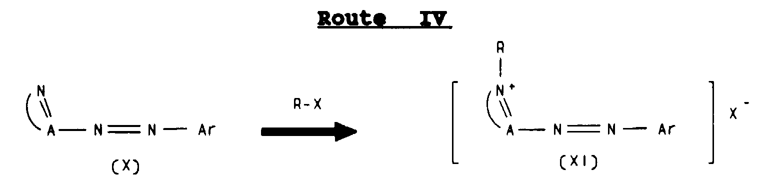

The azo colorants (X), where A is the residue of a heterocyclic ring, are converted to the corresponding cationic colorants (XI), by reacting with an alkylating agent at elevated temperature with or without an inert solvent. Suitable alkylating agents that can be used are dialkyl sulfates, alkyl halides, aralkyl halides, alkyl esters of sulfonic acids, activated vinyl compounds, haloacetic acids, etc. Examples of such alkylating agents include dimethyl sulfate, diethyl sulfate, dipropyl sulfate, ethyl bromide, butyl bromide, methyl iodide, ethyl iodide, benzyl chloride, benzyl bromide, methyf-p-toluene sulfonate, butyl-p-toluene sulfonate, ethyl benzenesulfonate, acrylamide, and bromoacetic acid.

The cationic methine colorants of the invention are prepared in several ways as illustrated in Routes V and VI.

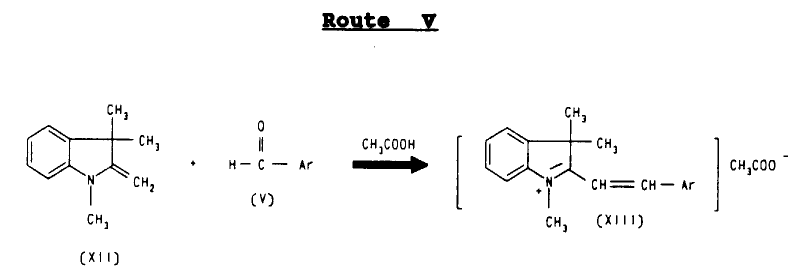

In Route V, methine cationic colorants (XIII) of the invention are prepared by condensing substituted 2-methylene-1,3,3-trimethylindoline (Fischer's Base) (XII) with the aromatic aldehyde (V) described above at elevated temperature in the presence of a catalyst with or without an inert solvent. The base (XII), is commerically available and the condensation procedures are well known.

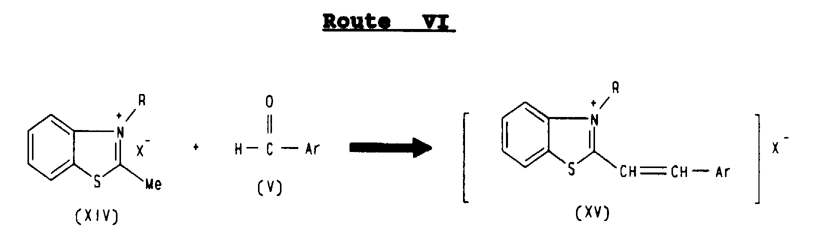

Alternatively, cationic methines (XV) are prepared by condensing substituted quaternary bases salts (XIV) with a the aromatic aldehyde (V) described above at elevated temperature in the presence of a catalyst with or without an inert solvent. The quaternary base salts of formula (XIV) and the condensation procedures are well known. Examples of useful quaternary bases include quaternized quinolines, benzothiazoles, benzoxazoles, indolenines, and benzimidazoles. Examples of the above anion X⁻ include Cl⁻, Br⁻,I⁻, CH₃SO₄⁻, C₂H₅SO₄⁻, or the like. The anion used depends upon the method of isolation utilized and the particular quaterizing agent employed.

Intermediates having increased branching and containing aromatic amine functionality are prepared according to Routes VII through IX.

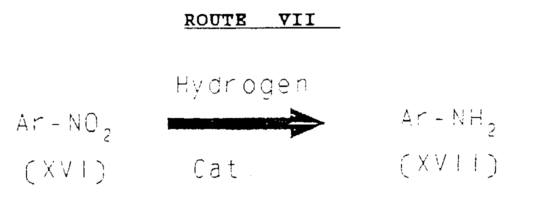

Route VII involves the conversion of nitro compounds (XVI) to amine intermediates (XVII) by catalytic hydrogenation. Any suitable reduction catalyst may be used. For example, catalysts such as Raney nickel, nickel oxides, finely divided metals such as iron, cobalt, platinum, ruthenium, osmium, and rhodium may be used. Furthermore, metal catalysts supported on pumice, asbestos, Kieselguhr, alumina, silica gel or charcoal work equally as well. The amount of catalyst can vary from about 0.025 to 15 percent by weight based on the nitro intermediate used.

Reduction temperatures of about 20°C to about 90°C, are suitable but temperatures of 40°C to 90°C are preferred since they may provide faster reaction times and higher yields. During the reduction of the nitro intermediates, pressures ranging from about 500 to about 1800 psi of hydrogen may be used.

The reduction reaction is usually carried out in the presence of a suitable solvent. Solvents include lower alcohols such as methyl alcohol, ethyl alcohol, and isopropyl alcohol; ethers such as dioxane; hydrocarbons such as benzene, toluene, xylenes, cyclohexanes, and petroleum ether; and mixtures of lower alcohols and water such as about equal parts by weight of ethyl alcohol and water. The amount of solvent present usually varies from about 30 to about 80 percent by weight of the total mixture as solvent plus nitro compound.

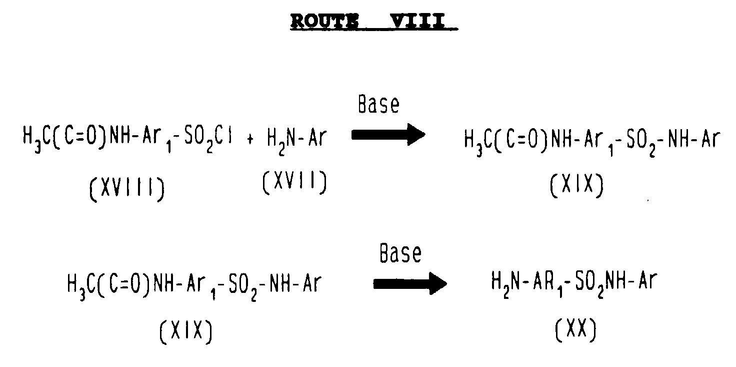

Route VIII involves the condensation of an acetamidosulfonyl chloride intermediate (XVIII), wherein Ar₁ is phenylene or substituted phenylene with at least a stoichiometric quantity of a aromatic amine (XVII) wherein Ar is defined above and contains at least one -Z moiety, and a inorganic base at a temperature of from about 0°C to about 100°C to form an acetamido intermediate (XIX). Further heating at 80°C to 100°C hydrolyzes the corresponding acetamido intermediate (XIX) into the polyaromatic amine intermediate (XX).

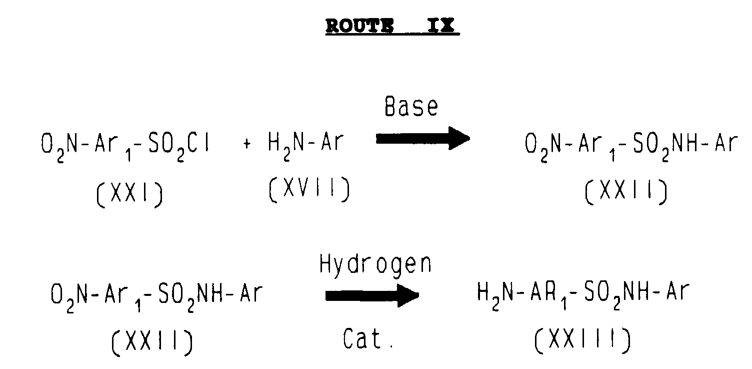

Route IX involves the condensation of a nitrosulfonyl chloride intermediate (XXI), wherein Ar₁ is as defined above in Route IX, with at least a stoichiometric quantity of an aromatic amine (XVII) and an inorganic base at a temperature of from about 0°c to about 100°C to form a nitro polyaromatic intermediate (XXII).

The corresponding polyaromatic amine intermediate (XXIII) is then prepared by conversion of the polyaromatic nitro intermediate (XXII) by catalytic reduction as described in Route VII above.

The following examples and tables illustrate specific compounds of the present invention and their preparation. Various parts or percentages, unless otherwise stated, being by weight.

The abbreviations EO, PO, and BO refer to -CH₂CH₂O-, -CH(CH₃)CH₂O-, and -CH(C₂H₅)CH₂O- respectively, or to their precursor epoxide, whichever is appropriate. In the examples, GL₁ represents the unterminated glycidol residue segment and GL the terminated glycidol residue segment. The numerical designation preceding each GL₁ and GL represents the average number of glycidol residues per reactive site of the nucleophile. For example, in Examples 1 and 1A wherein the numerical designation is 1.5, in actuality one reactive site of the nitrogen will have a single glycidol residue and the other will have two such residues linked together. Also, referring to Example 1 and 1A, the terminology "1.5GL/5PO/5EO-H" means that at least one primary hydroxyl of the GL₁ segment has been reacted with a propylene oxide molecule, the propylene oxide reactant having been in the reaction system in stoichiometric excess, and that the secondary hydroxyl of each terminal PO has been reacted with an ethylene oxide molecule, the ethylene oxide reactant also having been in stoichiometric excess in the reaction system. It is noted that the numerical values "5" assigned to each of the PO and EO residues of Example 1A, also represents the average number of these residues per reactive site of the nucleophile.

### Example 1

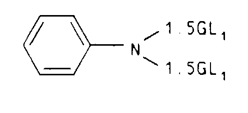

In a dry 1000 ml three-neck flask equipped with nitrogen purge, heating mantle, mechanical stirrer, temperature controller and addition funnel is charged 125 grams of aniline (1.34 moles) and 0.6 gram of potassium hydroxide. The mixture is heated to 110°C with stirring with by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle may be removed and the exotherm controlled by the addition rate. The temperature is maintained between 110-125°C by the addition rate.

After all of the glycidol is charged the reaction mixture is to post-heated for one hour. At this time the hydroxyl number is run for the aniline-3 glycidol intermediate and is found to be 905 (theory is 890).

### Example 1A

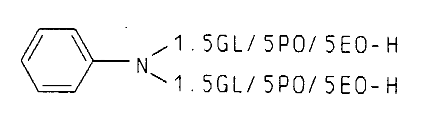

In a two liter autoclave are charged 315 grams (1 mole) of aniline 3 glycidol intermediate of Example 1 and 2 grams of potassium hydroxide catalyst. The reactor is purged three times to 60 psi with nitrogen and is then heated to 250°F under 5 psi nitrogen pressure. Next, 580 grams (10 moles) of propylene oxide are added at a rate to maintain a vapor pressure reading less than 80 psi.

After the PO addition, the reaction mixture is post-heated at 120°C for 2 hours. At this time the hydroxyl number is run for the reaction mixture and is found to be 325 (theory is 313).

Next, 440 grams (10 moles) of ethylene oxide (EO) are added at a rate to maintain a vapor pressure reading less than 80 psi. After the EO addition, the reaction mixture is post-heated at 120°C for 2 hours. At this time the hydroxyl number is run for the reaction mixture and is found to be 208 (theory is 210).

After vacuum stripping at 200°F for 15 minutes the aniline 3GL/10PO/10EO-H intermediate has an average gram molecular weight of 1349 and is ready for use.

### Example 1B

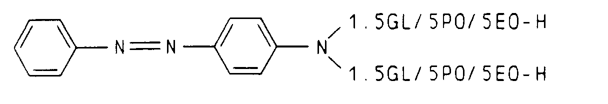

One hundred eighty grams acetic acid, 41 grams propionic acid, and 4 drops of 2-ethyl hexanol defoamer are added to a 500 milliliter three necked flask equipped with a thermometer, cooling bath, and mechanical stirrer. The mixture is cooled and 9.3 grams (0.1 mole) of aniline are added to the flask. The mixture is further cooled to below 5°c after which 33 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 2000 milliliter beaker is charged with 146.9 grams (0.11 mole) of the example 1A aniline 3GL/10PO/10EO-H intermediate, 200 grams of water, 200 grams of ice and 8 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 268 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a yellow liquid with a maximum absorbance at 416 nm.

### Example 2

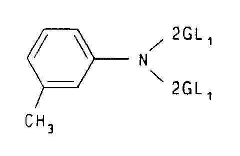

In a dry 1000 ml three-neck flask equipped with nitrogen purge, heating mantle, mechanical stirrer, temperature controller and addition funnel are charged 143 grams of m-toluidine (1.34 moles) and 0.6 gram of potassium hydroxide. The mixture is heated to 110°C with stirring by means of the heating mantle and temperature controller.

Three hundred ninety-eight grams (5.37 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour. At this time the hydroxyl number is run for the m-toluidine 4 glycidol intermediate and is found to be 875 (theory is 835).

### Example 2A

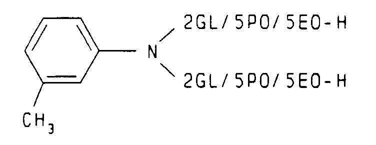

In a two liter autoclave are charged 403 grams (1 mole) of m-toluidine 4 glycidol intermediate of Example 2 and 4 grams of potassium hydroxide catalyst. The reactor is purged three times to 60 psi with nitrogen and is then heated to 250°F under 5 psi nitrogen pressure. Next, 580 grams (10 moles) of propylene oxide are added at a rate to maintain a vapor pressure reading less than 80 psi.

After the PO addition, the reaction mixture is post-heated at 120°C for 2 hours. At this time the hydroxyl number is run for the reaction mixture and is found to be 337 (theory is 349).

Next, 440 grams (10 moles) of ethylene oxide (EO) are added at a rate to maintain a vapor pressure reading less than 80 psi. After the EO addition, the reaction mixture is post-heated at 120°C for 2 hours. At this time the hydroxyl number is run for the reaction mixture and is found to be 235 (theory is 234).

After vacuum stripping at 200°F for 15 minutes, the m-toludine 4GL/10PO/10EO-H intermediate has an average gram molecular weight of 1432 and is ready for use.

### Example 2B

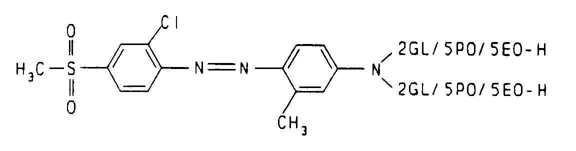

A 2000 milliliter beaker is charged with 156.8 gram (0.11 mole) of m-toluidine 4GL/10PO/10EO-H intermediate of Example 2A , 200 grams of water, 200 grams of ice and 4 grams of urea. This mixture is cooled to below 0°C. The diazo solution (as prepared in Example 1B) from 2-chloro-4-methylsulfonylaniline is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an orange liquid with a maximum absorbance at 472 nm.

### Example 3

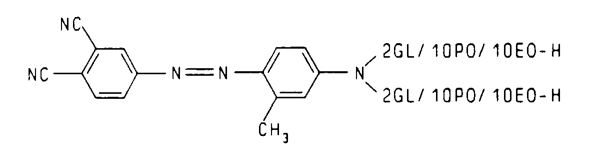

A 2000 milliliter beaker is charged with 268.7 grams of of the m-toluidine 4GL/20PO/20EO-H intermediate (0.11 mole), 300 grams of water, 300 grams of ice and 4 grams of urea. This mixture is cooled to below 0°C. The diazo solution (as prepared in Example 1B) from 3,4-dicyanoaniline is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid with a maximum absorbance at 500 nm.

### Example 4

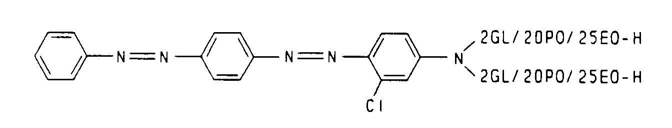

A 4000 milliliter beaker is charged with 543.8 grams of m-chloroaniline 4GL/40PO/50EO-H intermediate (0.11 mole), 600 grams of water, 600 grams of ice and 4 grams of urea. This mixture is cooled to below 0°C. The diazo solution (as prepared in Example 1B) from 4-phenylazoaniline is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an orange liquid.

### Example 5

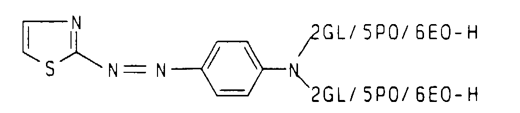

Five hundred and forty-nine grams of 85% phosphoric acid, 75 grams of 98% sulfuric acid, and 9 drops of 2-ethyl hexanol defoamer are added to a 1000 milliliter three necked flask equipped with a thermometer, cooling bath, and mechanical stirrer. The mixture is cooled and 30.9 grams( 0.3 mole) of 2-aminothiazole are added to the flask. The mixture is further cooled to below 0°C after which 105 grams of 40% nitrosyl sulfuric acid are added while maintaining the temperature below 5°C. After three hours the mixture gives a positive nitrite test and 2.5 grams of sulfamic acid are added slowly keeping the temperature below 5°C. A negative nitrite test is evident after one further hour.

A 4000 milliliter beaker is charged with 493.7 grams of aniline 4GL/10PO/10EO-H intermediate (0.33 mole), 500 grams of water, 500 grams of ice and 12 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 780 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an orange oil with a maximum absorbance at 493 nm.

### Example 6

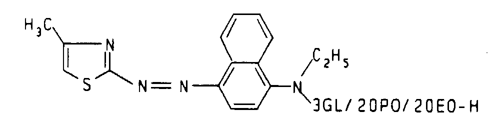

A 2000 milliliter beaker is charged with 267.5 grams of N-ethylnaphthylamine 3GL/20PO/20EO-H intermediate (0.11 mole), 300 grams of water, 300 grams of ice and 4 grams of urea. This mixture is cooled to below 0°C. The diazo solution (as prepared in Example 5) from 2-amino-4-methylthiazole is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an red liquid.

### Example 7

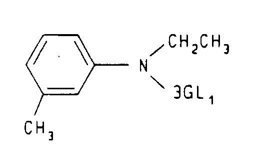

In a dry 1000 ml three-neck flask equipped with nitrogen purge, heating mantle, mechanical stirrer, temperature controller and addition funnel are charged 181 grams of N-ethyl- m-toluidine (1.34 moles) and 0.6 gram of potassium hydroxide. The mixture is heated to 110°C with stirring by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle may be removed and the exotherm controlled by the addition rate. The temperature is maintained between 110-125°C by the addition rate.

After all of the glycidol is charged, the reaction mixture is post-heated for one hour. At this time the hydroxyl number is run for the M-ethyl-m-toluidine 3 glycidol intermediate and is found to be 659 (theory is 629).

### Example 7A

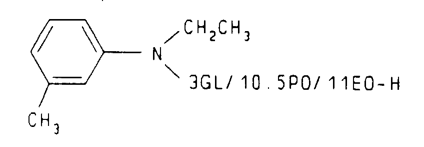

In a two liter autoclave are charged 355 grams (1 mole) of N-ethyl-m-toluidine 3 glycidol intermediate of Example 7 and 4 grams of potassium hydroxide catalyst. The reactor is purged three times to 60 psi with nitrogen and is then heated to 250°F under 5 psi nitrogen pressure. Next, 610 grams (10.5 moles) of propylene oxide are added at a rate to maintain a vapor pressure reading less than 80 psi.

After the PO addition, the reaction mixture is post-heated at 120°C for 2 hours. At this time the hydroxyl number is run for the reaction mixture and is found to be 250 (theory is 231).

Next, 450 grams (10.2 moles) of ethylene oxide (EO) are added at a rate to maintain a vapor pressure reading less than 80 psi. After the EO addition, the reaction mixture is post-heated at 120°C for 2 hours. At this time the hydroxyl number is run for the reaction mixture and is found to be 187 (theory is 155).

After vacuum stripping at 200°F for 15 minutes, the N-ethyl-m-toludine 3GL/10.5PO/11EO-H intermediate has an average gram molecular weight of 1343 and is ready for use.

### Example 7B

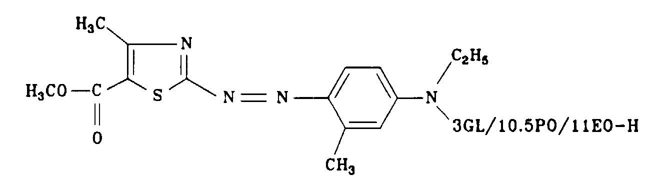

A milliliter beaker is charged with 156.3 grams of (0.11 mole) N-ethyl-m-toluidine 3GL/10.5PO/11EO-H intermediate of Example 7A, 200 grams of water, 200 grams of ice and 4 grams of urea. This mixture is cooled to below 0°C. The diazo solution (as prepared in Example 5) from 2-amino-4-methyl-5-carboethoxythiazole is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid with a maximum absorbance at 513 nm.

### Example 8

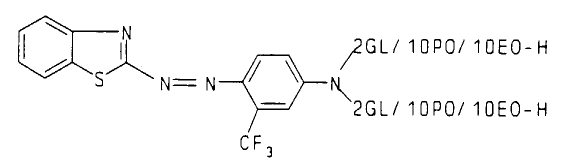

A 2000.milliliter beaker is charged with 180.1 grams of m-trifluoroaniline 4GL/10PO/10EO-H intermediate (0.11 mole), 300 grams of water, 300 grams of ice and 4 grams of urea. This mixture is cooled to below 0°C. The diazo solution (as prepared in Example 5) from 2-aminobenzothiazole is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid.

### Example 9

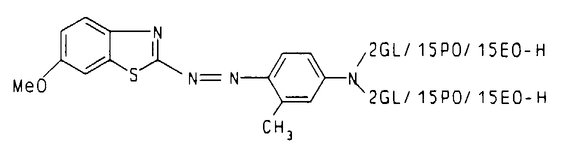

Five hundred and forty-nine grams of 85% phosphoric acid, 150 grams of 98% sulfuric acid, and 9 drops of 2-ethyl hexanol defoamer are added to a 1000 milliliter three necked flask equipped with a thermometer, cooling bath, and mechanical stirrer. The mixture is cooled and 54 grams( 0.3 mole) of 2-amino-6-methoxybenzothiazole are added to the flask. The mixture are further cooled to below 0°C after which 105 grams of 40% nitrosyl sulfuric acid are added while maintaining the temperature below 5°C. After three hours the mixture gives a positive nitrite test and 25 grams of sulfuric acid are added slowly keeping the temperature below 5°C. A negative nitrite test is evident after one further hour.

A 4000 milliliter beaker is charged with 380.9 grams of m-toluidine 4GL/30PO/30EO-H intermediate (0.33 mole), 500 grams of water, 500 grams of ice and 12 grams of urea. This mixture is cooled to below 0°C. The diazo solution was added dropwise to the beaker over about 30 minutes, maintaining the temperature below 10°C. The resulting mixture was stirred for several hours and allowed to stand overnight, after which 780 grams of 50% sodium hydroxide are added to neutralize excess acid to a pH of about 7 keeping the temperature below 20°C. The bottom salt layer was removed and the product was dissolved in methylene chloride. The methylene chloride solution was washed four times with water and then dried over sodium sulfate. The methylene chloride solvent was then filtered and stripped to give a red liquid with a maximum absorbance of 526 nm.

### Example 10

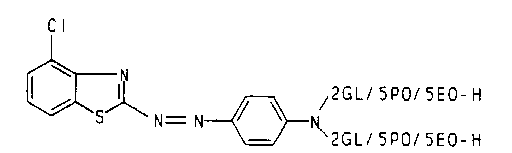

A 2000 milliliter beaker is charged with 155 grams of aniline 4GL/10PO/10EO-H intermediate (0.11 mole), 300 grams of water, 300 grams of ice and 4 grams of urea. This mixture is cooled to below 0°C. The diazo solution (as prepared in Example 9) from 2-amino-4-chlorobenzothiazole) is added dropwise to the beaker over about 30 minutes, maintaining the temperature below 10°C. The resulting mixture is stirred for several hours and allowed to stand overnight, after which 260 grams of 50% sodium hydroxide is added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid with a maximum absorbance at 524 nm.

### Example 11

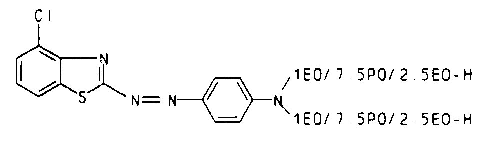

A 2000 milliliter beaker is charged with 139.8 grams of aniline 2EO/15PO/5EO-H intermediate (0.11 mole), 300 grams of water, 300 grams of ice and 4 grams of urea. This mixture is cooled to below 0°C. The diazo solution (as prepared in Example 9) from 2-amino-4-chlorobenzothiazole is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid with a maximum absorbance at 524 nm.

### Example 12

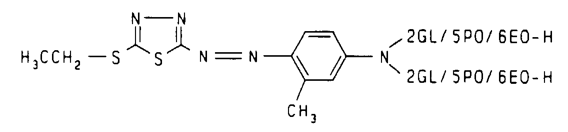

Three hundred twenty grams acetic acid, 80 grams propionic acid, and 9 drops of 2-ethyl hexanol defoamer are added to a 1000 milliliter three necked flask equipped with a thermometer, cooling bath, and mechanical stirrer. The mixture is cooled and 32.2 grams (0.2 mole) of 2-amino-5-ethylthio-1,3,4-thiadiazole are added to the flask. The mixture is further cooled to below 5°C after which 70 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 2000 milliliter beaker is charged with 332.4 grams (0.22 mole) of m-toluidine 4GL/10PO/12EO-H intermediate, 400 grams of water, 400 grams of ice and 8 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 503 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid.

### Example 13

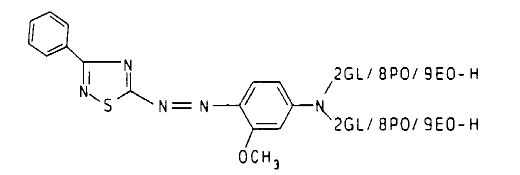

One hundred and fifty grams of 85% phosphoric acid, and 3 drops of 2-ethyl hexanol defoamer are added to a 1000 milliliter three necked flask equipped with a thermometer, cooling bath, and mechanical stirrer. The mixture is cooled and 17.7 grams( 0.1 mole) of 5-amino-3-phenyl-1,2,4-thiadiazole are added to the flask. The mixture is further cooled to below 0°C after which 35 grams of 40% nitrosyl sulfuric acid are added while maintaining the temperature below 5°C. After three hours the mixture gives a positive nitrite test and 2 grams of sulfamic acid are added slowly keeping the temperature below 5°C. A negative nitrite test was evident after one further hour.

A 1000 milliliter beaker is charged with 235.3 grams (0.11 mole) of m-anisidine 4GL/16PO/10EO-H intermediate, 300 grams of water, 300 grams of ice and 4 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a bluish red liquid.

### Example 14

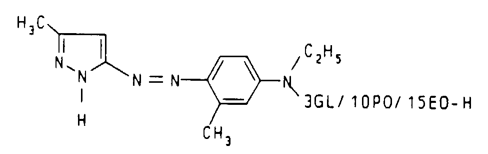

One hundred eighty grams acetic acid, 41 grams propionic acid, and 4 drops of 2-ethyl hexanol defoamer are added to a 500 milliliter three necked flask equipped with a thermometer, cooling bath, and mechanical stirrer. The mixture is cooled and 9.7 grams (0.1 mole) of 5-amino-3-amino-3-methylpyrazole are added to the flask. The mixture is further cooled to below 5°C after which 35 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 2000 milliliter beaker is charged with 175.7 grams (0.11 mole) of N-ethyl-m-toluidine 3GL/10PO/15EO-H intermediate (0.11 mole), 300 grams of water, 300 grams of ice and 8 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 268 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an yellow liquid with a maximum absorbance at 418 nm.

### Example 15

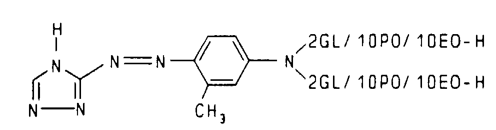

Three hundred grams acetic acid, 40 grams propionic acid, and 6 drops of 2-ethyl hexanol defoamer are added to a 500 milliliter three necked flask equipped with a thermometer, cooling bath, and mechanical stirrer. The mixture is cooled and 27 grams (0.32 mole) of 3-amino-1,2,4-triazole are added to the flask. The mixture is further cooled to below 5°C after which 105 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 4000 milliliter beaker is charged with 855.1 grams (0.35 mole) of m-toluidine 4GL/20PO/20EO-H intermediate (0.33 mole), 900 grams of water, 900 grams of ice and 10 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 805 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a yellow liquid.

### Example 16

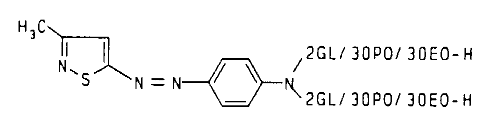

One hundred eighty grams acetic acid, 41 grams propionic acid, and 4 drops of 2-ethyl hexanol defoamer are added to a 500 milliliter three necked flask equipped with a thermometer, cooling bath, and mechanical stirrer. The mixture is cooled and 15 grams (0.1 mole) of 5-amino-3-methylisothiazole hydrochloride are added to the flask. The mixture is further cooled to below 5°C after which 35 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 2000 milliliter beaker is charged with 716 grams (0.11 mole) of aniline 4GL/60PO/60EO-H intermediate (0.11 mole), 800 grams of water, 800 grams of ice and 4 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 268 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an orange liquid with a maximum absorbance at 493 nm.

### Example 17

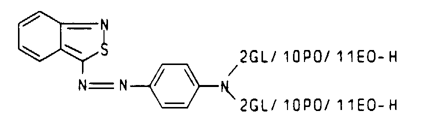

One hundred eighty grams acetic acid, 40 grams propionic acid, and 6 drops of 2-ethyl hexanol defoamer are added to a 500 milliliter three necked flask equipped with a thermometer, cooling bath, and mechanical stirrer. The mixture is cooled and 15 grams (0.1 mole) of 3-amino-1,2-benzisothiazole are added to the flask. The mixture is further cooled to below 5°C after which 37.5 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 2000 milliliter beaker is charged with 276.9 grams (0.11 mole) of aniline 4GL/20PO/22EO-H intermediate (0.11 mole), 300 grams of water, 300 grams of ice and 4 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 268 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a red liquid.

### Example 18

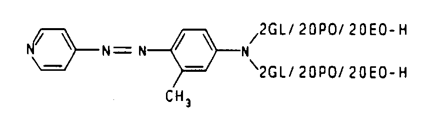

Three hundred grams acetic acid, 60 grams propionic acid, and 4 drops of 2-ethyl hexanol defoamer are added to a 1000 milliliter three necked flask equipped with a thermometer, cooling bath, and mechanical stirrer. The mixture is cooled and 28.2 grams (0.3 mole) of 4-aminopyridine are added to the flask. The mixture is further cooled to below 5°C after which 135 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour.

A 4000 milliliter beaker is charged with 1479.4 grams (0.33 mole) of m-toluidine 4GL/40PO/40EO-H intermediate, 1000 grams of water, 1000 grams of ice and 12 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 804 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a yellowish orange liquid.

### Example 19

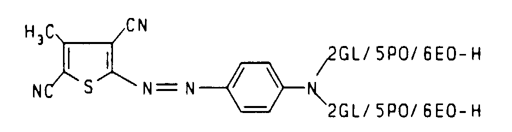

One hudred eighty-three grams of 85% phosphoric acid, 25 grams of 98% sulfuric acid, and 3 drops of 2-ethyl hexanol defoamer are added to a 1000 milliliter three necked flask equipped with a thermometer, cooling bath, and mechanical stirrer. The mixture is cooled and 16.3 grams( 0.1 mole) of 2-amino-3,5-dicyano-4-methylhiophene. is added to the flask. The mixture is further cooled to below 0°C after which 35 grams of 40% nitrosyl sulfuric acid are added while maintaining the temperature below 5°C. After three hours the mixture gives a positive nitrite test and 2.5 grams of sulfamic acid are added slowly keeping the temperature below 5°C. A negative nitrite test is evident after one further hour.

A 2000 milliliter beaker is charged with 158.6 grams of aniline 4GL/10PO/12EO-H intermediate (0.11 mole), 300 grams of water, 300 grams of ice and 4 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an violet liquid with a maximum absorbance at 556 nm.

### Example 20

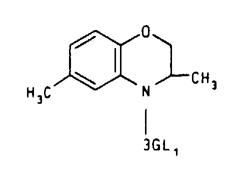

In a dry 1000 ml three-neck flask equipped with nitrogen purge, heating mantle, mechanical stirrer, temperature controller and addition funnel are charged 217 grams of benzomorpholine (1.34 moles) and 0.6 gram of potassium hydroxide. The mixture is heated to 110°C with stirring by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour. At this time the hydroxyl number is run for the benzomorpholine 3 glycidol intermediate and is found to be 536 (theory is 584).

### Example 20A

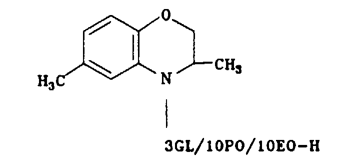

In a two liter autoclave are charged 450 grams (1.2 moles) of benzomorpholine 3 glycidol intermediate of Example 20 and 4 grams of potassium hydroxide catalyst. The reactor is purged three times to 60 psi with nitrogen and is then heated to 250°F under 5 psi nitrogen pressure. Next, 625 grams (10.8 moles) of propylene oxide are added at a rate to maintain a vapor pressure reading less than 80 psi.

After the PO addition, the reaction mixture is post-heated at 120°C for 2 hours.

Next, 530 grams (12 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the benzomorpholine 3GL/10PO/10EO-H intermediate has an average gram molecular weight of 1448 and is ready for use.

### Example 20B

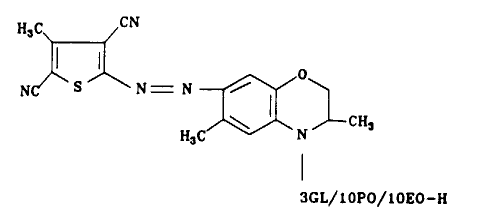

A 2000 milliliter beaker is charged with 149.1 grams of 3,7-dimethyl-3,4-dihydro-2H-1,4-benzoxazine 3GL/10PO/10EO-H intermediate (0.11 mole), 300 grams of water, 300 grams of ice and 4 grams of urea. This mixture is cooled to below 0°C. The diazo solution (as prepared in Example 19) from 2-amino-3,5-dicyano-4-methylthiophene is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a blue violet liquid with a maximum absorbance at 578 nm.

### Example 21

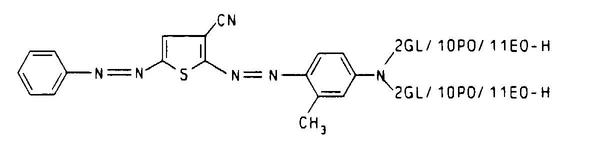

A 2000 milliliter beaker is charged with 279.5 grams of m-toluidine 4GL/20PO/22EO-H intermediate (0.11 mole), 400 grams of water, 400 grams of ice and 4 grams of urea. This mixture is cooled to below 0°C. The diazo solution (as prepared in Example 19) from 2-amino-3-cyano-5-phenylazothiophene is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give a blue liquid with a maximum absorbance at 622 nm.

### Example 22

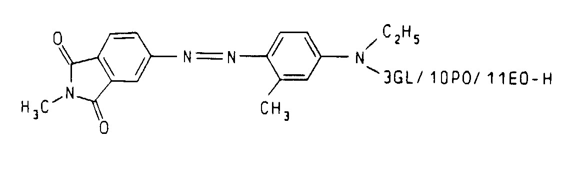

One hundred and eighty-three grams of 85% phosphoric acid, 25 grams of 98% sulfuric acid, and 3drops of 2-ethyl hexanol defoamer are added to a 500 milliliter three necked flask equipped with a thermometer, cooling bath, and mechanical stirrer. The mixture is cooled and 17.6 grams (0.1 mole) of 4-amino-N-methylphthalimide is added to the flask. The mixture is further cooled to below 0°C after which 35 grams of 40% nitrosyl sulfuric acid are added while maintaining the temperature below 5°C. After three hours the mixture gives a positive nitrite test and 1 gram of sulfamic acid is added slowly keeping the temperature below 5°C. A negative nitrite test is evident after one further hour.

A 2000 milliliter beaker is charged with 146.2 grams of N-ethyl-m-toluidine 3GL/10PO/11EO-H intermediate (0.11 mole), 300 grams of water, 300 grams of ice and 4 grams of urea. This mixture is cooled to below 0°C. The diazo solution is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an orange liquid.

### Example 23

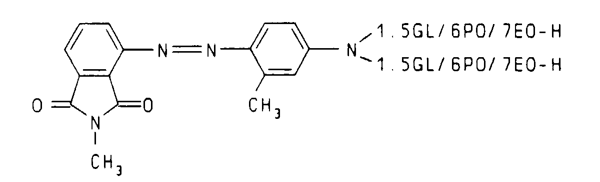

A 2000 milliliter beaker is charged with 179.9 grams of m-toluidine 3GL/12PO/14EO-H intermediate (0.11 mole), 300 grams of water, 300 grams of ice and 4 grams of urea. This mixture is cooled to below 0°C. The diazo solution (as prepared in Example 22) from 3-amino-N-methylphthalimide is added dropwise to the beaker over about 30 minutes, maintaining the temperature below 10°C. The resulting mixture is stirred for several hours and allowed to stand overnight, after which 260 grams of 50% sodium hydroxide are added to neutralize excess acid to a pH of about 7 keeping the temperature below 20°C. The bottom salt layer is removed and the product is dissolved in methylene chloride. The methylene chloride solution is washed four times with water and then dried over sodium sulfate. The methylene chloride solvent is then filtered and stripped to give an orange liquid with a maximum absorbance at 463 nm.

### Example 24

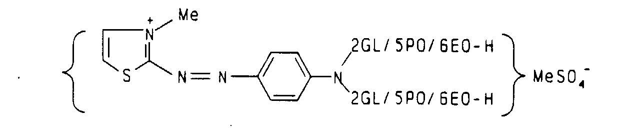

Seventy-five (0.047 mole) thiazole azo aniline (prepared in Example 5) intermediate are added to a flask fitted with a heating mantle, stirrer, and nitrogen inlet/outlet. After heating the flask to 40°C and purging with nitrogen, 15.1 grams (0.12 mole) dimethyl sulfate are introduced into the flask. The temperature is increased to 95°C for one hour to allow reaction completion. After cooling to 40°C, the pH is adjusted to pH 8.0 with a 10% solution of ammonium hydroxide. The product is dissolved in methylene chloride and added to a separatory funnel where it is washed with water to remove ammonium sulfate salts. The product is vacuumed dry on a rotary evaporator and collected to give a blue liquid with a maximum absorbance at 601 nm.

### Example 25

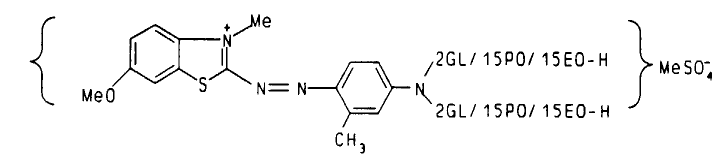

One Hundred seventy-five grams (0.047 mole) benzothiazole azo (prepared in Example 9) intermediate are added to a flask fitted with a heating mantle, stirrer, and nitrogen inlet/outlet. After heating the flask to 40°C and purging with nitrogen, 15.1 grams (0.12 mole) dimethyl sulfate are introduced into the flask. The temperature is increased to 95°C for one hour to allow reaction completion. After cooling to 40°C, the pH is adjusted to pH 8.0 with a 10% solution of ammonium hydroxide. The product is dissolved in methylene chloride and added to a separatory funnel where it is washed with water to remove ammonium sulfate salts. The product is vacuumed dry on a rotary evaporator and collected to give a blue liquid with a maximum absorbance at 620 nm.

### Example 26

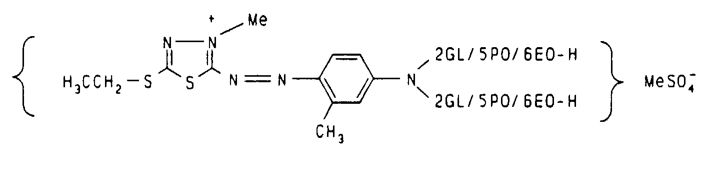

Eighty-six grams (0.047 mole) thiadiazole azo (prepared in Example 12) intermediate are added to a flask fitted with a heating mantle, stirrer, and nitrogen inlet/outlet. After heating the flask to 40°C and purging with nitrogen, 15.1 grams (0.12 mole) dimethyl sulfate are introduced into the flask. The temperature is increased to 95°C for one hour to allow reaction completion. After cooling to 40°C, the pH is adjusted to pH 8.0 with a 10% solution of ammonium hydroxide. The product is dissolved in methylene chloride and added to a separatory funnel where it is washed with water to remove ammonium sulfate salts. The product is vacuumed dry on a rotary evaporator and collected to give a blue liquid.

### Example 27

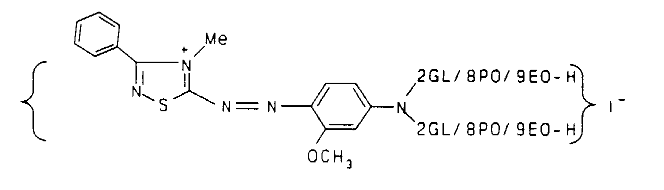

Two hundred thirty grams (0.1 mole) of thiadiazole azo intermediate (prepared in Example 13) are quickly added to a plastic encased bottle along with 35.5 grams (0.25 mole) methyl iodide at 5°C. The bottle is sealed with a stopper and copper wire and is placed in a steam bath for approximately two hours. At the end of this reaction period, the bottle is uncapped and any excess methyl iodide volatilized off to give a blue liquid.

### Example 28

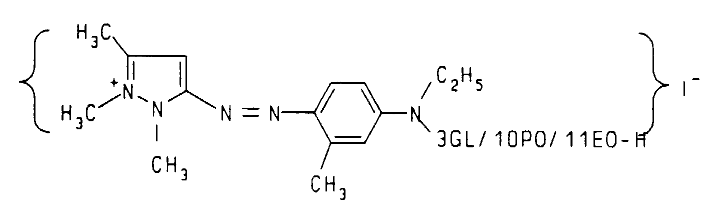

One hundred fifty-two grams (0.1 mole) of pyrazole azo intermediate (prepared in Example 13) are quickly added to a plastic encased bottle along with 35.5 grams (0.25 mole) methyl iodide at 5° C. The bottle is sealed with a stopper and copper wire and is placed in a steam bath for approximately two hours. At the end of this reaction period, the bottle is uncapped and any excess methyl iodide volatilized off to give a red liquid.

### Example 29

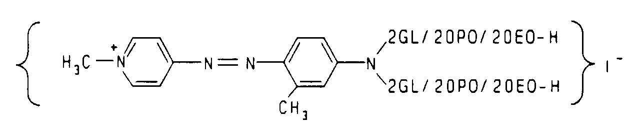

Four hundred fifty-nine grams (0.1 mole) of pyridine azo intermediate (prepared in Example 18) are quickly added to a plastic encased bottle along with 35.5 grams (0.25 mole) methyl iodide at 5° C. The bottle is sealed with a stopper and copper wire and is placed in a steam bath for approximately two hours. At the end of this reaction period, the bottle is uncapped and any excess methyl iodide volatilized off to give a bluish violet liquid.

### Example 30

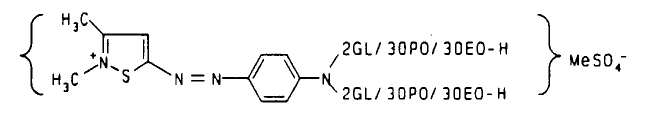

Three hundred twelve grams (0.047 mole) isothiazole azo (prepared in Example 16) intermediate are added to a flask fitted with a heating mantle, stirrer, and nitrogen inlet/outlet. After heating the flask to 40°C and purging with nitrogen, 15.1 grams (0.12 mole) dimethyl sulfate are introduced into the flask. The temperature is increased to 95°C for one hour to allow reaction completion. After cooling to 40°C, the pH is adjusted to pH 8.0 with a 10% solution of ammonium hydroxide. The product is dissolved in methylene chloride and added to a separatory funnel where it is washed with water to remove ammonium sulfate salts. The product is vacuumed dry on a rotary evaporator and collected to give a blue liquid with a maximum absorbance at 601 nm.

### Example 31

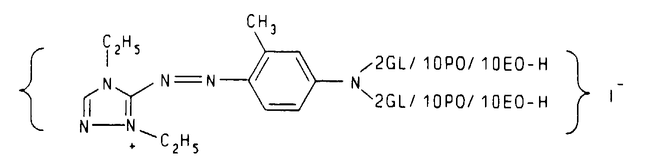

Two hundred forty-three grams (0.1 mole) of triazole azo intermediate (prepared in Example 15) are quickly added to a plastic encased bottle along with 17.2 grams (0.11 mole) ethyl iodide at 5° C. The bottle is sealed with a stopper and copper wire and is placed in a steam bath for approximately two hours. At the end of this reaction period, the bottle is uncapped and any excess methyl iodide volatilized off to give a red liquid.

### Example 32

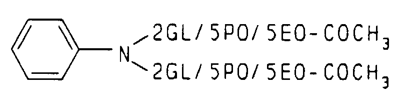

A mixture is prepared by charging 1408 grams (1 mole) of aniline 4GL/10PO/10EO intermediate in 3 moles of acetic anhydride. The mixture is stirred mechanically and five drops of N-methylimidazole catalyst are added. After the initial exotherm, the reaction mixture is heated to 100-120°C and is maintained at 110-110°C for an additional two hours to insure complete reaction. The mixture is cooled and the product is isolated by removing the excess acetic acid and acetic anhydride by reduced vacuum at 90°C. An IR spectrum of the resulting liquid product displays an absence of hydroxyl absorbance and characteristic carbonyl absorbance of the corresponding acetate intermediate.

### Example 32A

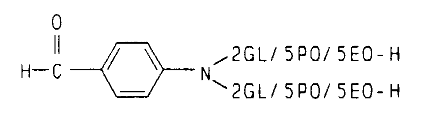

A dry 2000 ml three-neck flask is charged with 181 grams dimethylformamide under nitrogen and cooled to 0°C. One hundred ninety-two grams of phosphorous oxychloride is added dropwise with mechanical stirring and cooling over one hour. The resulting mixture is stirred for an additional two hours at 0-5°C. Then 1492 grams (1 mole) of aniline 4GL/10PO/10EO diacetate intermediate of Example 32 are added dropwise. The reaction mixture is gradually heated to 90°C and held at this temperature for an additional two hours to insure complete reaction. After cooling, the mixture is diluted with an equal amount of ice and 2.5 moles of sodium hydroxide (50 percent by weight). The resulting mixture is heated to 50-60°C until the formylated diacetate intermediate is hydrolyzed. The resulting mixture is then neutralized with acetic acid and the product extracted into methylene chloride. The methylene chloride layer is phase separated and dried over anhydrous magnesium sulfate. The methylene chloride solution is filtered and the solvent is removed by reduced vacuum at 90°C. The resulting liquid has a maximum absorbance at 341 nm. An IR spectrum of the resulting liquid product displays both the presence of hydroxyl absorbance and characteristic carbonyl absorbance of the corresponding formyl intermediate.

### Example 32B

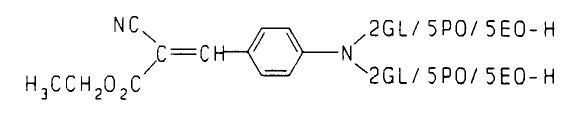

One hundred forty-four grams of aldehyde (0.1 mole), 11.3 grams of ethyl cyanoacetate (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and washed with water three times. The resulting methylene chloride solution is then dried over magnesium sulfate and filtered into a 500 milliter round bottom flask. The solution is then stripped of all volatiles under reduced vacuum to give a yellow liquid with a maximum absorbance at 426 nm.

### Example 33 COMPARATIVE COLORANT

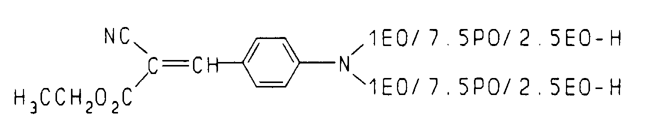

One hundred seventy-seven grams of aldehyde (0.1 mole), 11.3 grams of ethylcyanoacetate (0.1 mole), two drops of piperidine catalyst and 300 milliters of toluene were charged into a 500 milliter three necked flask equipped with thermometer reflux condenser, Dean Stark trap, mechanical stirrer, and heating mantle. This mixture was heated to reflux until no more water condensed in the trap which took about four hours. The resulting mixture was dissolved in methylene chloride and washed with water three times. The resulting methylene chloride solution was then dried over magnesium sulfate and filtered into a 500 milliter round bottom flask. The solution was then stripped of all volatiles under reduced vacuum to give a yellow liquid with a maximum absorbance at 426 nm.

### Example 34

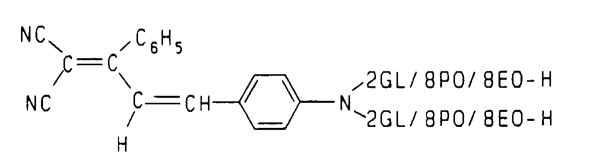

One hundred ninety-three grams of aldehyde (0.1 mole), 16.8 grams of 1-phenylenthylidene malonitrile (0.1mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condensed in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a red liquid with a maximum absorbance at 500 nm.

### Example 35

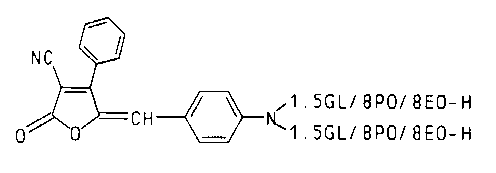

One hundred ninety-eight grams of aldehyde (0.1 mole), 18.5 grams of 3-cyano-4-phenyl-2-(5H)-furanone, two drops of piperidine catalyst and 300 milliters of toluene are charged into a 500 milliter three necked flask equipped with thermometer, reflux condenser, Dean-Stark trap, mechanical stirrer, and heating mantle. This mixture is heated to reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a red liquid with a maximum absorbance at 530 nm.

### Example 36

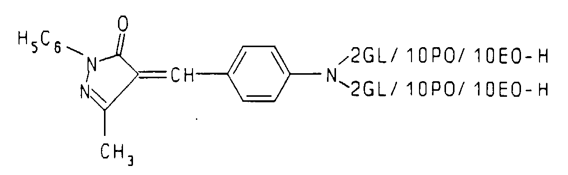

Two hundred sixteen grams of aldehyde (0.1 mole), 17.4 grams of 3-methyl-1-phenylpyrazole (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give an orange liquid with a maximum absorbance at 464 nm.

### Example 37

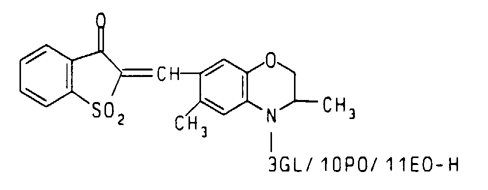

One hundred forty-eight grams of aldehyde (0.1 mole), 18.2 grams of 3(2H)-thianaphthalenone (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a reddish orange liquid.

### Example 38

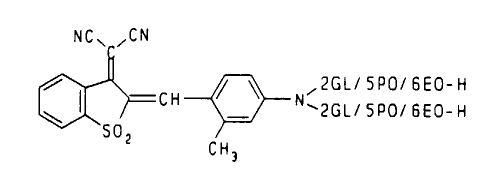

One hundred fifty-four grams of aldehyde (0.1 mole), 22.8 grams of the substituted 3(2H)-thianaphthalidene (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a blue liquid with a maximum absorbance at 600 nm.

### Example 39

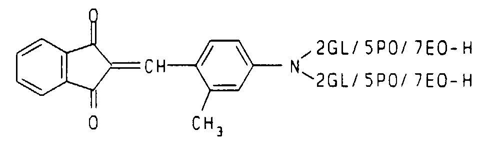

One hundred sixty-three grams of aldehyde (0.1 mole), 14.6 grams of 1,3-indandione (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give an orange liquid with a maximum absorbance at 501 nm.

### Example 40

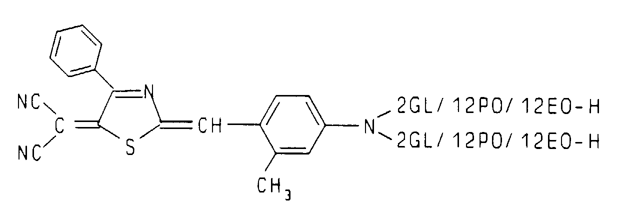

Two hundred eighty-eight grams of aldehyde (0.1 mole), 22.5 grams of thiazole (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condensed in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a bluish green liquid with a maximum absorbance at 658 nm.

### Example 41

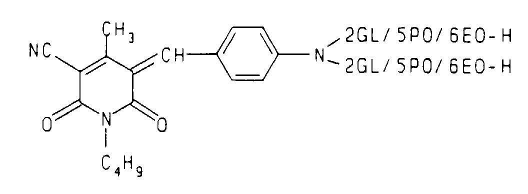

One hundred fifty-three grams of aldehyde (0.1 mole), 20.6 grams of dione (0.1 mole), two drops of piperidine catalyst and 300 milliters of toluene are charged into a 500 milliter three necked flask equipped with thermometer, reflux condenser, Dean-Stark trap, mechanical stirrer, and heating mantle. This mixture is heated at reflux until no more water condensed in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a violet liquid with a maximum absorbance at 557 nm.

### Example 42

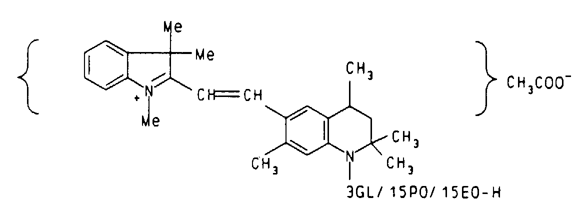

Four hundred grams of acetic acid, 17.3 grams (0.1 mole) 2-methylene-1,3,3-trimethylindoline, and 160.7 grams (0.105 mole) of formyl-tetramethyltetrahydroquinoline 3GL/15PO/15EO-H intermediate are charged into a 2000 milliliter three necked flask equipped with a reflux condenser,thermometer, heating mantle, and mechanical stirrer. This mixture is heated to 95°C with the heating mantle and is maintained at 95-100°C for an additional 6 hours. The reaction mixture is cooled and transferred to a 2000 milliliter round bottom flask and stripped of acetic acid. The pH of the resulting product is adjusted with 25% sodium hydroxide to 7 to give a bluish red liquid.

### Example 43

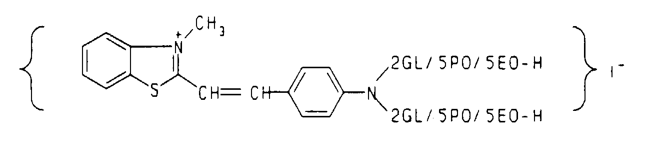

Forty-one grams (0.14 mole) methylium methyl benzothiazole iodide, (.11 mole) of formylaniline 4GL/10PO/10EO-H intermediate and 0.2 gram of morpholine catalyst are charged into a 1000 milliliter three necked flask equipped with a reflux condenser, thermometer, heating mantle, and mechanical stirrer. This mixture is heated to 85°C with the heating mantle and is maintained at 85°C for an additional 3 hours. The reaction mixture is cooled and transferred to a 1000 milliliter round bottom flask and stripped of all volatiles and collected to give a red liquid.

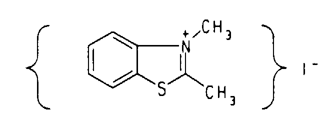

Seventy grams (0.47 mole) of methyl benzothiazole are quickly added to a plastic encased bottle along with 133.2 grams (0.94 mole) methyl iodide at 5° C. The bottle is sealed with a stopper and copper wire and is placed in a steam bath for approximately two hours. At the end of this reaction period, the bottle is uncapped and any excess methyl iodide volatilized off. The product is isolated as a crushed solid.

### Example 44

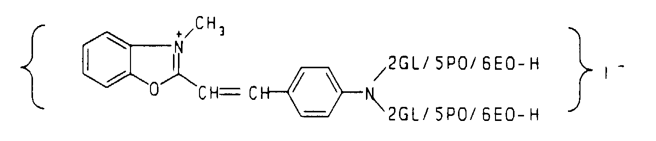

Thirty-nine grams (0.14 mole) methylium methyl benzoxazole iodide, 198.3 grams (0.11 mole) of formylaniline 4GL/10PO/12EO-H intermediate, and 0.2 gram of morpholine catalyst are charged into a 500 milliliter three necked flask equipped with a reflux condenser, thermometer, heating mantle, and mechanical stirrer. This mixture is heated to 90°C with the heating mantle and is maintained at 90°C for an additional 4 hours. The reaction mixture is cooled and transferred to a 500 milliliter round bottom flask and stripped of all volatiles and collected to give a red liquid.

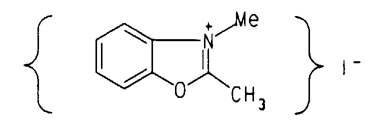

Thirty-five grams (0.26 mole) of methyl benzoxazole are quickly added to a plastic encased bottle along with 74.4 grams (0.52 mole) methyl iodide at 5°C. The bottle is sealed with a stopper and copper wire and is placed in a steam bath for approximately two hours. At the end of this reaction period, the bottle is uncapped and any excess methyl iodide volatilized off. The product is isolated as a crushed solid.

### Example 45

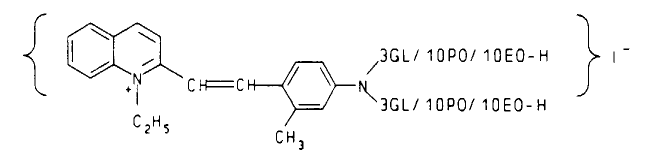

Seventy-five grams (0.1 mole) ethylquinaldinium iodide, 288.1 grams (0.11 mole) of formylm-toluidine 6GL/20PO/20EO-H intermediate, and 0.2 gram morpholine catalyst are charged into a 500 milliliter three necked flask equipped with a reflux condenser, thermometer, heating mantle, and mechanical stirrer. This mixture is heated to 85°C with the heating mantle and is maintained at 85°C for an additional 3 hours. The reaction mixture is cooled and transferred to a 500 milliliter round bottom flask and stripped of all volatiles and collected to give a reddish violet liquid.

### Example 46

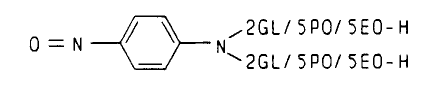

A mixture is prepared by charging 1330 grams (1 mole) of aniline 4GL/10PO/10EO intermediate (prepared in Example 1), along with 400 ml of concentrated hydrochloric acid and 100 ml of water in a 3000 ml three neck flask. The mixture is stirred mechanically and cooled to 0°C. A solution of 76 grams (1.1 moles) of sodium nitrite dissolved in 300 ml of water is then added dropwise over one and a half hours maintaining the temperature below 0°C. The mixture is allowed to warm to room temperature and stirred for an additional two hours. The excess nitrite is then destroyed by pulling a vacuum for an additional 30 minutes. After cooling to 0°C, the mixture is neutralized with dilute sodium hydroxide solution and the product extracted into methylene chloride. The methylene chloride layer is phase separated and dried over anhydrous magnesium sulfate. The methylene chloride solution is filtered and the solvent is removed by reduced vacuum at 90°C. The resulting liquid has a maximum absorbance at 390 nm. An IR spectrum of the resulting liquid product displays a characteristic nitroso absorbance.

### Example 46A

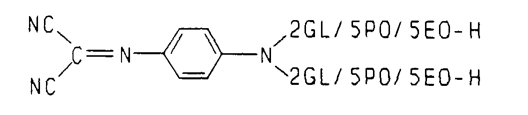

One hundred forty-four grams of nitrosoaniline 4GL/10PO/10EO-H intermediate (0.1 mole), grams of malononitrile (0.1 mole), and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a yellow orange liquid.

### Example 47

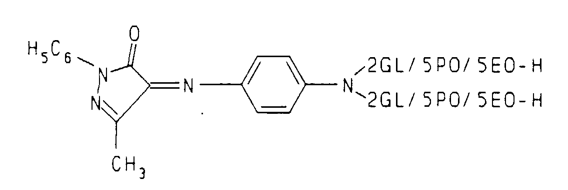

One hundred forty-four grams of nitrosoaniline 4GL/10PO/10EO-H intermediate (0.1 mole), 17.4 grams of 3-methyl-1-phenylpyrazole (0.1 mole) and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution was then stripped of all volatiles under reduced vacuum to give a red liquid with a maximum absorbance at 522 nm.

### Example 48

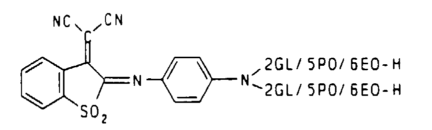

One hundred fifty-three grams of nitrosoaniline 4GL/10PO/12EO-H intermediate (0.1 mole), grams of 22.8 grams of the substituted 3(2H)-thianaphthalidene (0.1 mole) and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a bluish green liquid with a maximum absorbance at 650 nm.

### Example 49

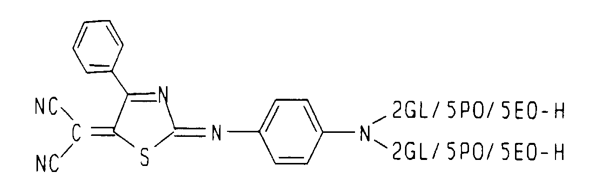

One hundred forty-four grams of nitrosoaniline 4GL/10PO/10EO-H intermediate (0.1 mole), 22.5 grams of thiazole (0.1 mole) and 300 milliters of toluene are charged into a 500 milliter three necked flask equipped with thermometer, reflux condenser, Dean-Stark trap, mechanical stirrer, and heating mantle. This mixture is heated at reflux until no more water condensed in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a bluish green liquid with a maximum absorbance at 672 nm.

### Example 50

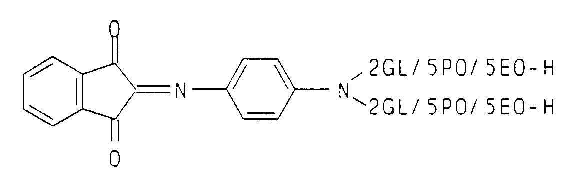

One hundred forty-four grams of nitroso aniline 4GL/10PO/10EO-H intermediate (0.1 mole), 14.6 grams of 1,3-indandione (0.1 mole) and 300 milliters of toluene are charged into a 500 milliter three necked flask equipped with thermometer, reflux condenser, Dean-Stark trap, mechanical stirrer, and heating mantle. This mixture is heated at reflux until no more water condensed in the trap which takes about four hours. The resulting mixture is dissolved in methylene chloride and is washed with water three times. The resulting methylene chloride solution was then dried over magnesium sulfate and filtered into a 500 milliter round bottom flask. The solution is then stripped of all volatiles under reduced vacuum to give a red liquid with a maximum absorbance at 520 nm.

### Example 51

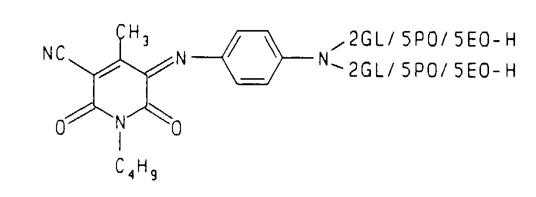

One hundred forty-four grams of nitrosoaniline 4GL/10PO/10EO-H intermediate (0.1 mole), 20.6 grams of dione (0.1 mole) and 300 milliters of toluene are charged into a 500 milliter three necked flask equipped with thermometer, reflux condenser, Dean-Stark trap, mechanical stirrer, and heating mantle. This mixture is heated at reflux until no more water condensed in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a blue liquid with a maximum absorbance at 618 nm.

### Example 52

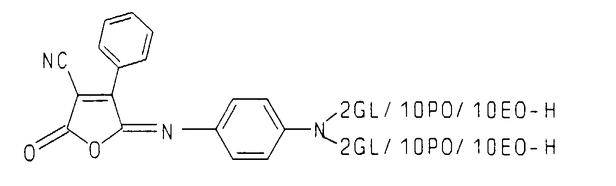

Two hundred forty-six grams of nitrosoaniline 4GL/20PO/20EO-H intermediate (0.1 mole), 18.5 grams of 3-cyano-4-phenyl-2-(5H)-furanone and 300 milliters of toluene are charged into a 500 milliter three necked flask equipped with thermometer, reflux condenser, Dean-Stark trap, mechanical stirrer, and heating mantle. This mixture is heated at reflux until no more water condenses in the trap which takes about four hours. The resulting mixture is dissolved in methylene chloride and is washed with water three times. The resulting methylene chloride solution is then dried over magnesium sulfate and filtered into a 500 milliter round bottom flask. The solution is then stripped of all volatiles under reduced vacuum to give a blue violet liquid with a maximum absorbance at 565 nm.

### Example 53

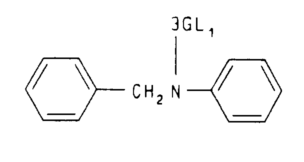

In a dry 1000 ml three-neck flask equipped with nitrogen purge, heating mantle, mechanical stirrer, temperature controller and addition funnel are charged 245 grams of N-benzylaniline (1.34 moles), 400 grams of xylenes and 0.6 gram of potassium hydroxide. The mixture is heated to 110°C with stirring by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 53A

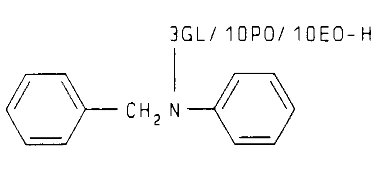

In a two liter autoclave are charged 405 grams (1 mole) of N-benzylaniline 3 glycidol intermediate of Example 53 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi.

After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the N-benzylaniline 3GL/10PO/10EO-H intermediate has an average gram molecular weight of 1424 and is ready for use.

### Example 54

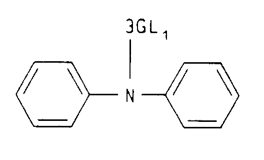

In a dry 1000 ml three-neck flask equipped with nitrogen purge, heating mantle, mechanical stirrer, temperature controller and addition funnel are charged 169 grams of diphenylamine (1 mole), 400 grams of xylenes and 0.6 gram of potassium hydroxide. The mixture is heated to 110°C with stirring by means of the heating mantle and temperature controller.

Two hundred twenty-two grams (3 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 54A

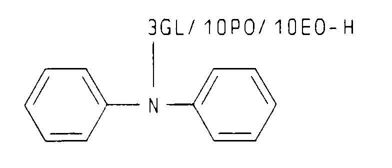

In a two liter autoclave are charged 391 grams (1 mole) of diphenylamine 3 glycidol intermediate of Example 54 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi.

After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the diphenylamine 3GL/10PO/10EO-H intermediate has an average gram molecular weight of 1411 and is ready for use.

### Example 55

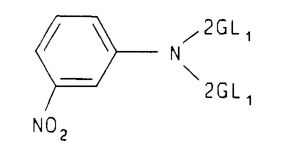

In a dry 1000 ml three-neck flask equipped with nitrogen purge, heating mantle, mechanical stirrer, temperature controller and addition funnel are charged 138 grams of m-nitroaniline (1 mole), 400 grams of xylenes and 0.6 gram of potassium hydroxide. The mixture is heated to 110°C with stirring with by means of the heating mantle and temperature controller.

Two hundred twenty-two grams (3 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour. At this time the hydroxyl number is run for the m-nitroaniline 4 glycidol intermediate and is found to be 777 (theory is 776).

### Example 55A

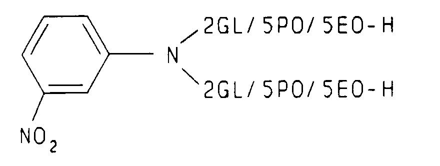

In a two liter autoclave are charged 434 grams (1 mole) of m-nitroaniline 4 glycidol intermediate of Example 55 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the m-nitroaniline 4GL/10PO/10EO-H intermediate has an average gram molecular weight of 1454 and is ready for use.

### Example 56

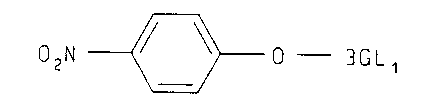

In a dry 1000 ml three-neck flask equipped with nitrogen purge, heating mantle, mechanical stirrer, temperature controller and addition funnel are charged 139 grams of p-nitrophenol (1 mole), 400 grams of xylenes and 0.6 gram of potassium hydroxide. The mixture is heated to 110°C with stirring by means of the heating mantle and temperature controller.

Two hundred twenty-five grams (3 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour. At this time the hydroxyl number is run for the p-nitrophenol 3 glycidol intermediate and is found to be 653 (theory is 621).

### Example 56A

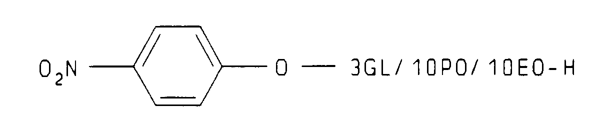

In a two liter autoclave are charged 361 grams (1 mole) of p-nitrophenol 3 glycidol intermediate of Example 56 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the p-nitrophenol 3GL/10PO/10EO-H intermediate has an average gram molecular weight of 1381 and is ready for use.

### Example 57

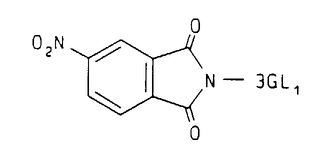

In a dry 1000 ml three-neck flask equipped with nitrogen purge, heating mantle, mechanical stirrer, temperature controller and addition funnel are charged 257 grams of 4-nitrophthalimide (1.34 mole), 400 grams of xylenes and 0.6 gram of potassium hydroxide. The mixture is heated to 110°C with stirring with by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 57A

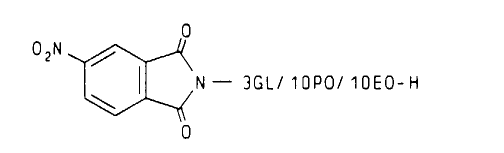

In a two liter autoclave are charged 414 grams (1 mole) of 4-nitrophthalimide 3 glycidol intermediate of Example 57 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the 4-nitrophthalimide 3GL/10PO/10EO-H intermediate has an average gram molecular weight of 1434 and is ready for use.

### Example 58

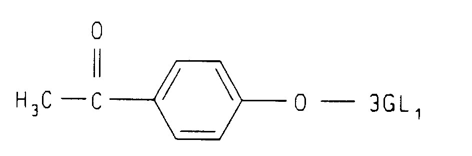

In a dry 1000 ml three-neck flask equipped with nitrogen purge, heating mantle, mechanical stirrer, temperature controller and addition funnel are charged 182 grams of 4-hydroxyacetophenone (1.34 mole), 400 grams of xylenes and 0.6 gram of potassium hydroxide. The mixture is heated to 110°C with stirring by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 58A

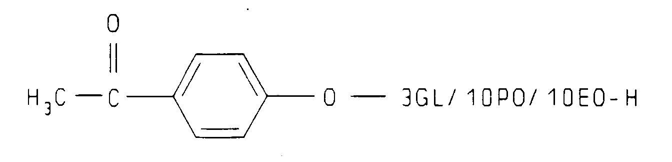

In a two liter autoclave are charged 358 grams (1 mole) of 4-oxyacetophenone 3 glycidol intermediate of Example 58 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the 4-oxyacetophenone 3GL/10PO/10EO-H intermediate has an average gram molecular weight of 1378 and is ready for use.

### Example 59

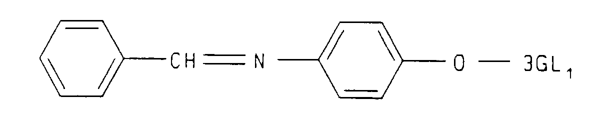

In a dry 1000 ml three-neck flask equipped with nitrogen purge, heating mantle, mechanical stirrer, temperature controller and addition funnel are charged 363 grams of N-benzylidene-4-hydroxyaniline (1.34 mole), 400 grams of xylenes and 0.6 gram of potassium hydroxide. The mixture is heated to 110°C with stirring by means of the heating mantle and temperature controller.

Two hundred ninety-eight grams (4.03 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour. At this time the hydroxyl number is run for the N-benzylidene-4-hydroxyaniline 3 glycidol intermediate and is found to be 637 (theory is 537).

### Example 59A

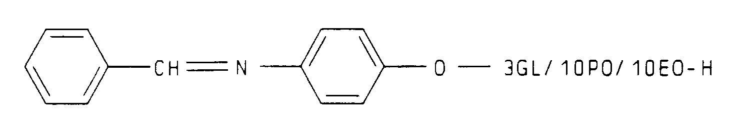

In a two liter autoclave are charged 418 grams (1 mole) of N-benzylidene-4-hydroxyaniline 3 glycidol intermediate of Example 59 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the N-benzylidene-4-hydroxyaniline 3GL/10PO/10EO-H intermediate has an average gram molecular weight of 1438 and is ready for use.

### Example 60

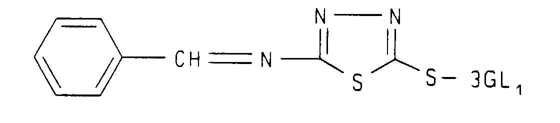

In a dry 1000 ml three-neck flask equipped with nitrogen purge, heating mantle, mechanical stirrer, temperature controller and addition funnel are charged 176 grams of N-benzylidene-2-amino-2-mercapto-1,3,4-thiadiazole (0.8 mole), 400 grams of xylenes and 0.6 gram of potassium hydroxide. The mixture is heated to 110°C with stirring by means of the heating mantle and temperature controller.

One hundred seventy-seven grams (2.4 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 60A

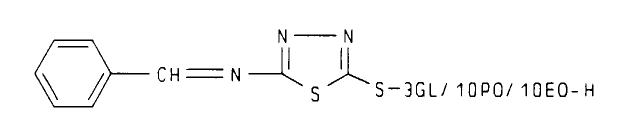

In a two liter autoclave are charged 443 grams (1 mole) of N-benzylidene-2-amino-2-mercapto-1,3,4-thiadiazole 3 glycidol intermediate of Example 60 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the N-benzylidene-2-amino-2-mercapto-1,3,4-thiadiazole 3GL/10PO/10EO-H intermediate has an average gram molecular weight of 1463 and is ready for use.

### Example 61

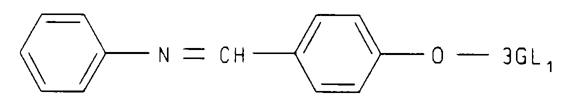

In a dry 1000 ml three-neck flask equipped with nitrogen purge, heating mantle, mechanical stirrer, temperature controller and addition funnel are charged 98.5 grams of N-(4-hydroxy)benzylideneaniline (0.5 mole), 200 grams of xylenes and 0.6 gram of potassium hydroxide. The mixture is heated to 110°C with stirring by means of the heating mantle and temperature controller.

One hundred eleven grams (1.5 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 61A

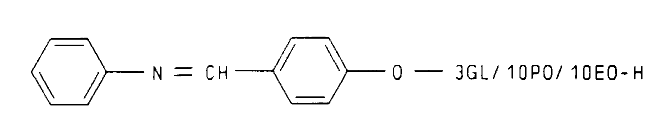

In a two liter autoclave are charged 419 grams (1 mole) of N-(4-hydroxy)benzylideneaniline 3 glycidol intermediate of Example 61 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the N-(4-hydroxy)benzylideneaniline 3GL/10PO/10EO-H intermediate has an average gram molecular weight of 1439 and is ready for use.

### Example 62

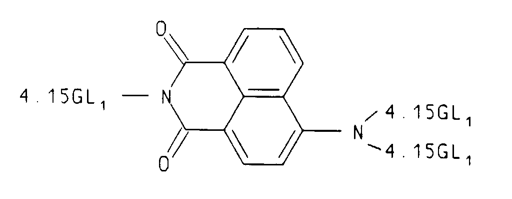

In a dry 1000 ml three-neck flask equipped with nitrogen purge, heating mantle, mechanical stirrer, temperature controller and addition funnel are charged 42.4 grams of 4-amino-1,8-naphthalimide (0.2 mole), 300 grams of xylenes and 0.3 gram of potassium hydroxide. The mixture is heated to 110°C with stirring by means of the heating mantle and temperature controller.

One hundred eighty-seven grams (2.5 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour. At this time the hydroxyl number is run for the 4-amino-1,8-naphthalimide 12.5 glycidol intermediate and is found to be 791 (theory is 783).

### Example 62A

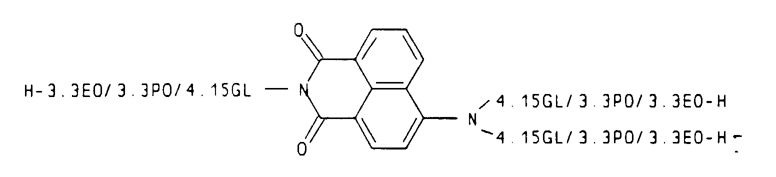

In a two liter autoclave are charged 1137 grams (1 mole) of 4-amino-1,8-naphthalimide 3 glycidol intermediate of Example 62 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the 4-amino-1,8-naphthalimide 12.5GL/10PO/10EO-H intermediate has an average gram molecular weight of 2157 and is ready for use.

### Example 63

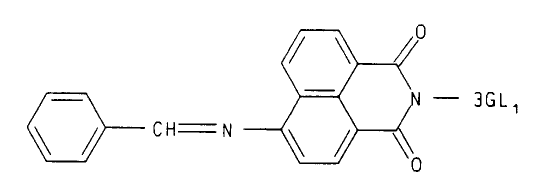

In a dry 1000 ml three-neck flask equipped with nitrogen purge, heating mantle, mechanical stirrer, temperature controller and addition funnel are charged 150 grams of N-(benzylidene)-4-amino-1,8-naphthalimide (0.5 mole), 300 grams of xylenes and 0.3 gram of potassium hydroxide. The mixture is heated to 110°C with stirring by means of the heating mantle and temperature controller.

One hundred eleven grams (1.5 moles) of glycidol are slowly dropwise added through the addition funnel. The first few milliliters cause a slight temperature drop before the exotherm begins. Once it starts, the heating mantle is removed and the exotherm controlled by the addition rate. The temperature is maintained between 110-125°C by the addition rate.

After all of the glycidol is charged, the reaction mixture is post-heated for one hour.

### Example 63A

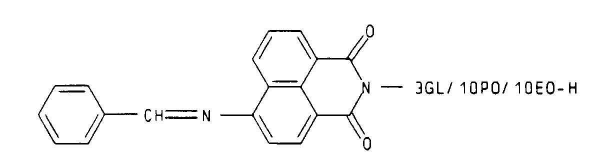

In a two liter autoclave are charged 522 grams (1 mole) of N-(benzylidene)-4-amino-1,8-naphthalimide 3 glycidol intermediate of Example 63 and 4 grams of potassium hydroxide catalyst. The reactor is purged three times to 60 psi with nitrogen and is then heated to 250°F under 5 psi nitrogen pressure.

Next, 580 grams (10 moles) of propylene oxide are added at a rate to maintain a vapor pressure reading less than 80 psi. After the PO addition, the reaction mixture is post-heated at 120°C for 2 hours.

Next, 440 grams (10 moles) of ethylene oxide (EO) are added at a rate to maintain a vapor pressure reading less than 80 psi. After the EO addition, the reaction mixture is post-heated at 120°C for 2 hours.

After vacuum stripping at 200°F for 15 minutes, the N-(benzylidene)-4-amino-1,8-naphthalimide 3GL/10PO/10EO-H intermediate has an average gram molecular weight of 1542 and is ready for use.

### EXAMPLE 64

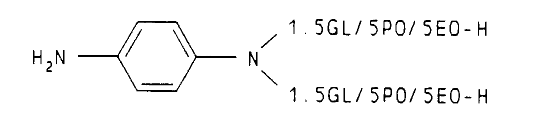

In a 2000 milliter autoclave are charged 1378 grams (1 mole) of nitrosoaniline 3GL/10PO/10EO-H intermediate, 600 milliters of ethyl alcohol and 130 grams of wet Raney nickel catalyst. The autoclave is then purged three times with hydrogen gas and heated to 85-90°C at a pressure of about 1300 psi. After about two hours the hydrogen uptake ceases. A sample is removed and vacuum stripped of solvent. The IR spectrum of this sample shows no nitroso bands and the presence of an amine band indicating that the reaction is complete. The autoclave is cooled and vented. The liquid product is isolated by filtering the reaction mixture and stripping away the solvent under reduced pressure.

### EXAMPLE 65

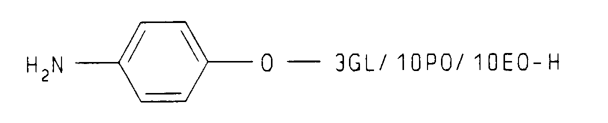

In a 2000 milliter autoclave are charged 1381 grams (1 mole) of 4-nitro 3GL/10PO/10EO-H intermediate of Example 56A, 600 milliters of ethyl alcohol and 130 grams of wet Raney nickel catalyst. The autoclave is then purged three times with hydrogen gas and heated to 85-90°C at a pressure of about 1300 psi. After about two hours the hydrogen uptake ceases. A sample is removed and vacuum stripped of solvent. The IR spectrum of this sample shows no nitro bands and the presence of an amine band indicating that the reaction is complete. The autoclave is cooled and vented. The liquid product is isolated by filtering the reaction mixture and stripping away the solvent under reduced pressure.

### EXAMPLE 66

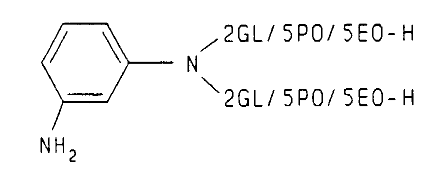

In a 2000 milliter autoclave are charged 1454 grams (1 mole) of 3-nitroaniline 4GL/10PO/10EO-H intermediate of Example 55A, 600 milliters of ethyl alcohol and 130 grams of wet Raney nickel catalyst. The autoclave is then purged three times with hydrogen gas and heated to 85-90°C at a pressure of about 1300 psi. After about two hours the hydrogen uptake ceases. A sample is removed and vacuum stripped of solvent. The IR spectrum of this sample shows no nitro bands and the presence of an amine band indicating that the reaction is complete. The autoclave is cooled and vented. The liquid product is isolated by filtering the reaction mixture and stripping away the solvent under reduced pressure.

### EXAMPLE 67

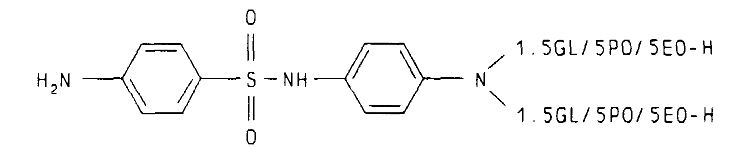

A mixture is prepared by adding 1378 grams (1 mole) of the aminoaniline 3GL/10PO/10EO-H intermediate of Example 64 to 122 grams (1.2 moles) sodium carbonate in 1000 ml of water. The mixture is cooled to 10-15°C and 233 grams (1 mole) of 4-acetamidobenzenesulfonyl chloride are added to the mixture over one half hour. After the addition is complete, the mixture is warmed at 50°C for an additional two hours to insure complete reaction. Forty grams (1 mole) of sodium hydroxide are added to the mixture and the mixture is heated at reflux one hour. Afterwards, the mixture is cooled and the product is extracted into methylene chloride, further washed several times with water to a neutral pH, and dried over anhydrous magnesium sulfate. The dried solution is filtered and stripped under reduced pressure at 90°C to yield a liquid intermediate.

### EXAMPLE 68

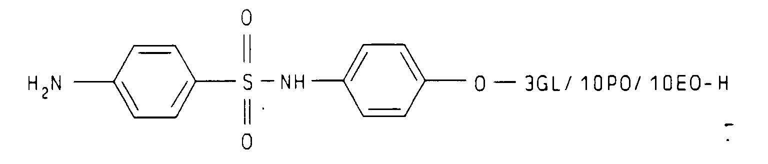

A mixture is prepared by adding 1351 grams (1 mole) of the amine 3GL/10PO/10EO-H intermediate of Example 65 to 122 grams (1.2 moles) sodium carbonate in 1000 ml of water. The mixture is cooled to 10-15°C and 233 grams (1 mole) of 4-acetamidobenzenesulfonyl chloride are added to the mixture over one half hour. After the addition is complete, the mixture is warmed at 50°C for an additional two hours to insure complete reaction. Forty grams (1 mole) of sodium hydroxide are added to the mixture and the mixture is heated at reflux one hour. Afterwards, the mixture was cooled and the product is extracted into methylene chloride, further washed several times with water to a neutral pH, and dried over anhydrous magnesium sulfate. The dried solution is filtered and stripped under reduced pressure at 90°C to yield a liquid intermediate.

### EXAMPLE 69

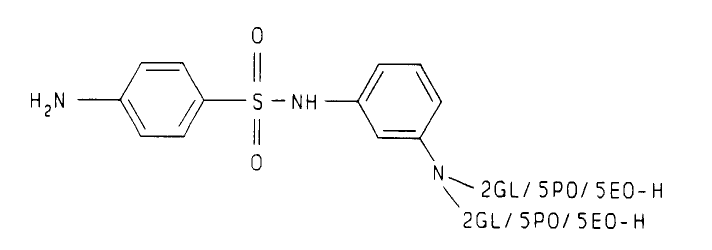

A mixture is prepared by adding 1424 grams (1 mole) of the aminoaniline 4GL/10PO/10EO-H intermediate of Example 66 to 122 grams (1.2 moles) sodium carbonate in 1000 ml of water. The mixture is cooled to 10-15°C and 233 grams (1 mole) of 4-acetamidobenzenesulfonyl chloride are added to the mixture over one half hour. After the addition is complete, the mixture is warmed at 50°C for an additional two hours to insure complete reaction. Forty grams (1 mole) of sodium hydroxide are added to the mixture and the mixture is heated at reflux one hour. Afterwards, the mixture was cooled and the product is extracted into methylene chloride. The corresponding methylene chloride solution is separated from the salt water solution, further washed several times with water to a neutral pH, and dried over anhydrous magnesium sulfate. The dried solution is filtered and stripped under reduced pressure at 90°C to yield a liquid intermediate.

### EXAMPLE 70

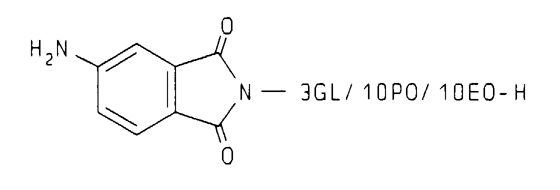

In a 2000 milliter autoclave are charged 405 grams (0.5 moles) of 4-nitrophthalimide 3GL/10PO/10EO-H intermediate of Example 57A, 1400 milliters of ethyl alcohol and 65 grams of wet Raney nickel catalyst. The autoclave is then purged three times with hydrogen gas and heated to 85-90°C at a pressure of about 1300 psi. After about two hours the hydrogen uptake ceases. A sample is removed and vacuum stripped of solvent. The IR spectrum of this sample shows no nitro bands and the presence of an amine band indicating that the reaction is complete. The autoclave is cooled and vented. The liquid product is isolated by filtering the reaction mixture and stripping away the solvent under reduced pressure.

### EXAMPLE 71

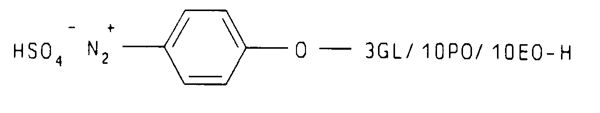

One hundred eighty grams acetic acid, 41 grams propionic acid, and 4 drops of 2-ethyl hexanol defoamer are added to a 500 milliliter three necked flask equipped with a thermometer, cooling bath, and mechanical stirrer. The mixture is cooled and 135 grams (0.1 mole) of amine 3GL/10PO/10EO-H intermediate of Example 65 are added to the flask. The mixture is further cooled to below 5°C after which 33 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour. At this point the diazo intermediate is ready for further use.

### EXAMPLE 72

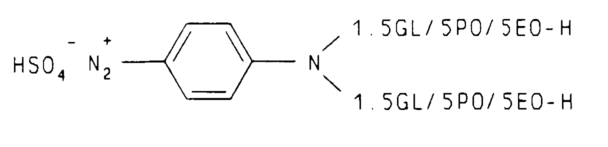

One hundred eighty grams acetic acid, 41 grams propionic acid, and 4 drops of 2-ethyl hexanol defoamer are added to a 500 milliliter three necked flask equipped with a thermometer, cooling bath, and mechanical stirrer. The mixture is cooled and 139 grams (0.1 mole) of aminoaniline 3GL/10PO/10EO-H intermediate of Example 64 are added to the flask. The mixture is further cooled to below 5°C after which 33 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour. At this point the diazo intermediate is ready for further use.

### EXAMPLE 73

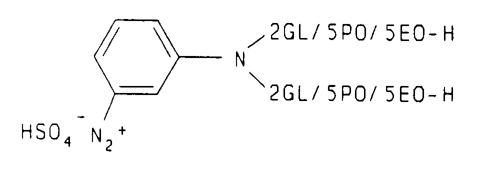

One hundred eighty grams acetic acid, 41 grams propionic acid, and 4 drops of 2-ethyl hexanol defoamer are added to a 500 milliliter three necked flask equipped with a thermometer, cooling bath, and mechanical stirrer. The mixture is cooled and 142 grams (0.1 mole) of aminoaniline 4GL/10PO/10EO-H intermediate of Example 66 are added to the flask. The mixture is further cooled to below 5°C after which 33 grams of 40% nitrosyl sulfuric acid are added while maintaining the temperature below 10°C. After three hours the mixture gives a positive nitrite test and 2 grams of sulfamic acid are added slowly keeping the temperature below 5°C. A negative nitrite test is evident after one further hour. At this point the diazo intermediate is ready for further use.

### EXAMPLE 74

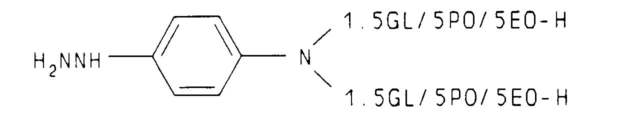

A solution of 170.5 grams (0.125 mole) of amine 3GL/10PO/10EO-H intermediate of Example 64, 45 milliters concentrated hydrochloric acid, and 90 milliters of water is added to a 500 milliter flask and cooled to 0-5°C. Ten grams of sodium nitrite are added maintaining the mixture below 10°C. After several hours, the excess nitrite is destroyed with sulfamic acid. The diazo solution is then dripped into a solution of 94 grams of sodium sulfite in 250 grams of water, stirred for one hour at room temperature and then 50 grams of concentrated sulfuric acid are added and the mixture heated for one hour at 100°C. After cooling, the pH is adjusted with sodium hydroxide to 10. The organic layer is separated and extracted into methylene chloride. The methylene chloride solution is separated from the salt water solution, further washed several times with water to a neutral pH, and dried over anhydrous magnesium sulfate. The dried solution is filtered and stripped under reduced pressure at 90°C to yield a liquid intermediate.

### EXAMPLE 75

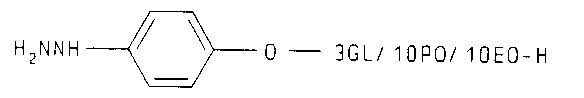

A solution of 168.9 grams (0.125 mole) of amine 3GL/10PO/10EO-H intermediate of Example 65, 45 milliters concentrated hydrochloric acid, and 90 milliters of water is added to a 500 milliter flask and cooled to 0-5°C. Ten grams of sodium nitrite are added maintaining the mixture below 10°C. After several hours, the excess nitrite is destroyed with sulfamic acid. The diazo solution is then dripped into a solution of 94 grams of sodium sulfite in 250 grams of water, stirred for one hour at room temperature and then 50 grams of concentrated sulfuric acid are added and the mixture heated for one hour at 100°C. After cooling, the pH is adjusted with sodium hydroxide to 10. The organic layer is separated and extracted into methylene chloride. The methylene chloride solution is separated from the salt water solution, further washed several times with water to a neutral pH, and dried over anhydrous magnesium sulfate. The dried solution is filtered and stripped under reduced pressure at 90°C to yield a liquid intermediate.

### EXAMPLE 76

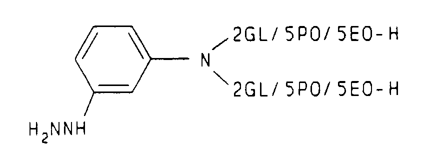

A solution of 178 grams (0.125 mole) of aminoaniline 4GL/10PO/10EO-H intermediate of Example 66, 45 milliters concentrated hydrochloric acid, and 90 milliters of water is added to a 500 milliter flask and cooled to 0-5°C. Ten grams of sodium nitrite are added maintaining the mixture below 10°C. After several hours, the excess nitrite is destroyed with sulfamic acid. The diazo solution is then dripped into a solution of 94 grams of sodium sulfite in 250 grams of water, stirred for one hour at room temperature and then 50 grams of concentrated sulfuric acid are added and the mixture heated for one hour at 100°C. After cooling, the pH is adjusted with sodium hydroxide to 10. The organic layer is separated and extracted into methylene chloride. The methylene chloride solution is separated from the salt water solution, further washed several times with water to a neutral pH, and dried over anhydrous magnesium sulfate. The dried solution is filtered and stripped under reduced pressure at 90°C to yield a liquid intermediate.

### EXAMPLE 77

This example demonstrates the improved reactivity of the enriched primary hydroxyl colorants of the invention over conventional colorants by measuring the amount of colorant that migrates from a colored polyurethane foam to a reference foam upon heating for a given time period.

The colorant samples from Examples 10 and 11 are formulated into a polyether based urethane molded foam and tested according to the following procedure:
1) A colored polyurethane molded foam is prepared using the formulation shown below:

| **Ingredient** | **Amount** |
|---|---|
| Colorant | 0.3g |
| Polyol (Renesol RU6744B) | 30.0g |
| Isocyanate (Renesol RU6744A) | 10.8g |

The mold employed is approximately 5 cm in diameter and 1 cm in depth. The above ingredients are mixed under high shear, poured into the mold, cured 15-20 minutes at room temperature and oven cured at 50°C for one hour.
2) A reference polyurethane molded foam is prepared using the the formulation shown below:

| **Ingredient** | **Amount** |
|---|---|
| Polyol (Renesol RU6744B) | 30.0g |
| Isocyanate (Renesol RU6744A) | 10.8g |

The mold employed is also approximately 5 cm in diameter and 1 cm in depth. The above ingredients are mixed under high shear, poured into the mold, cured 15-20 minutes at room temperature and at 50°C for one hour.
3) The colored foam and uncolored reference foam are then clamped tightly together and placed in a 50°C oven for 24 hours. At the end of this period, the molded foams are separated.
4) The amount of color which migrates to the uncolored reference foam is measured via CIELAB readings from an ACS Color Computer. This migration is represented as Delta values that are obtained on an ACS Specto-Sensor. The color difference (Delta E) between the sample colored foams and and reference foams is summarized in the table below.

| **Colorant** | **DELTA E*** |
|---|---|
| Example 10 | 1.29 |
| Example 11 | 17.5 |

| | |
|---|---|
| *CIELAB Coordinates | |

These results clearly show that the enriched primary hydroxyl colorants of the invention (Example 10) are far superior to the conventional polymeric colorants (Example 11).

This test indicates that a large amount of color migrates from the sample foam (prepared from Example 11) into the uncolored reference foam, because of its poor reactivity. A production run using conventional polymeric colorants (such as Example 11) is unacceptable because color bleeding occurs.

In contrast, a very low level of migration is observed for the enriched primary hydroxyl colorants of the invention (Example 10) making their use preferable in the production of colored polyurethane foams.

### EXAMPLE 78

This example demonstrates the increased reactivity for enriched primary hydroxyl colorants of the invention over conventional colorants by measuring the amount of colorant that extracts with acetone (or unreacted colorant).

The colorant samples from Examples 32B and 33 are formulated into a scrap polyurethane foam which is glued together to make carpet padding of which the glue is also an isocyanate-polyol.

The colorant is first mixed into the glue employed for binding together scrap polyurethane foam for carpet underlay. The glue itself is a type of polyurethane foam, forming a pad that is economical and firm when used to pad carpet.

This colored scrap polyurethane foam is prepared and tested according to the following procedure:
1) A colored scrap polyurethane foam is prepared using the formulation shown below:

| **Ingredient** | **Amount** |
|---|---|
| Colorant (Example 32B) | 10.5g |
| Propylene Carbonate (Diluent) | 15.0g |
| Coscat 83 (Catalyst) | 0.8g |
| Scrap polyurethane foam | 1875.0g |
| Binder (3000 mw polyol) Toluene Diisocyanate Index = 4.0 | 15.0g |

The colorant from Example 33 is formulated exactly as above except that 10.0 grams of this colorant are used so that in this comparsion the colorants are calibrated at equivalent color strenghts based on their average molecular weights.
In the glue, the amounts of each material are some ratio of the above weights. The ingredients are mixed thoroughly and placed in a forming pan.
2) After all the ingredients are mixture, steam is applied for five minutes.
3) The carpet underlay is removed and air dried.
4) A 10 gram piece of the colored carpet padding is extracted with 300 grams of acetone for 4 hours.
5) The amount of color that is extracted from the carpet padding is measured by using the absorbance of the solution on a Beckman DU-7 Spectrophotometer. These extraction results are summarzing in the table below:

| **Colorant** | **Absorbance** |
|---|---|
| Example 33 | 0.4787 |
| Example 32B | 0.0680 |

These results clearly show that the enriched primary hydroxyl colorants of the invention (Example 32B) are far superior to the conventional polymeric colorants (Example 33).

The deeply colored extract from the carpet foam (prepared from Example 33) indicates that a large loss of color from the substrate has occurred due to poor reactivity of colorant itself. Use of these conventional polymeric colorants is unacceptable in carpet applications because color bleeding occurs when exposed to strong solvents.

In contrast, a practically colorless extract is observed for the enriched primary hydroxyl colorants of the invention (Example 32B) making their use preferable for the production coloration of polyurethane foams for carpet underlay.

### EXAMPLE 79

This example illustrates the use of enriched primary hydroxyl colorants of the invention in polyolefin systems. The following formulations are preblended using a paddle type mixer and the colorant of Example 35:

| *INGREDIENT | Formulation 1 |
|---|---|
| 4MF Polypropylene resin (Exxon 9142G) | 99.47% |
| Irganox 1010 (Ciba-Geigy) | 800 ppm |
| Millad 3940 | 2500 ppm |
| Calcium stearate | 1000 ppm |
| Colorant (Example 35) | 1000 ppm |
| | |

| *INGREDIENT | Formulation 2 |
|---|---|
| 4MF Polypropylene resin (Exxon 9142G) | 99.62% |
| Irganox 1010 (Ciba-Geigy) | 800 ppm |
| TiO₂ | 1000 ppm |
| Calcium stearate | 1000 ppm |
| Colorant (Example 35) | 1000 ppm |

| | |
|---|---|
| * Calcium stearate functions as a stabilizer; Irganox 1010 is a registered trademark of Ciba-Geigy Corporation for a hindered phenol stabilizer; Millard 3940 is a clarifier for polyolefins; TiO₂ is a white pigment which serves as an opacifier; 4MF Polypropylene resin (Exxon 9142G) is a random copolymer of propylene and ethylene. | |

After mixing, the formulations shown above are melt compounded on a Brabender Twin Screw Mixer with a stock temperature of 245-250°C. The compounded samples are then injection molded on a small toggle clamp machine into two-step plaques with thickness of 50 and 85 mils.

Formulation #1 has good clarity and is a bright red shade. Formulation #2 has opaque and has a medium red shade. Both formulations process well in addition to having properties such as excellent heat stability, non-nucleation, non-migration and ease of resin clean up.

This invention has been described in detail with particular reference to preferred embodiments thereof, but it will be understood that variations and modifications can be effected within the spirit and scope of this invention.

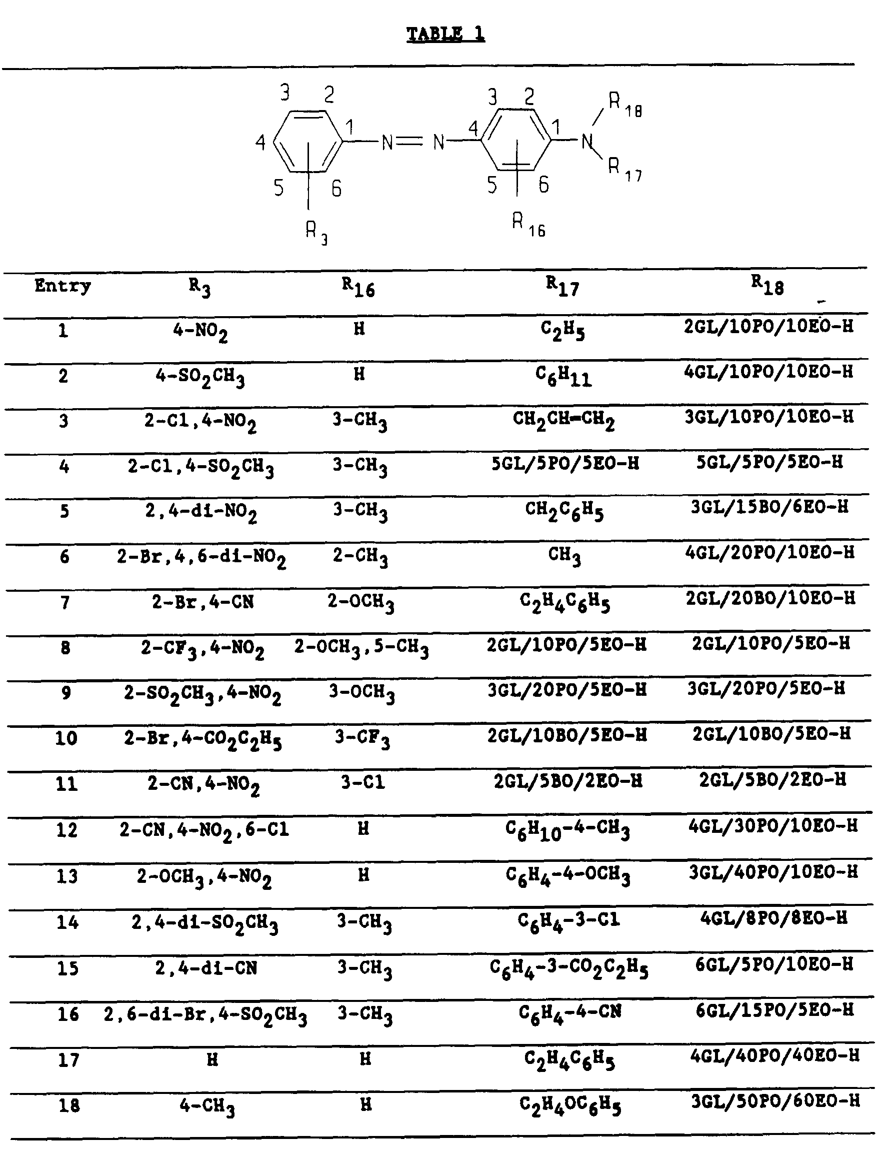

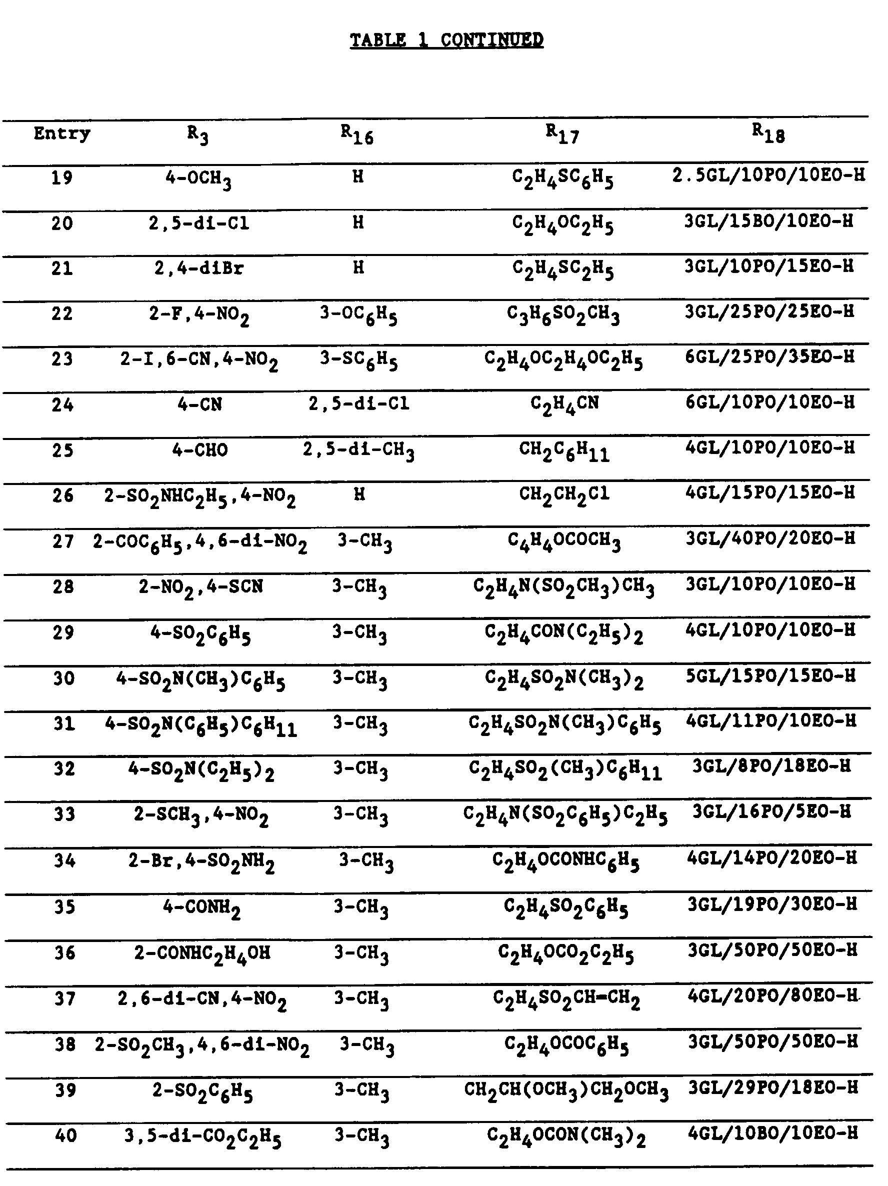

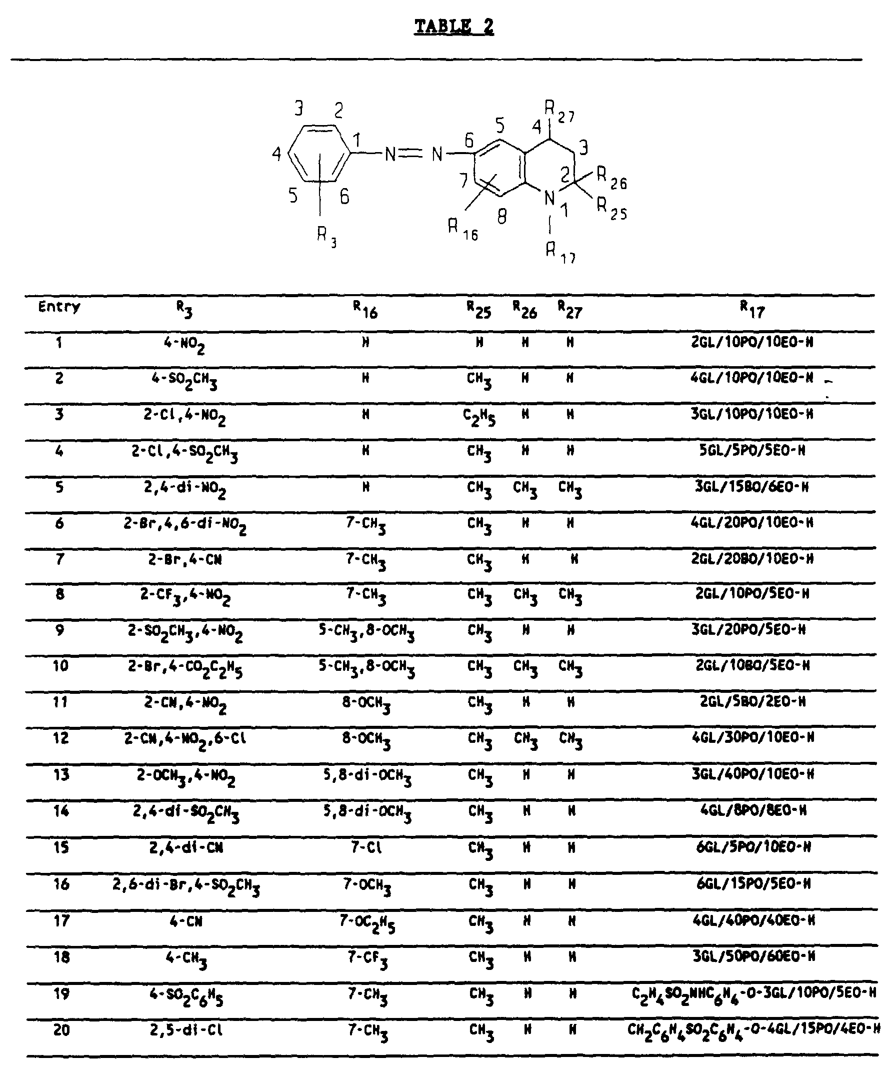

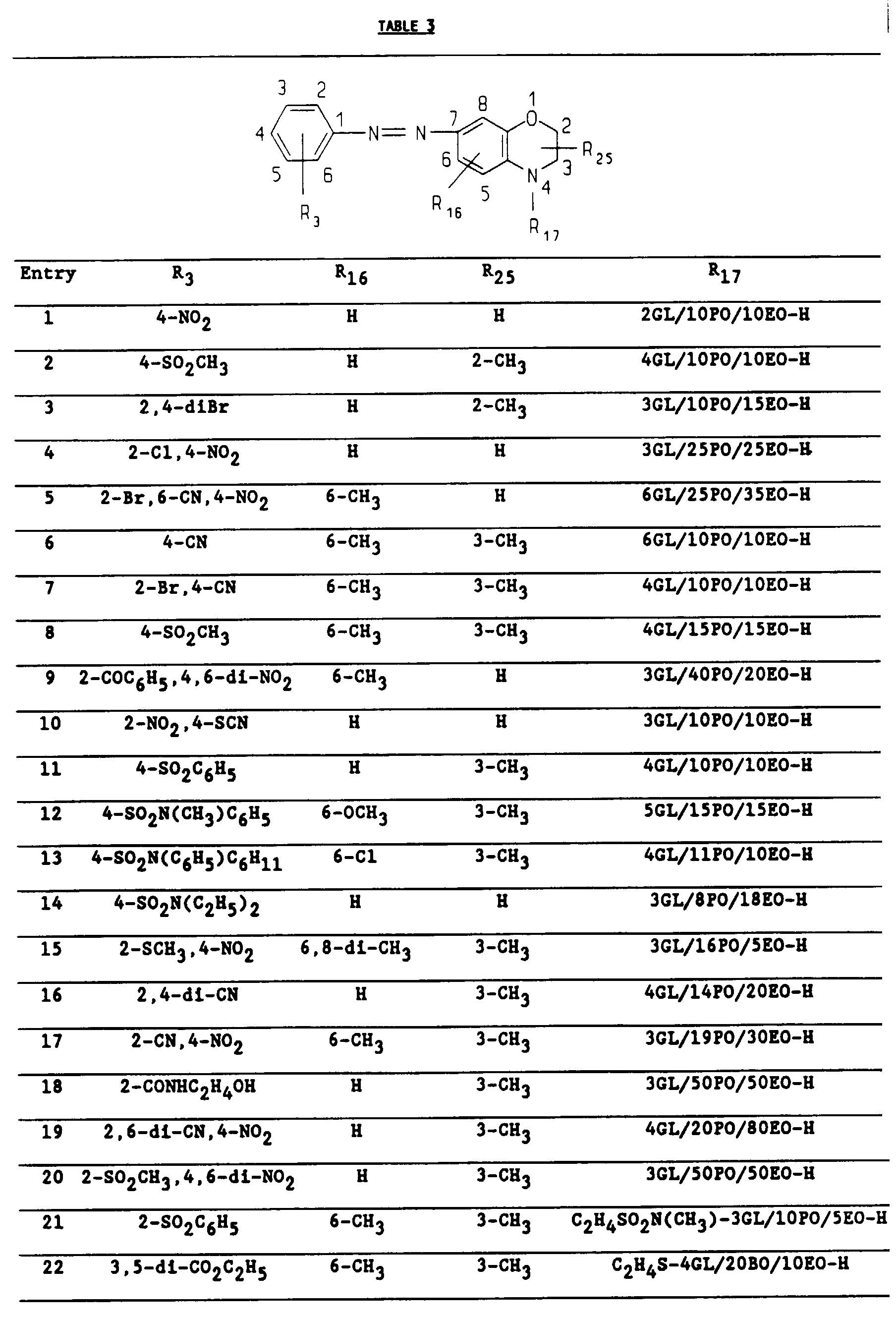

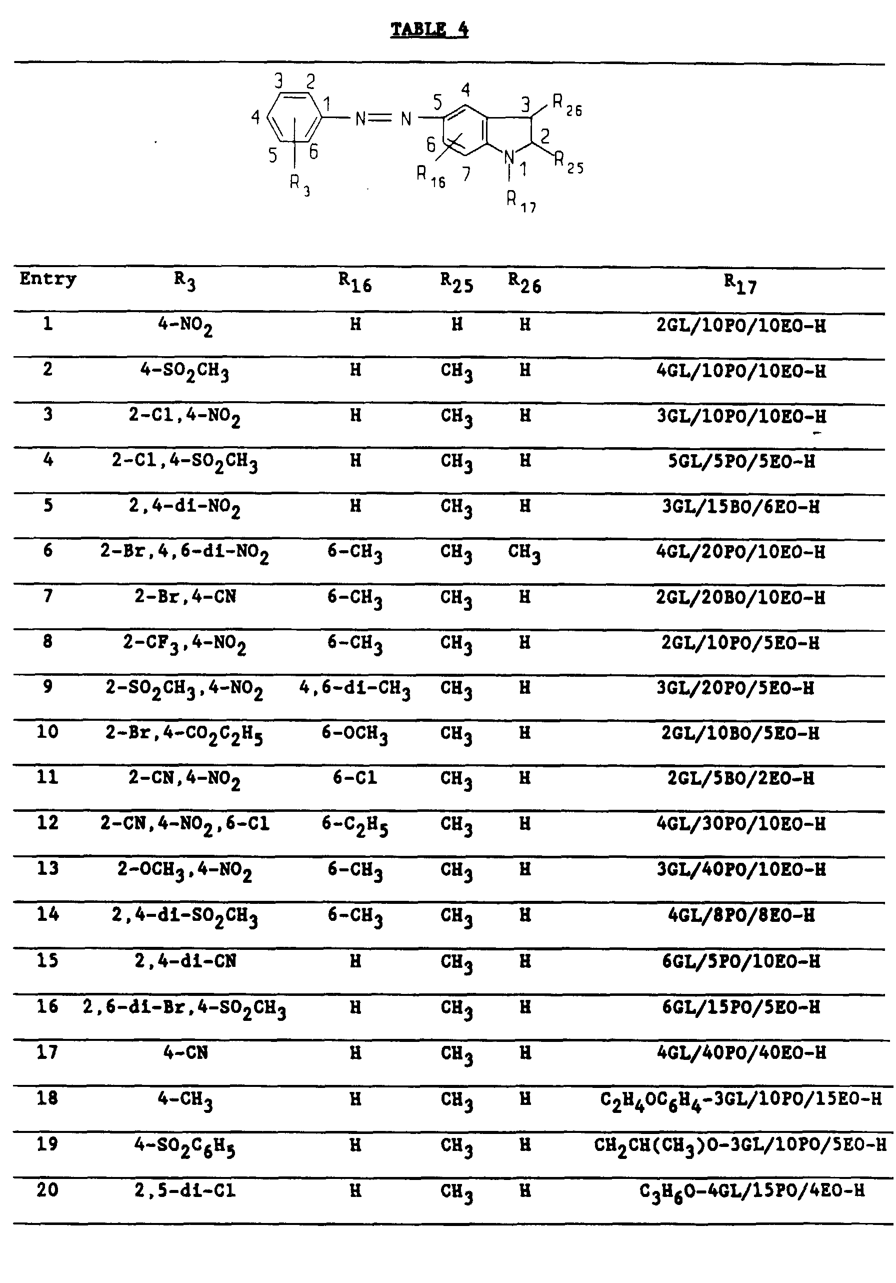

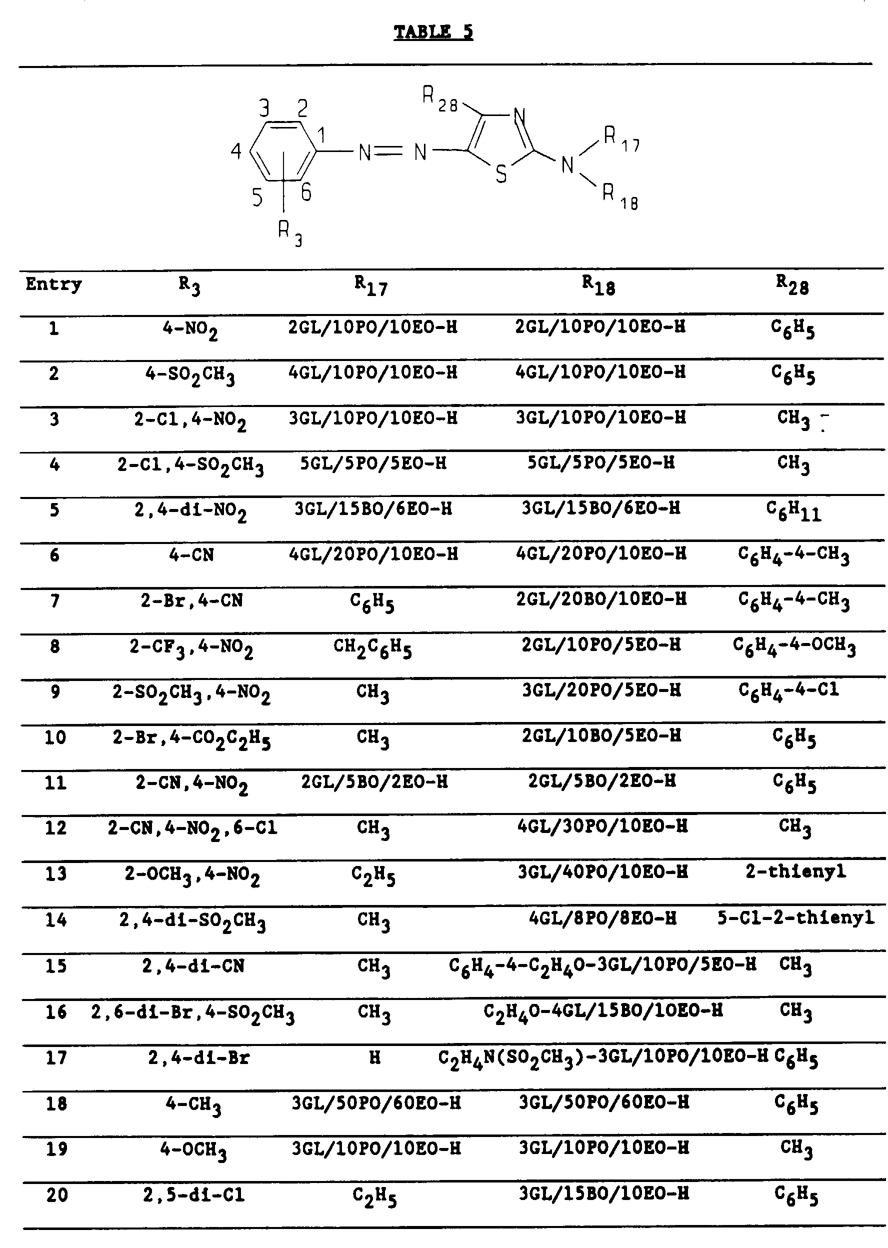

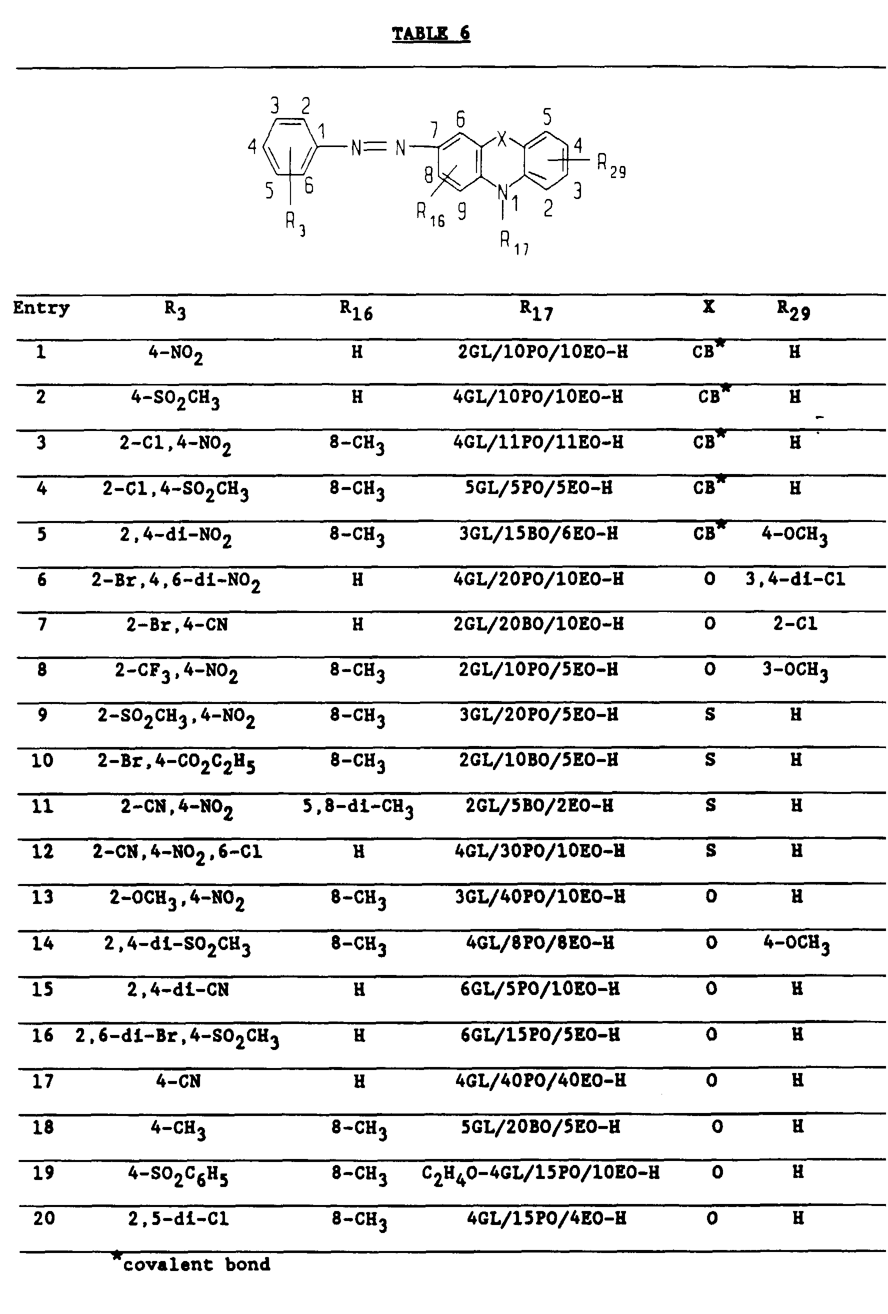

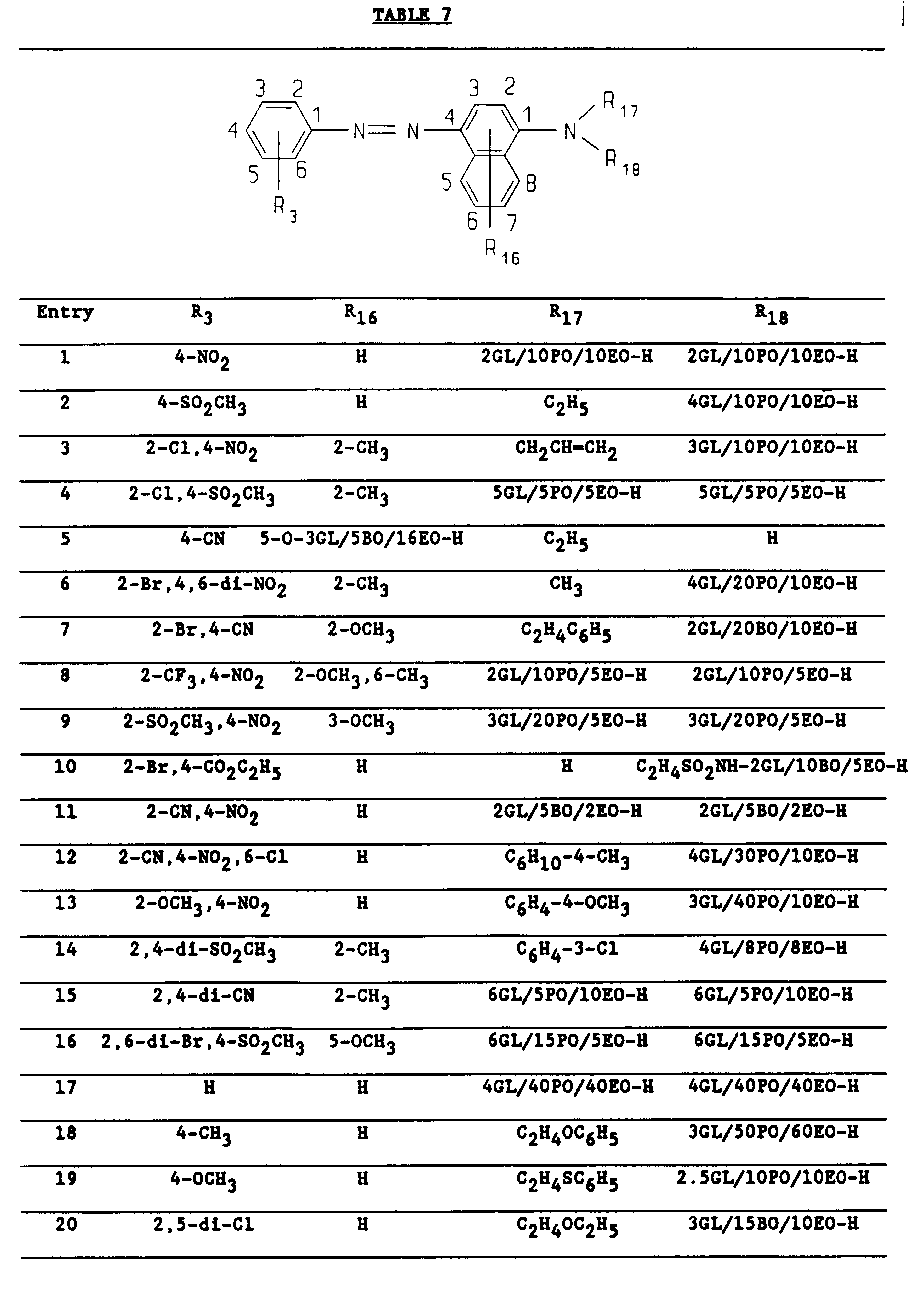

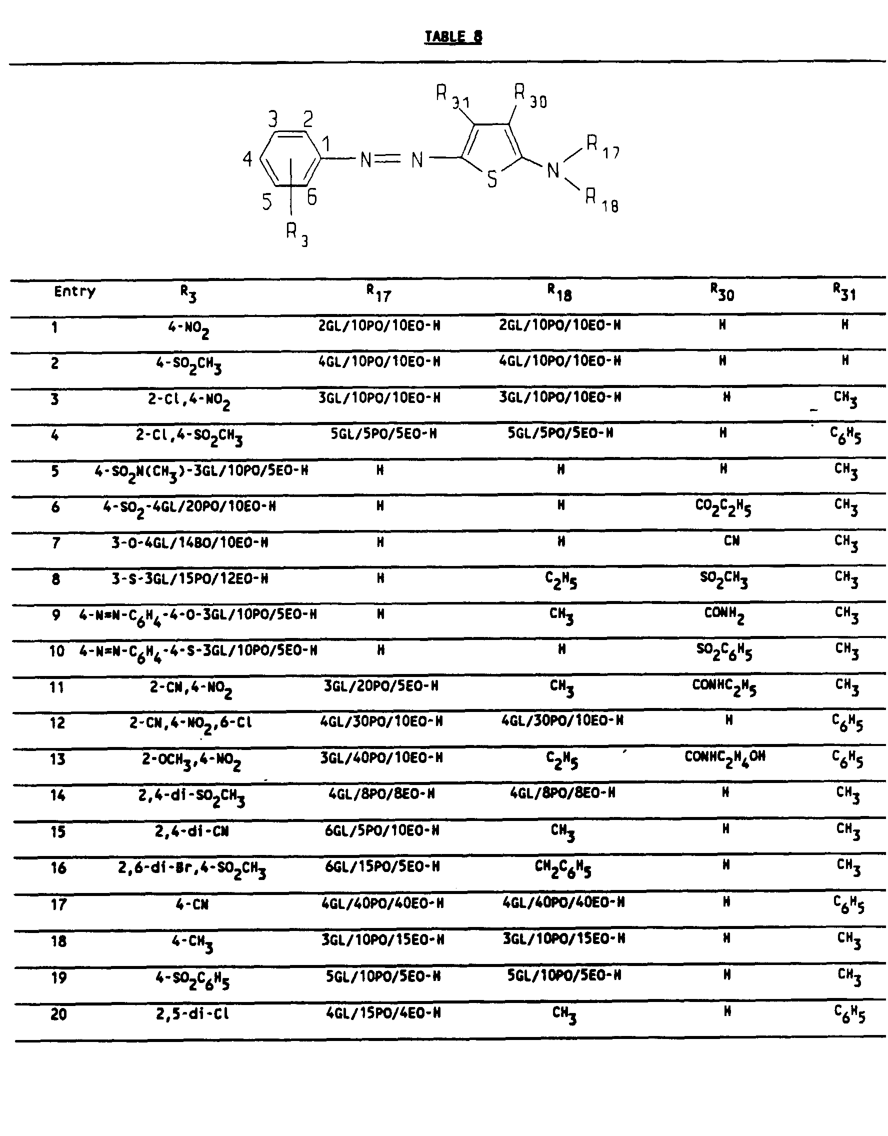

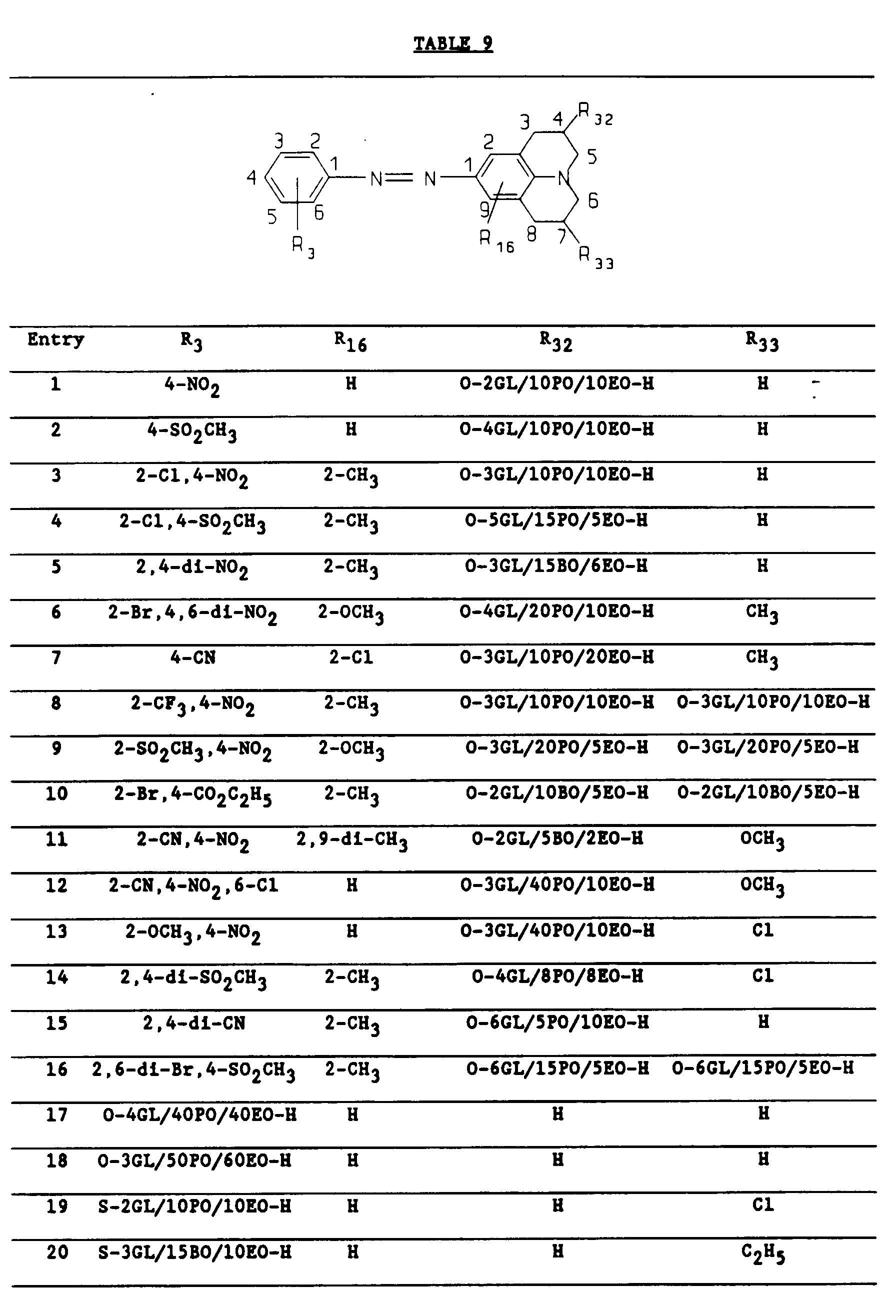

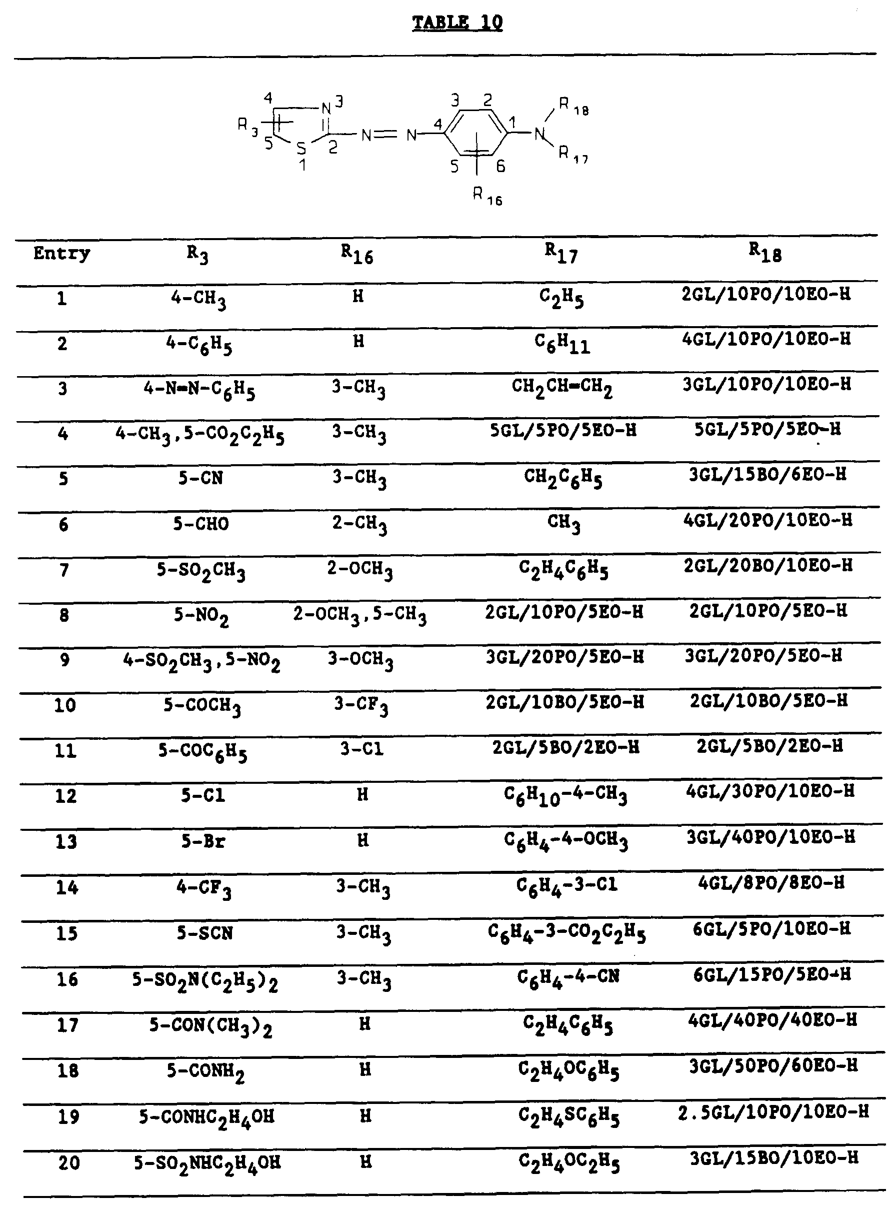

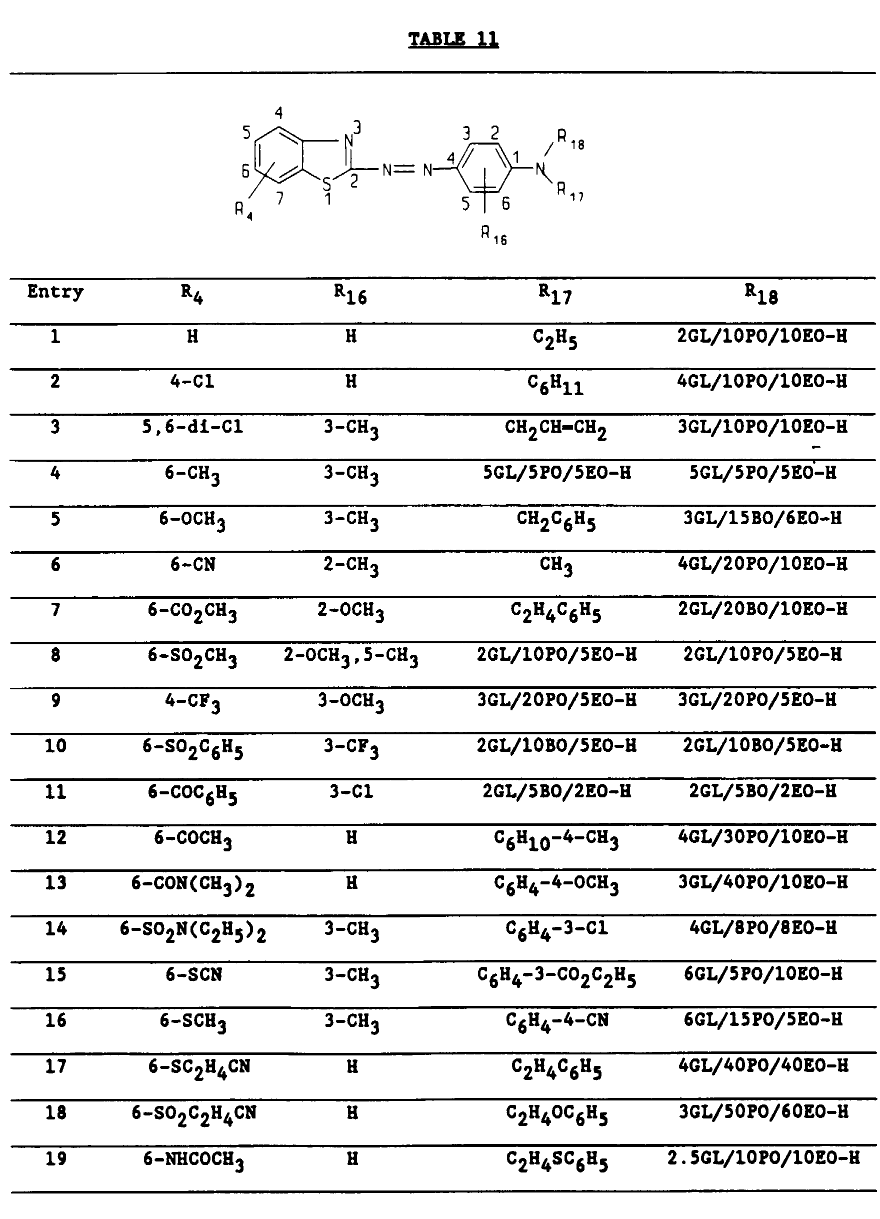

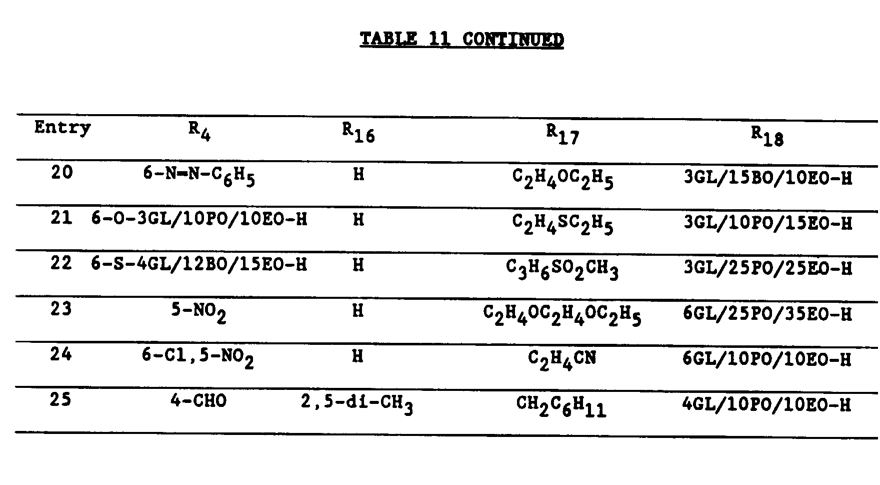

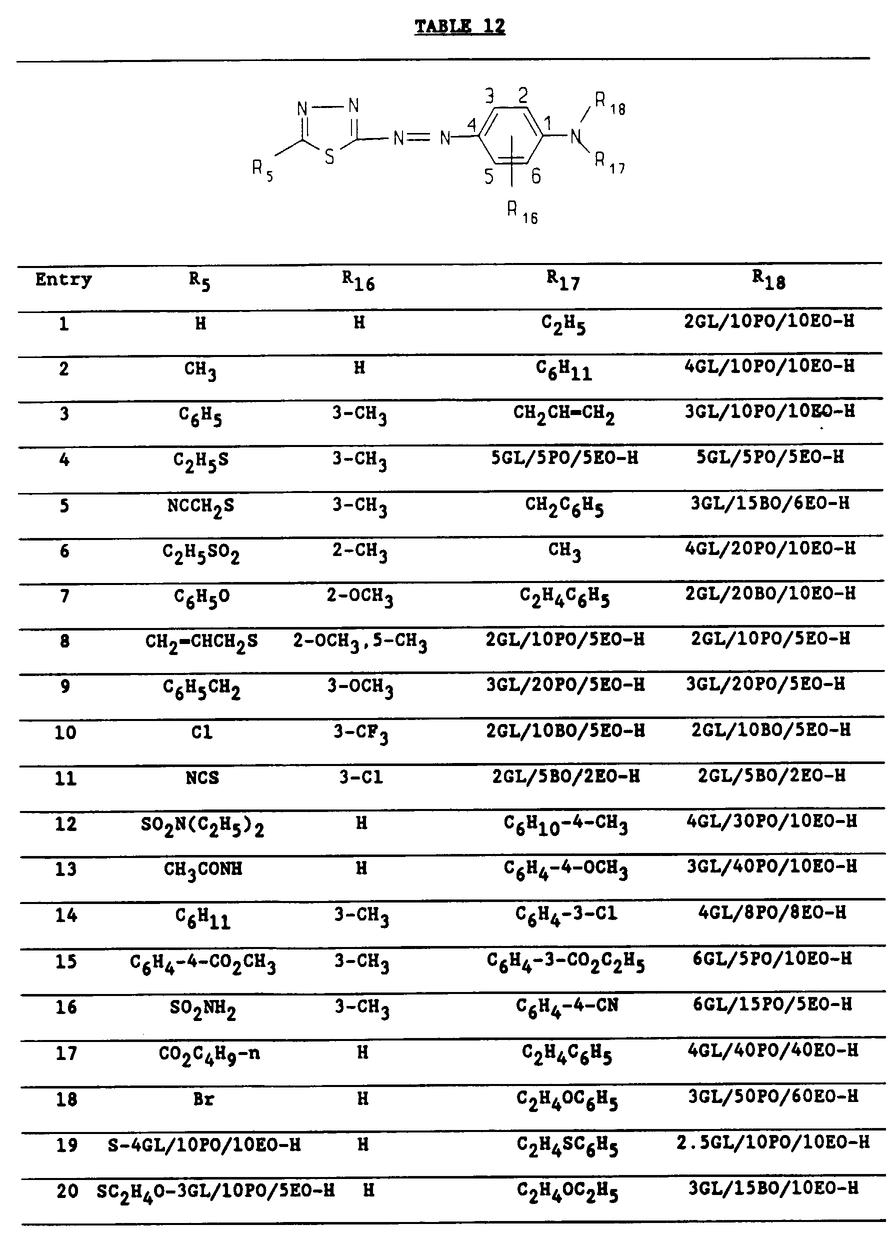

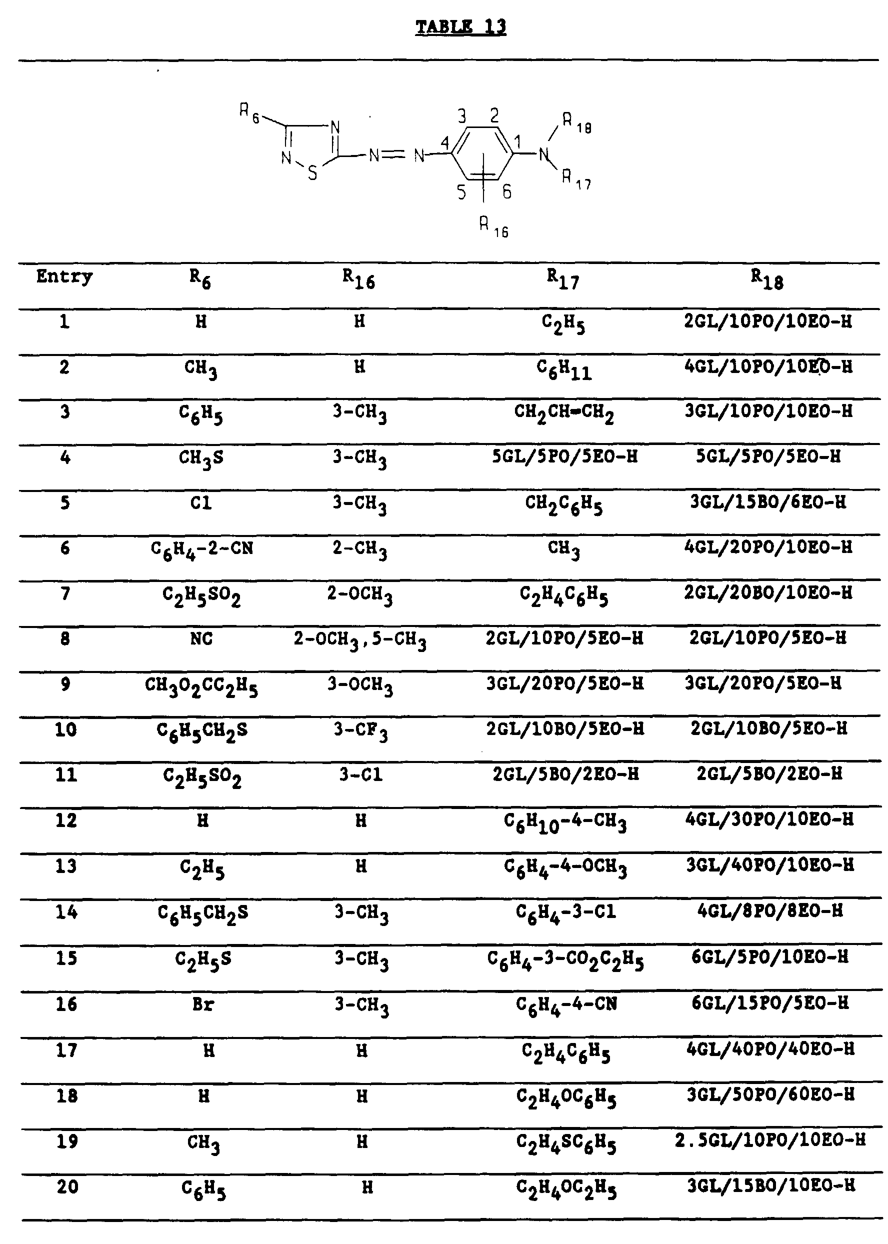

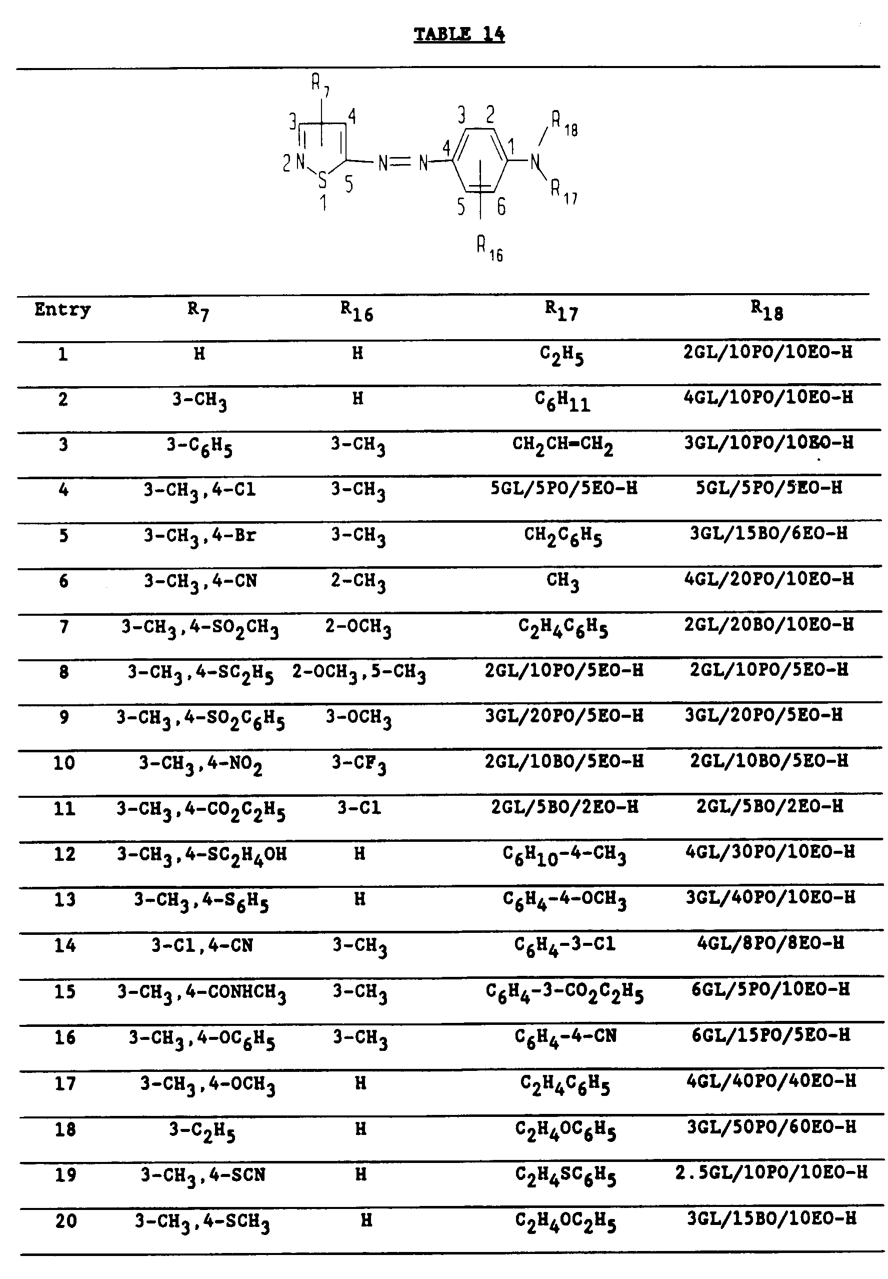

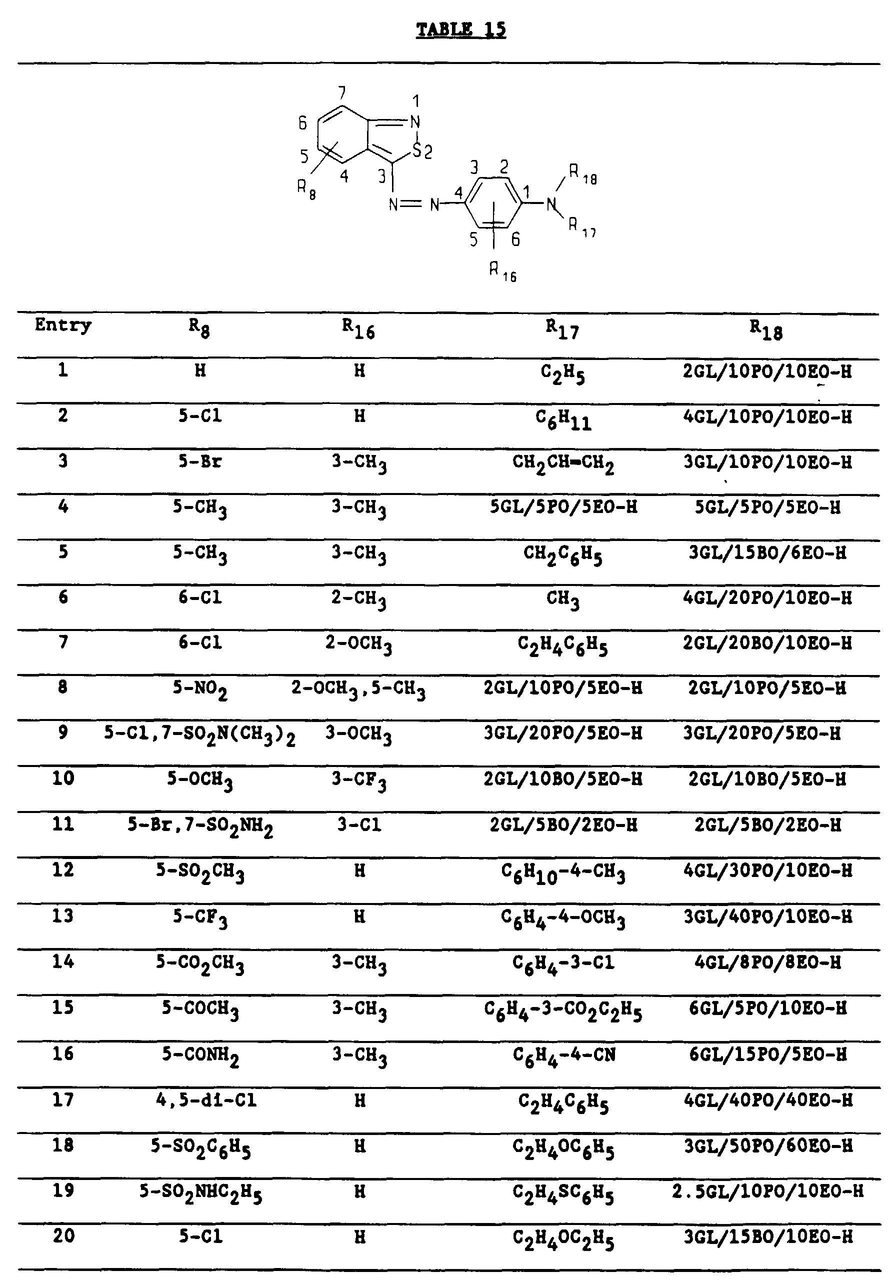

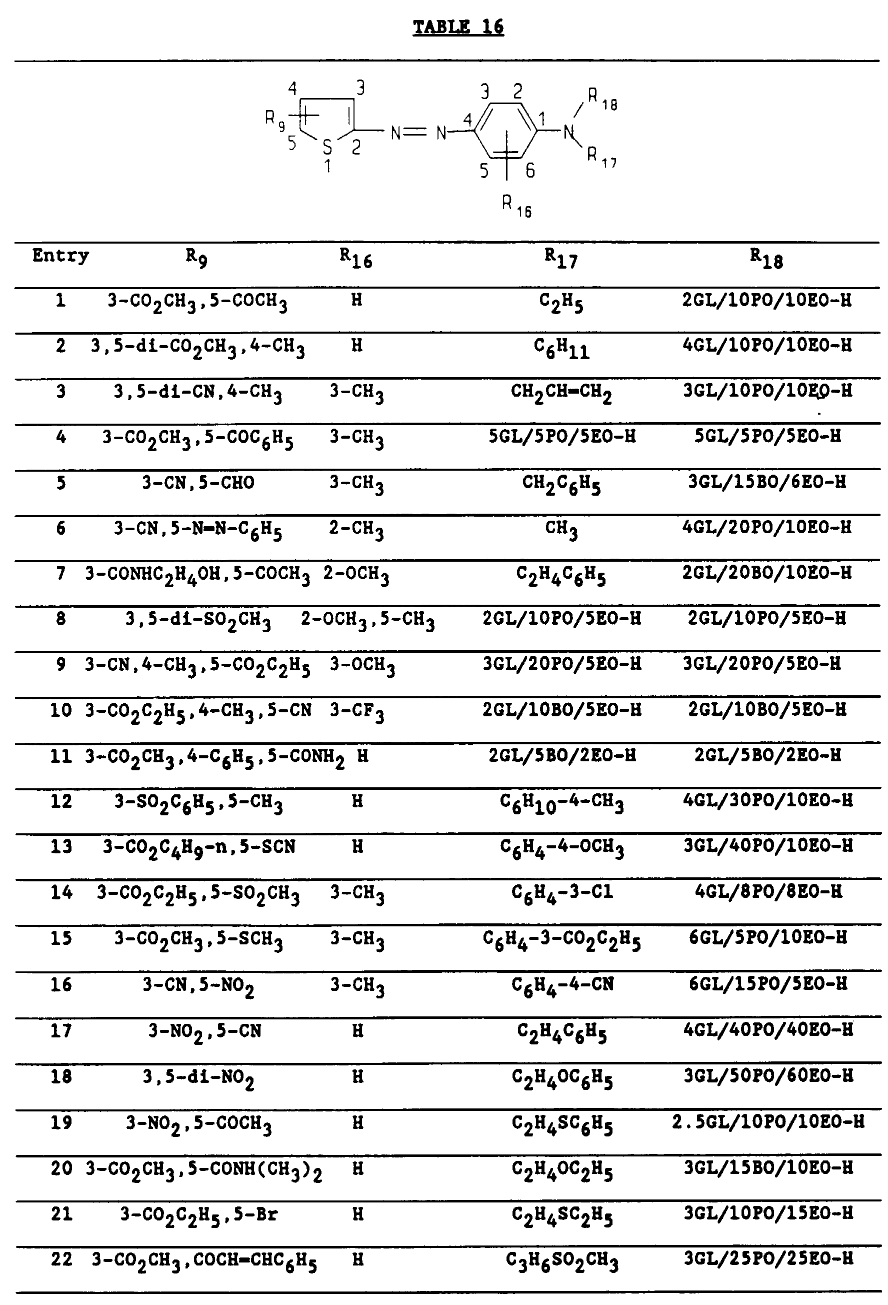

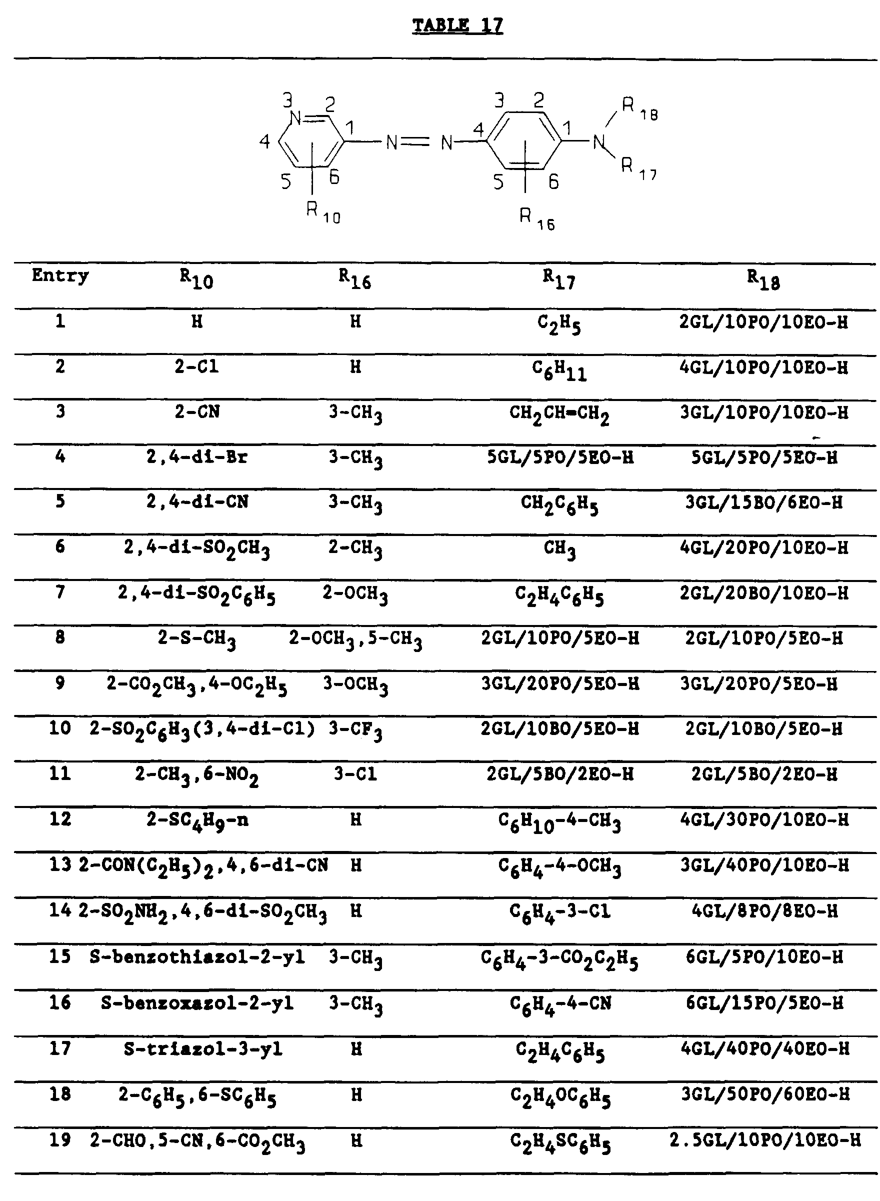

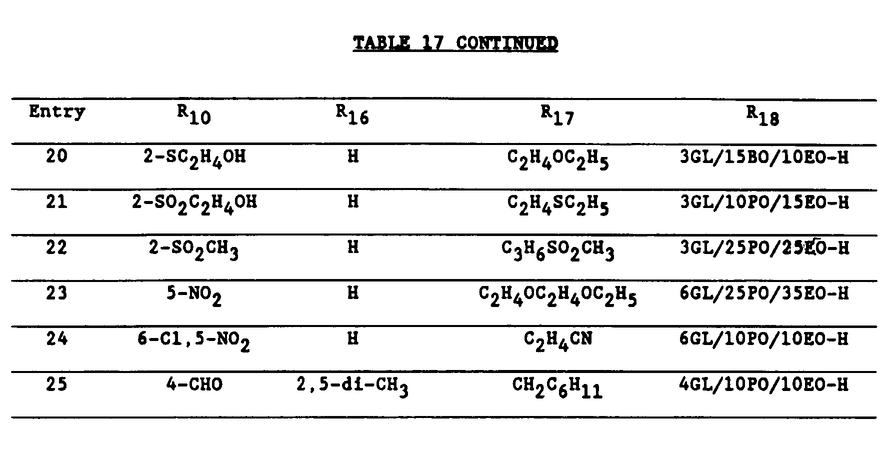

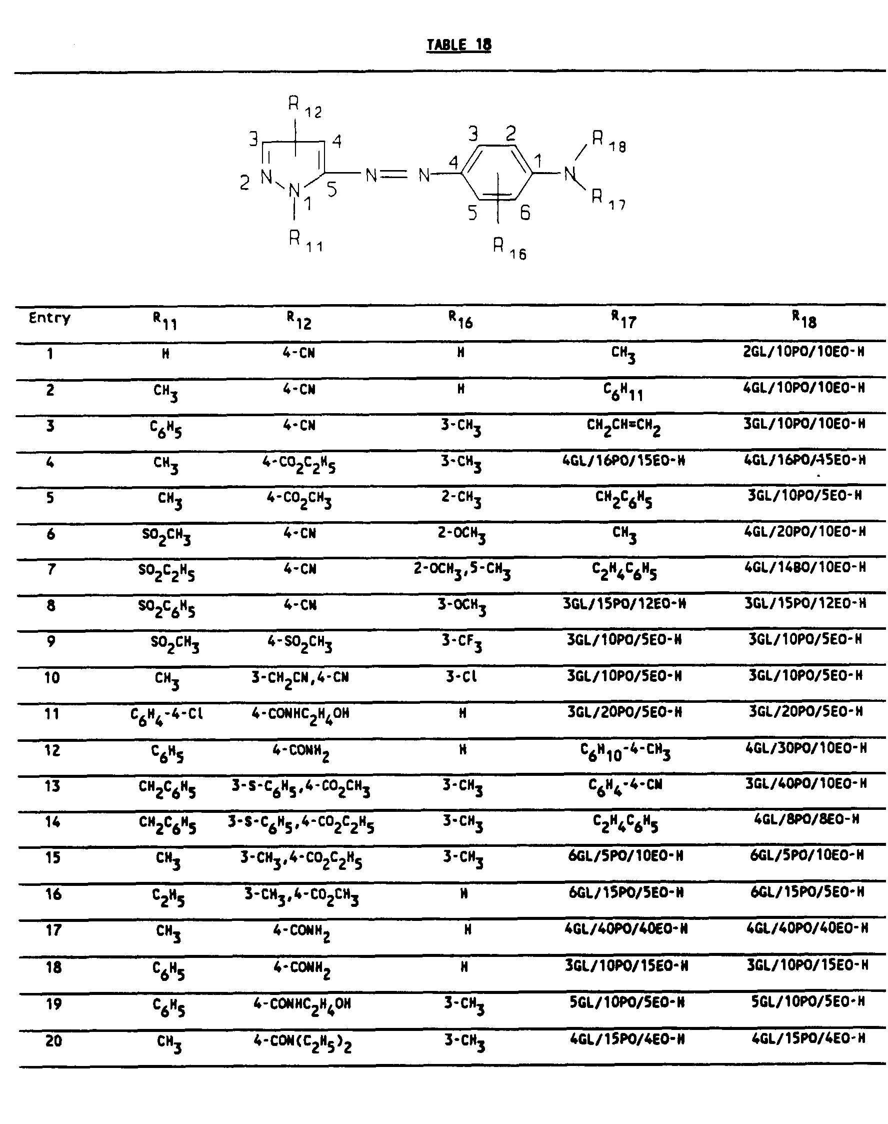

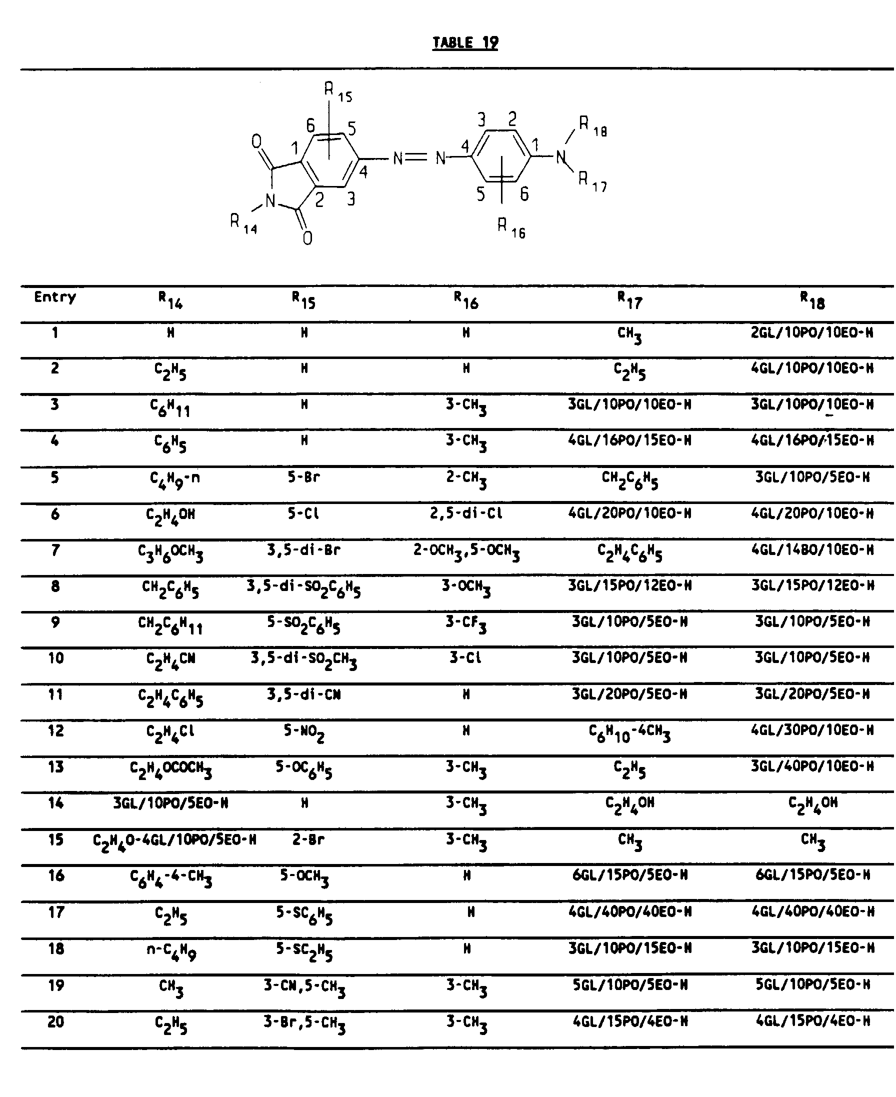

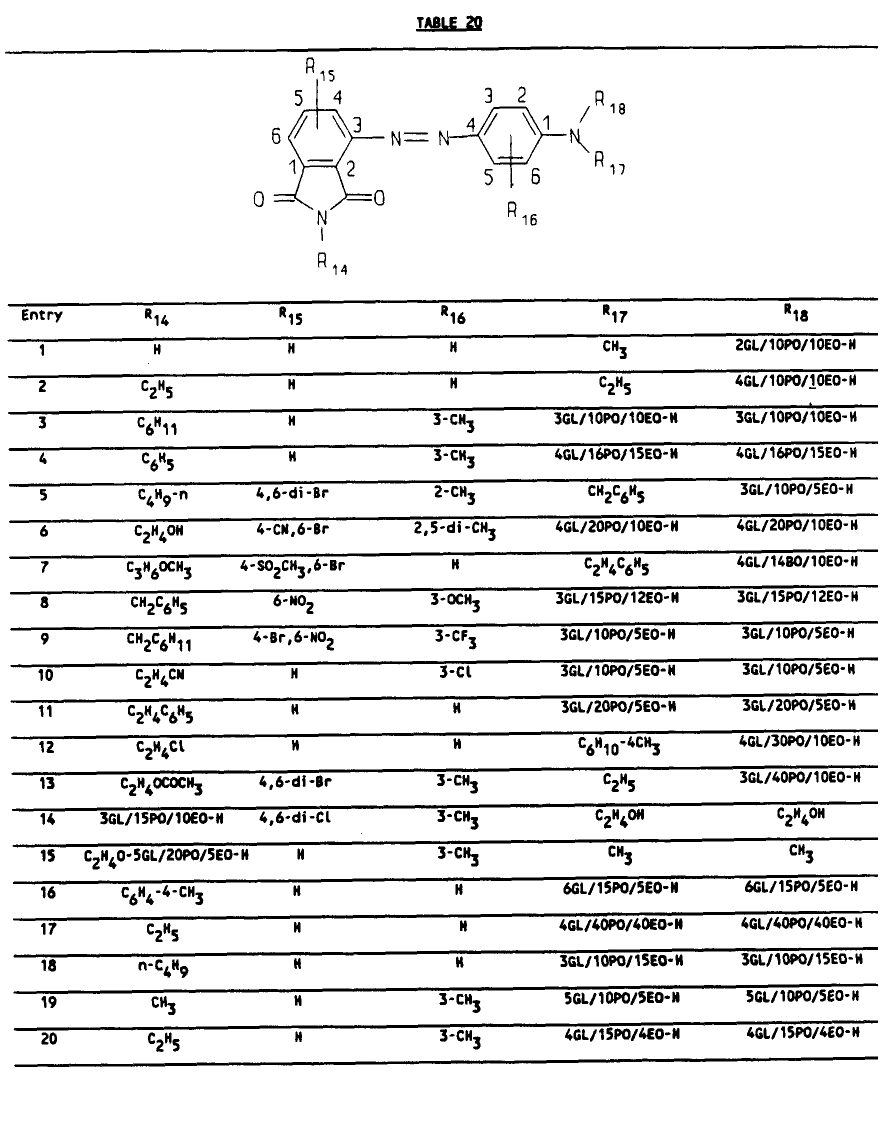

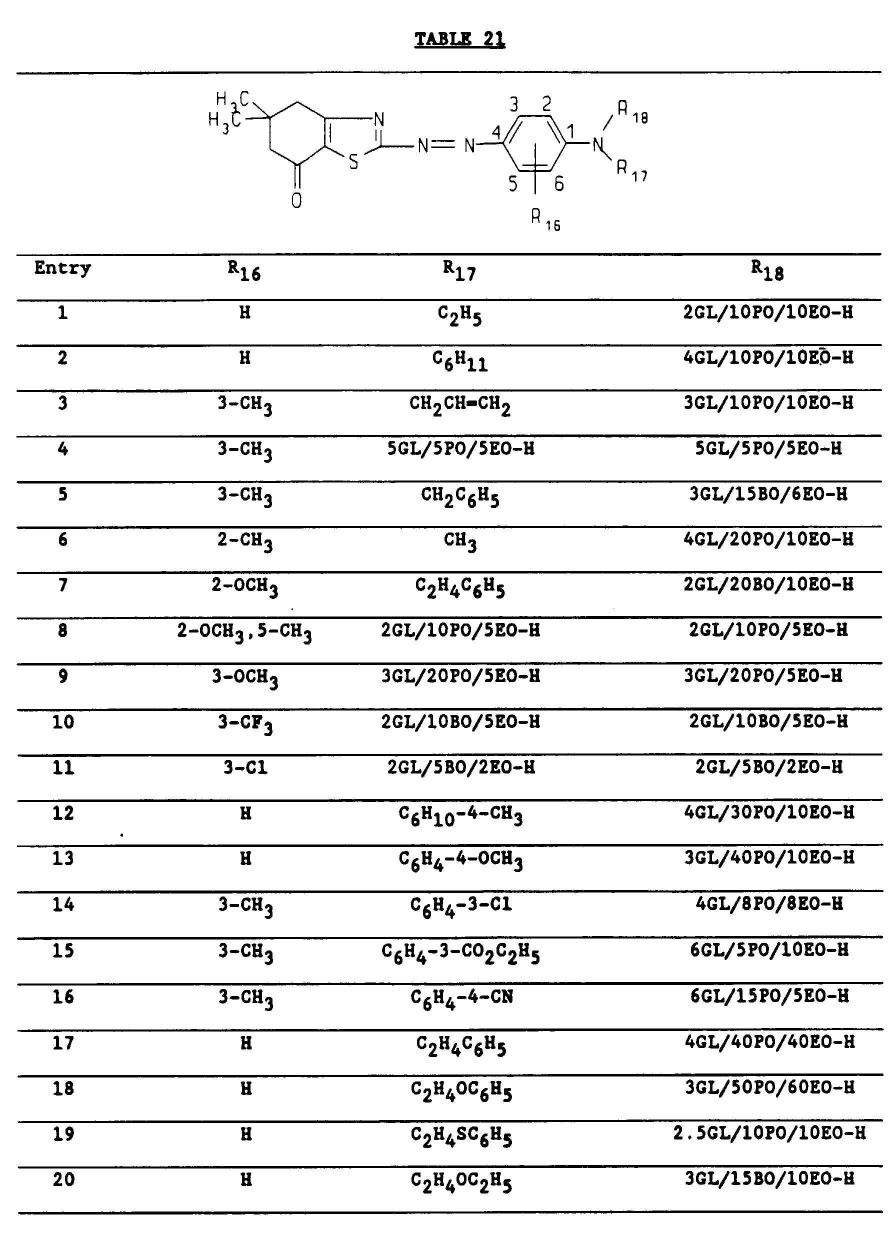

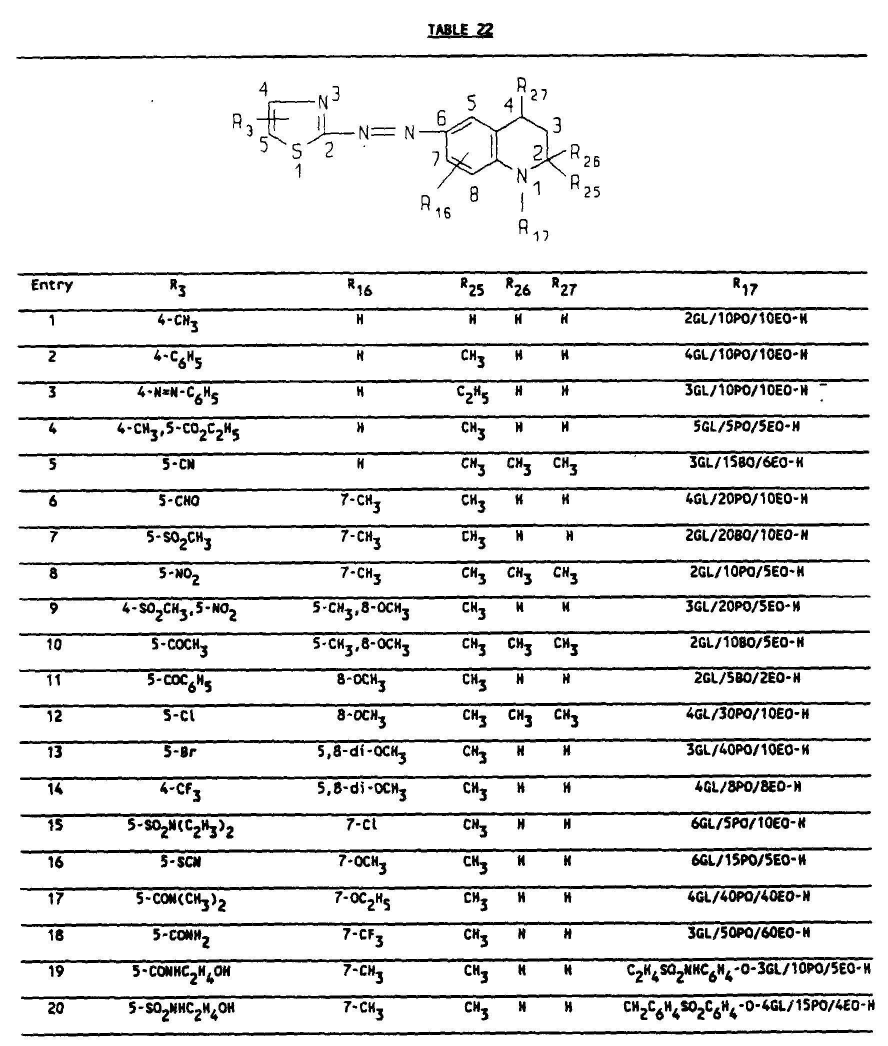

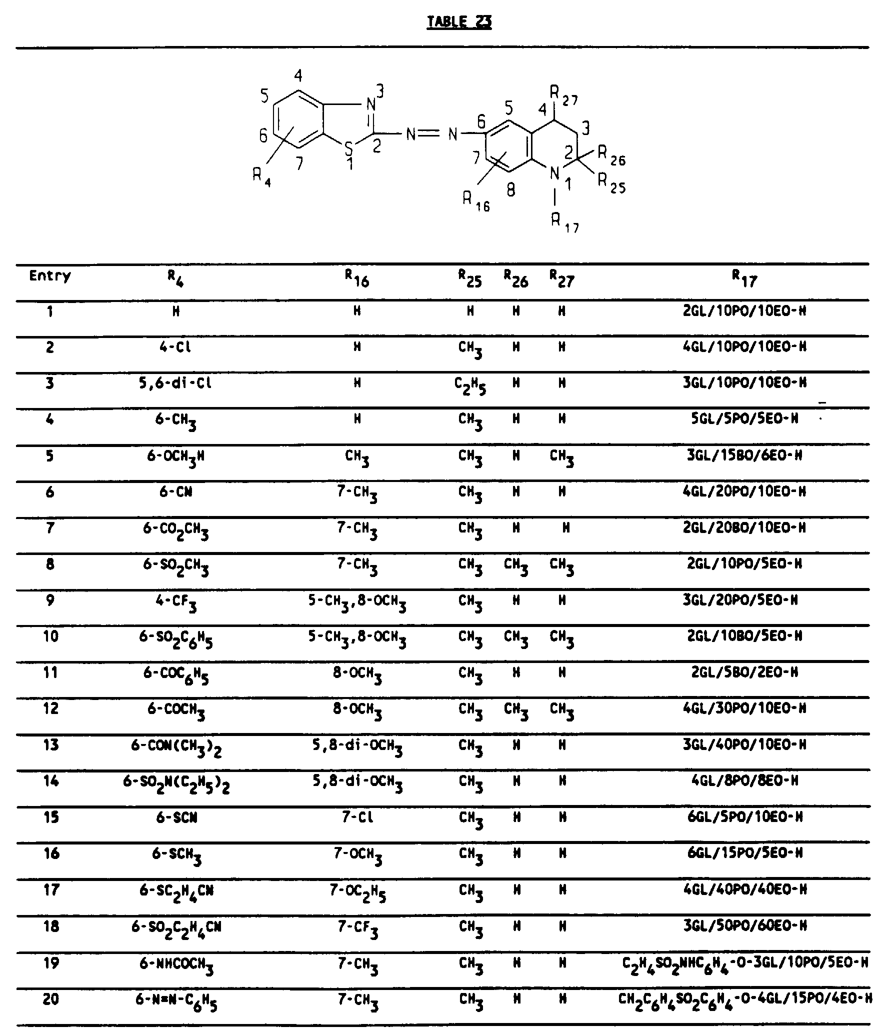

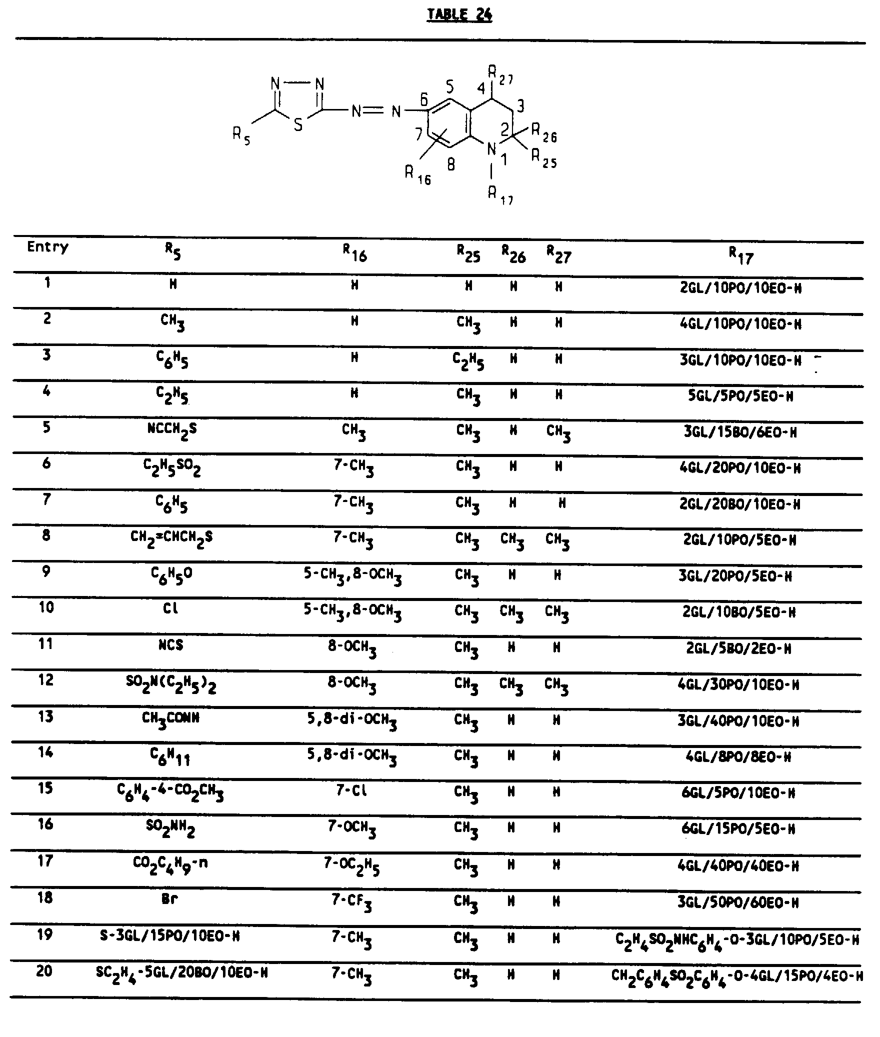

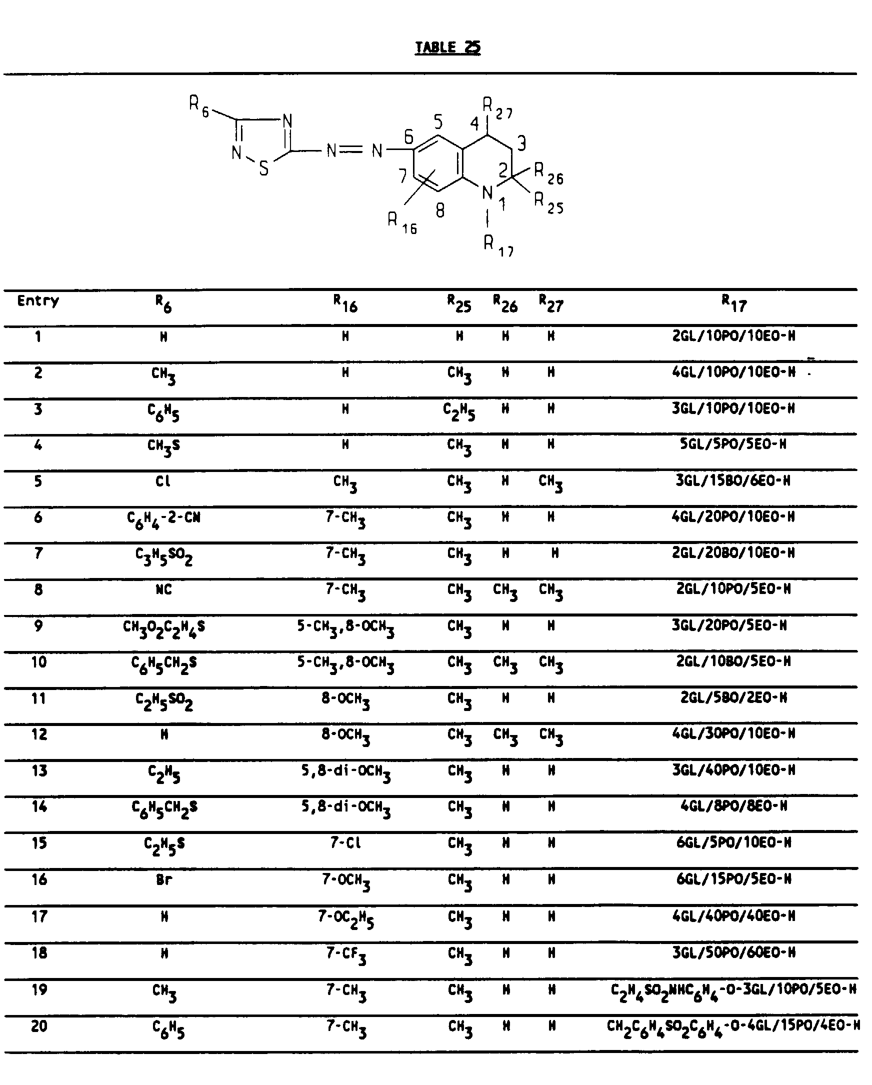

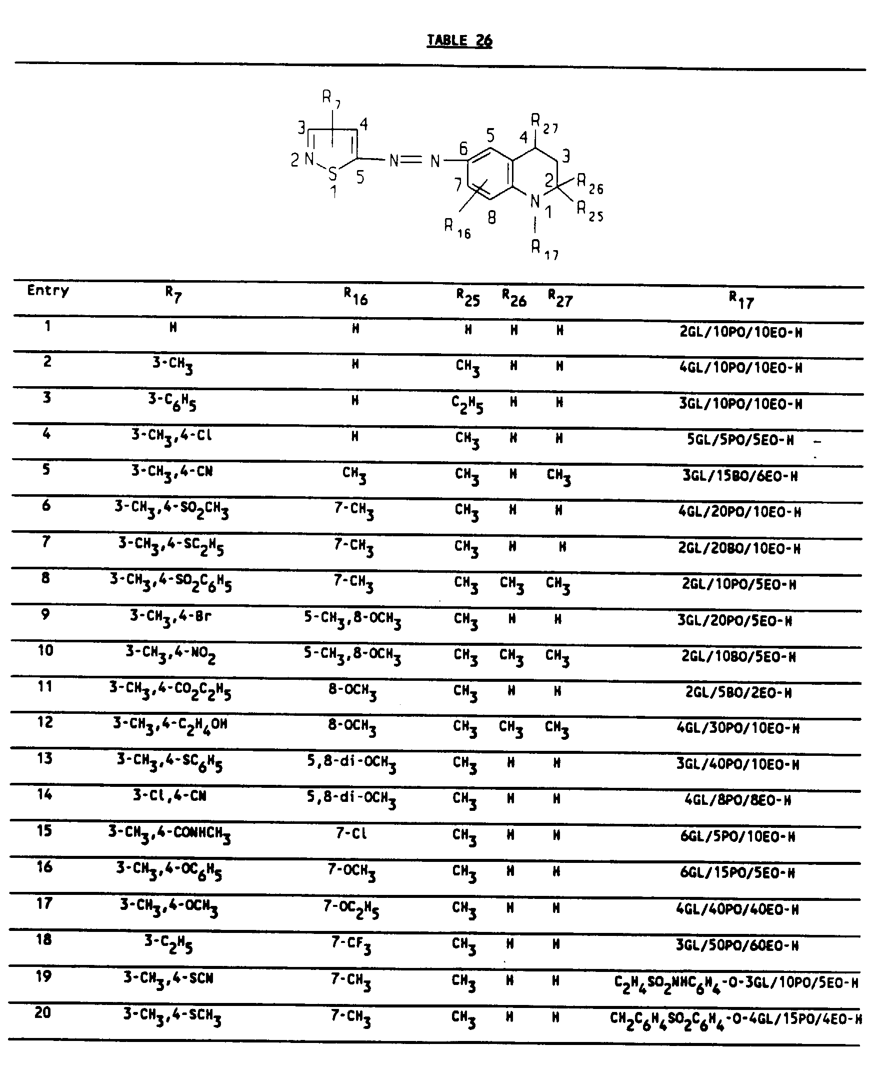

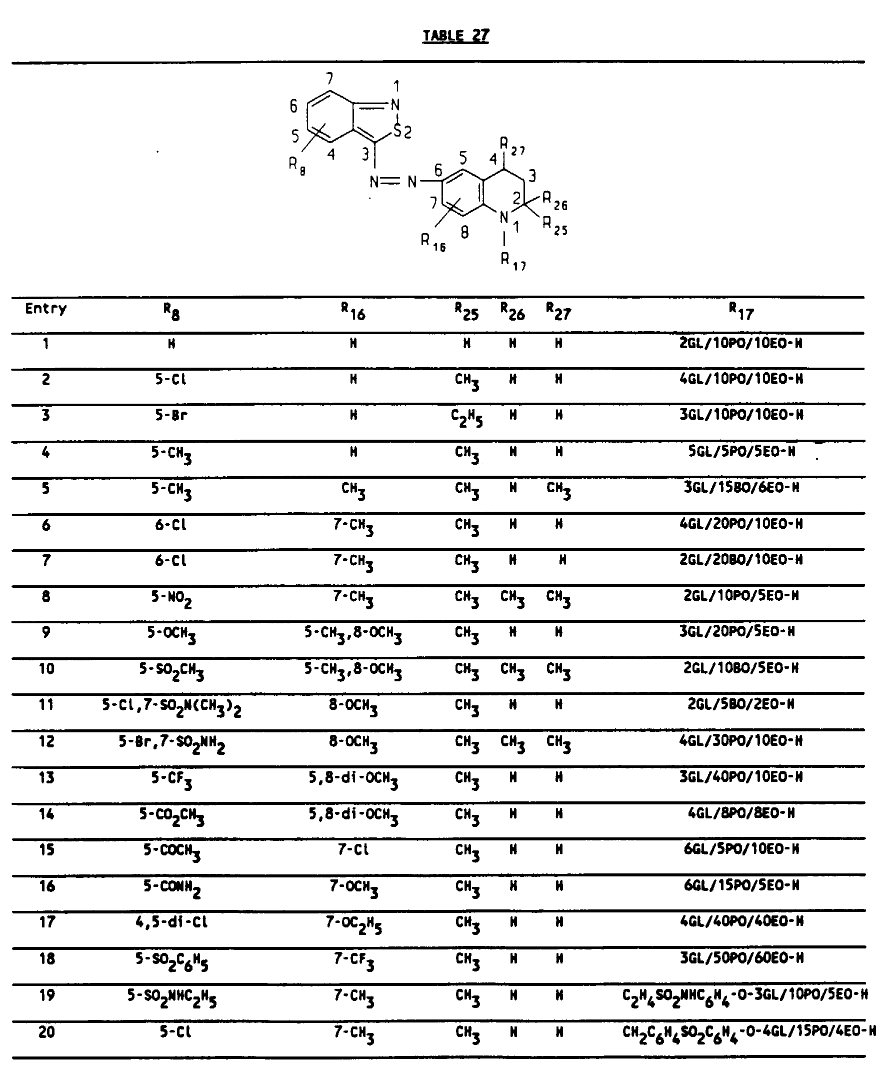

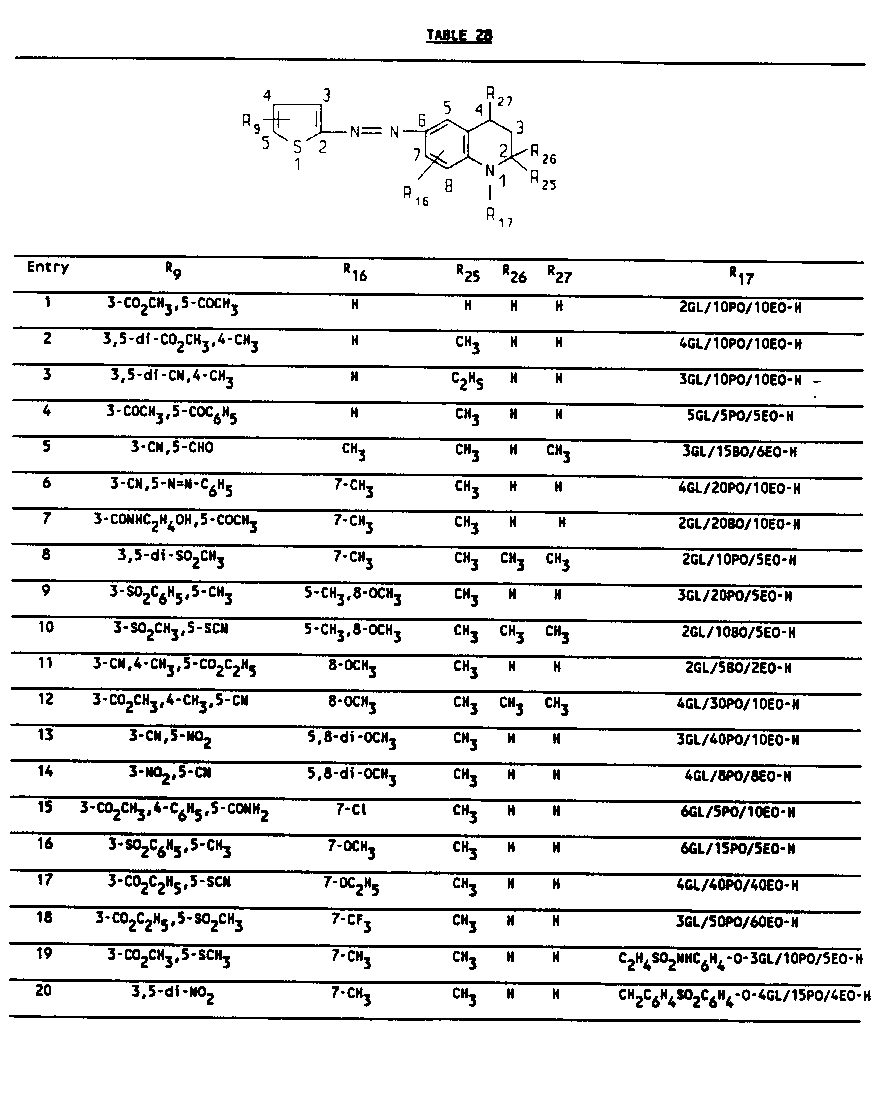

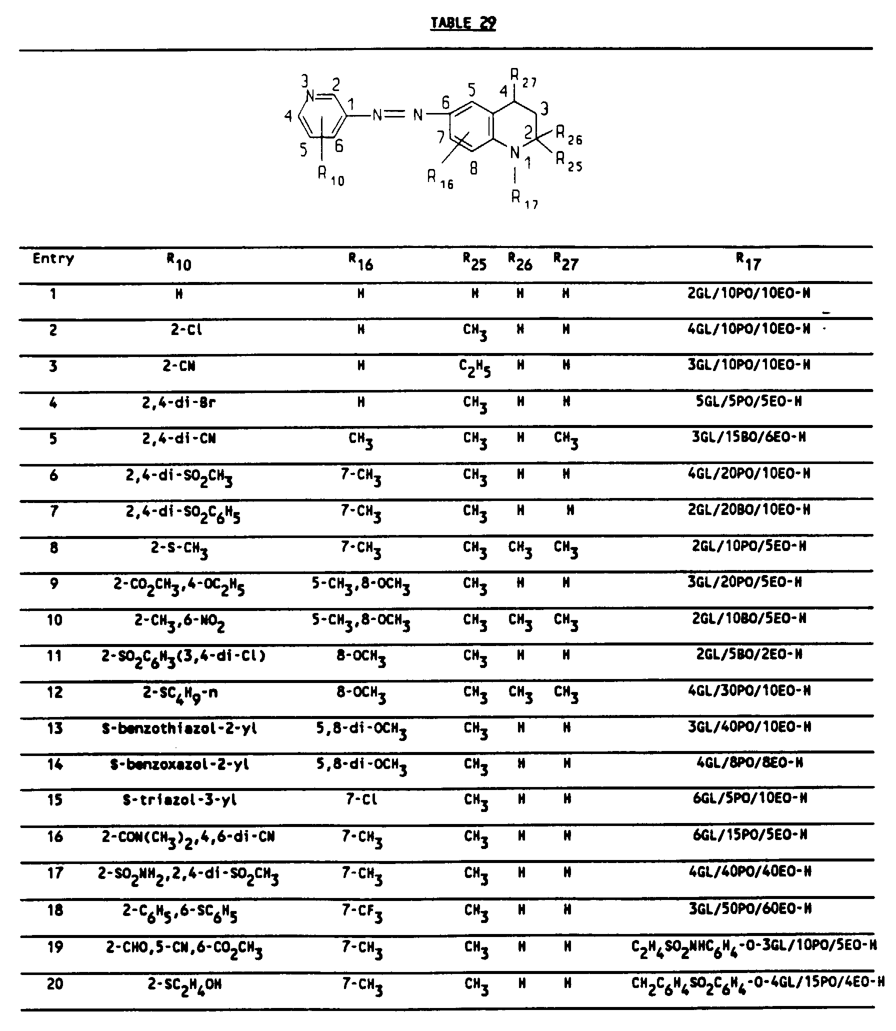

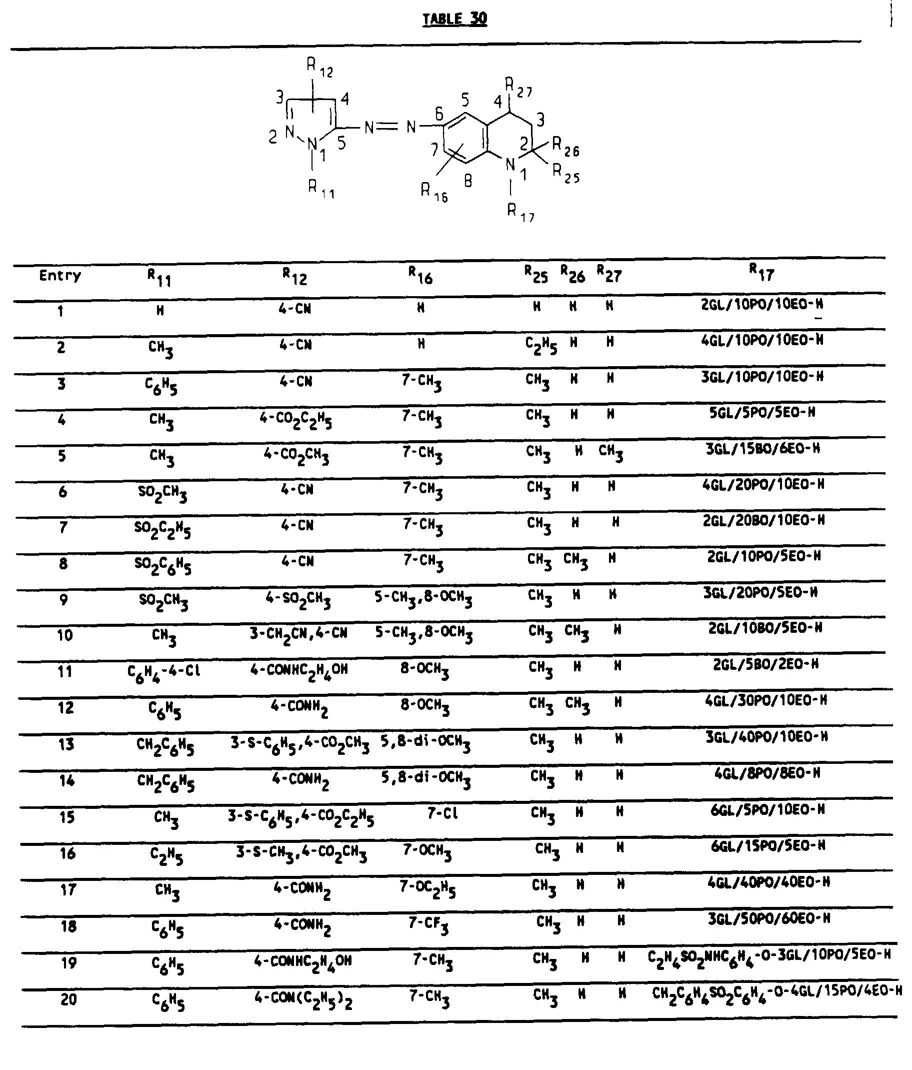

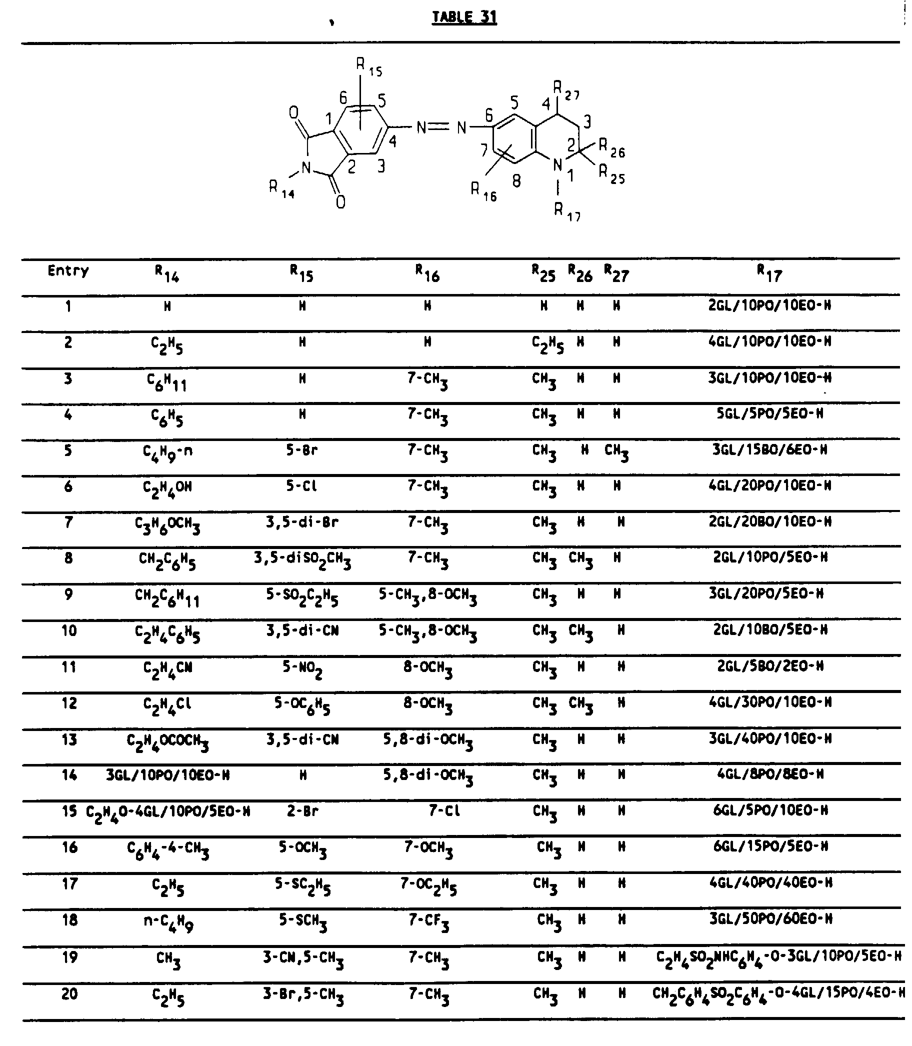

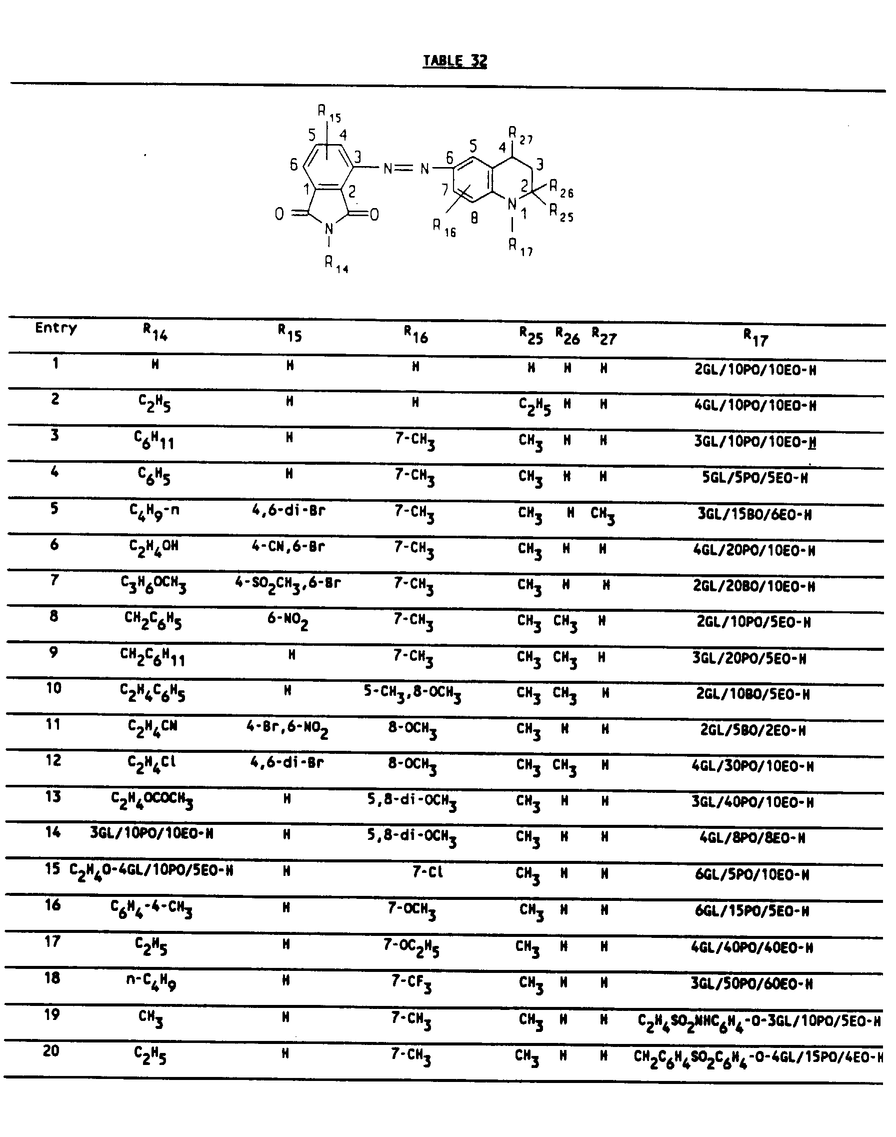

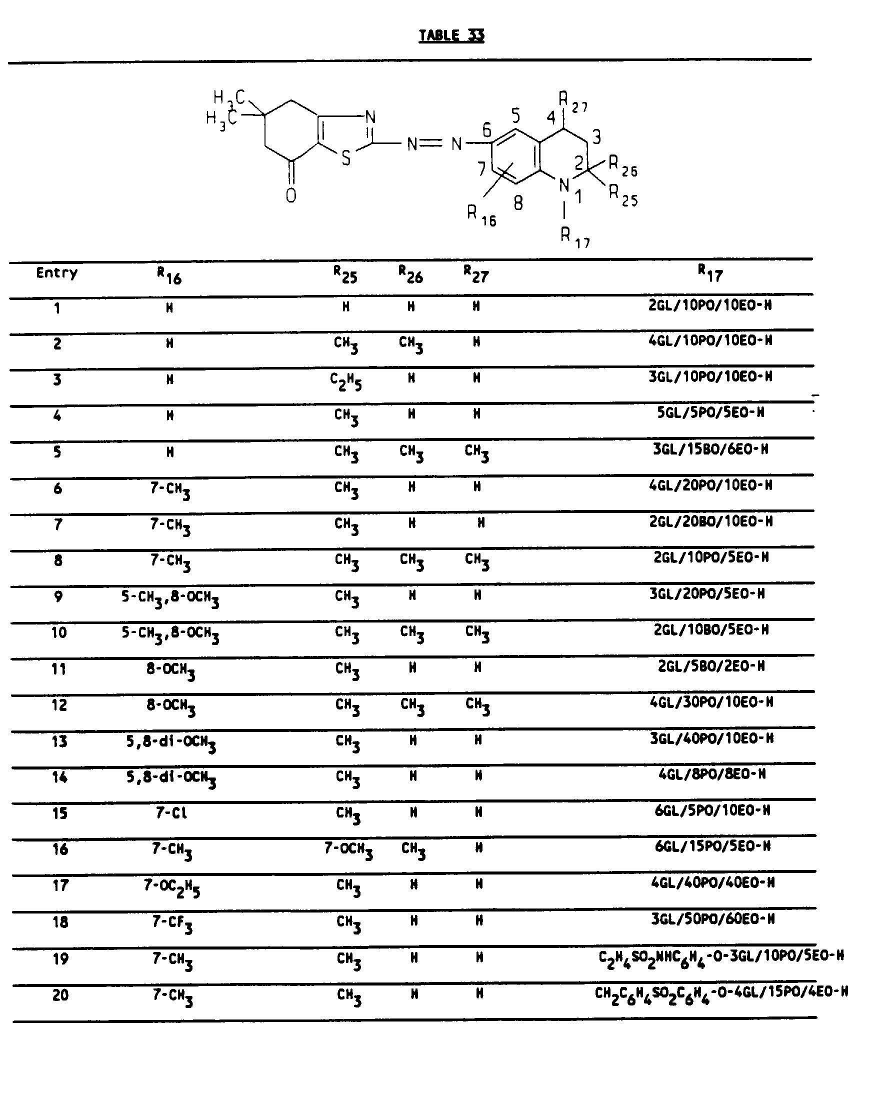

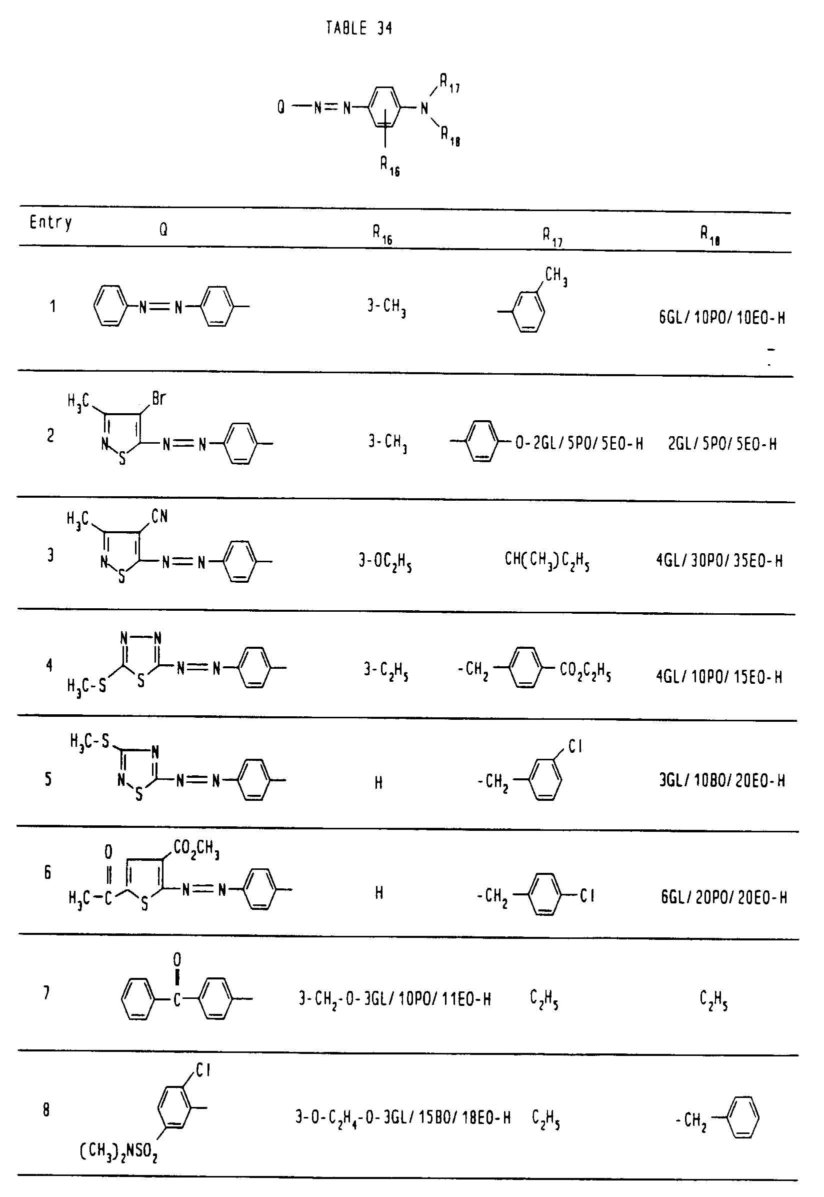

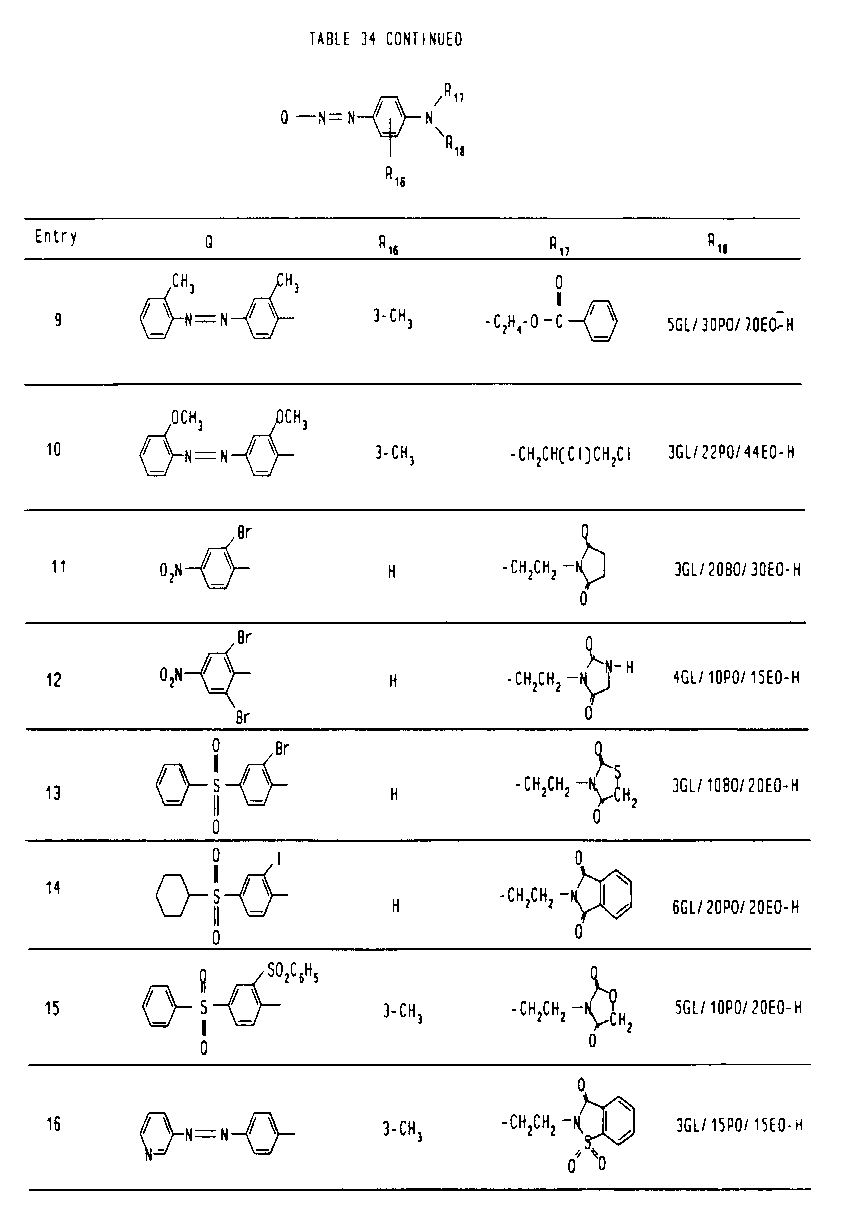

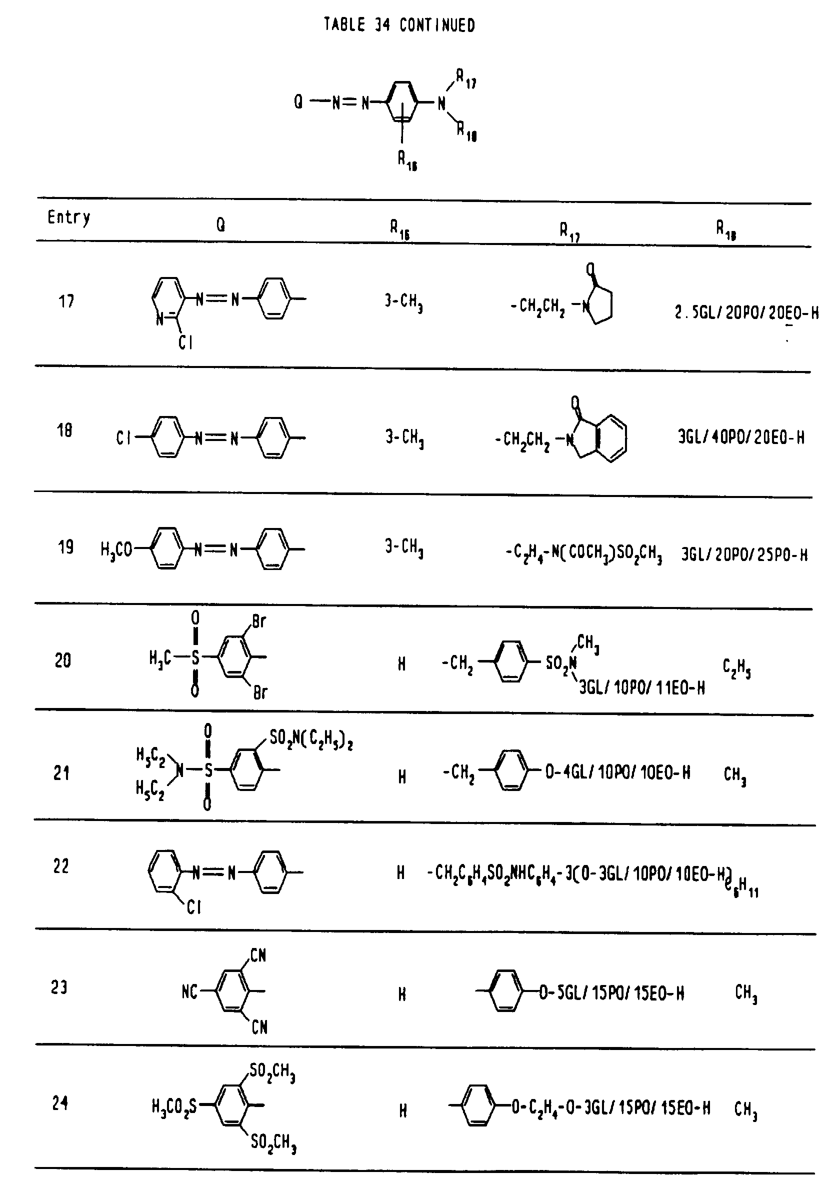

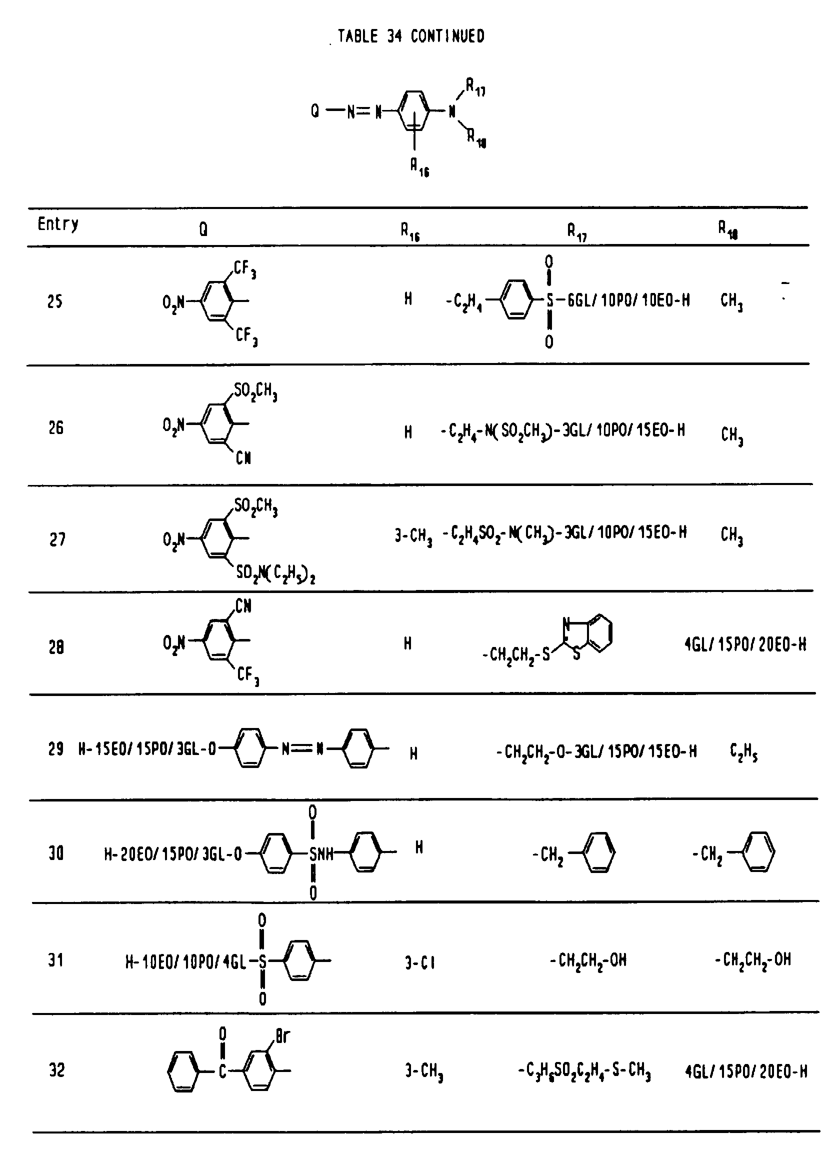

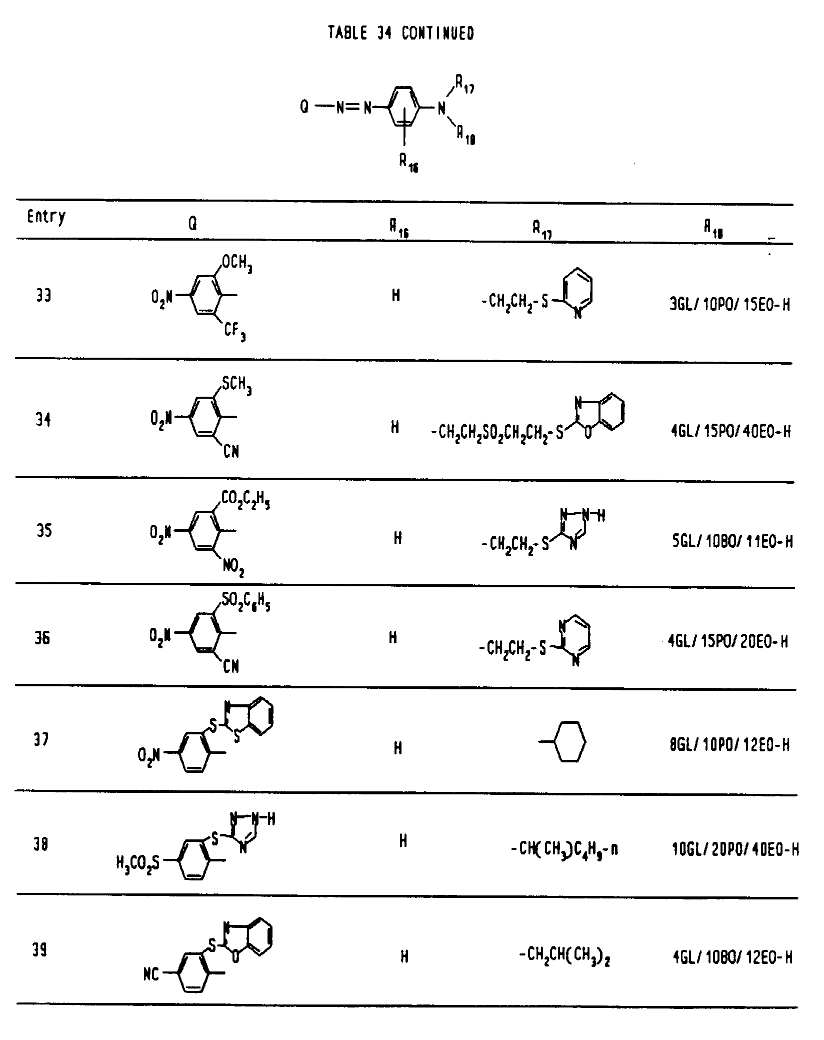

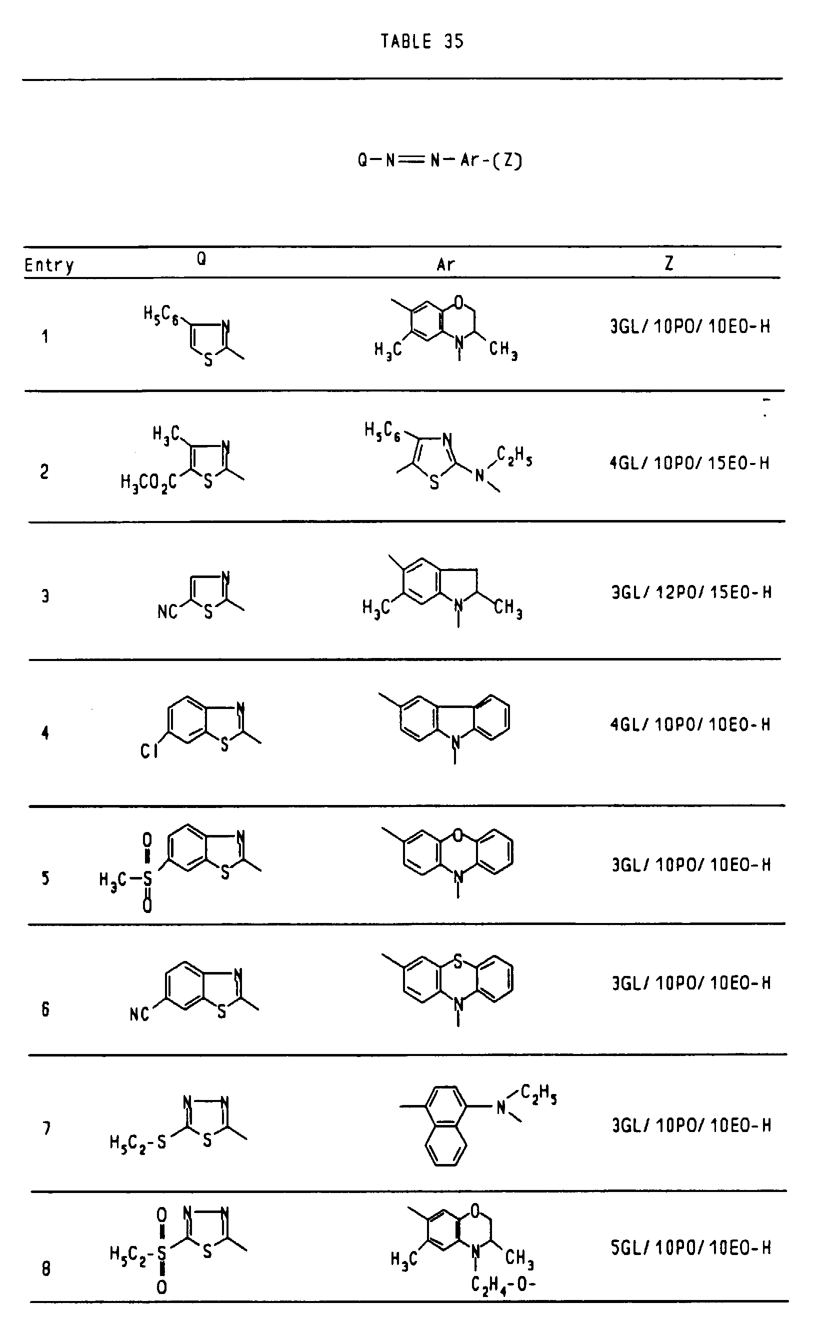

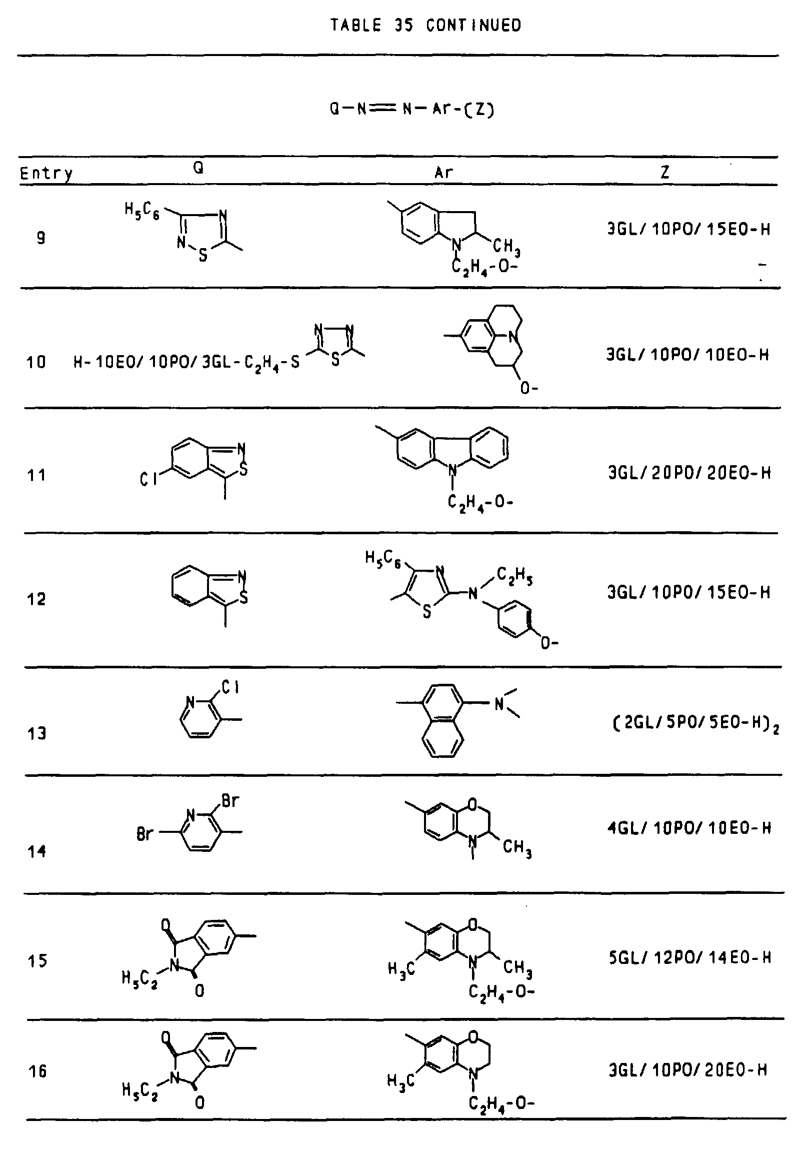

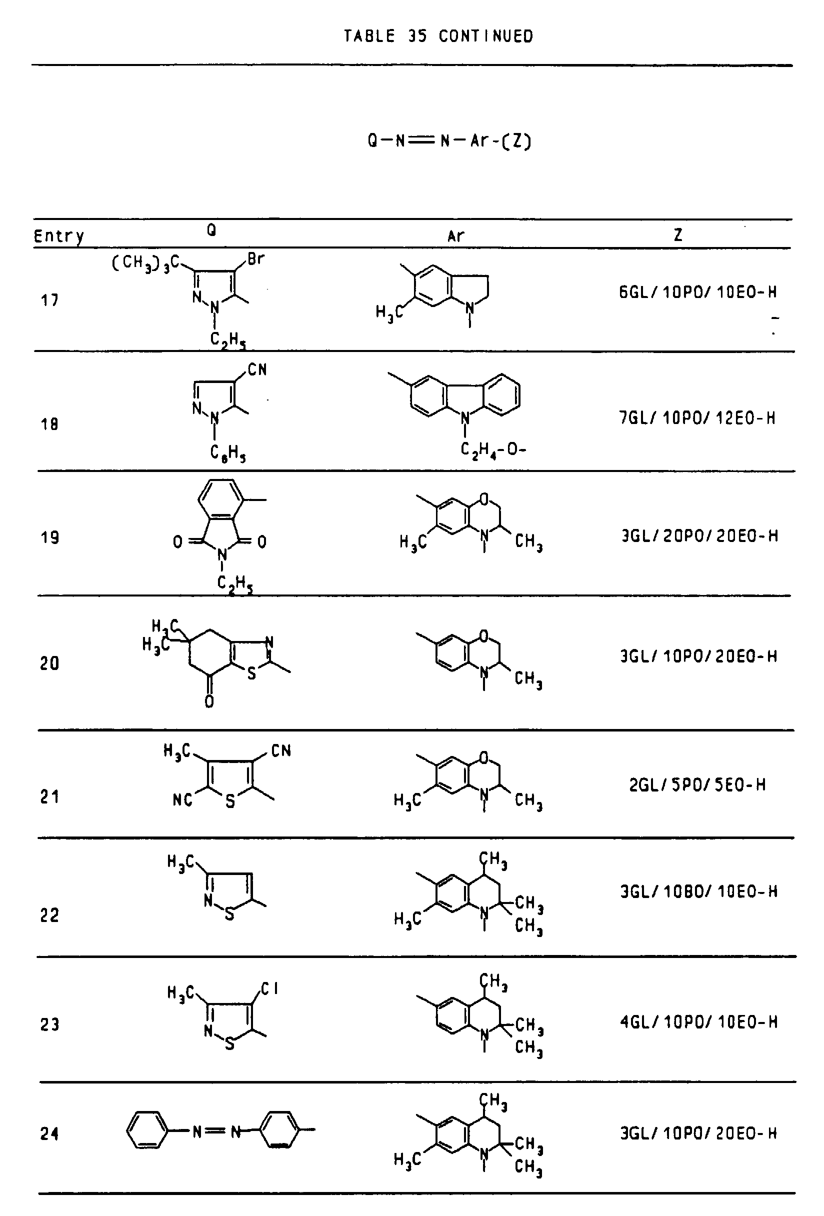

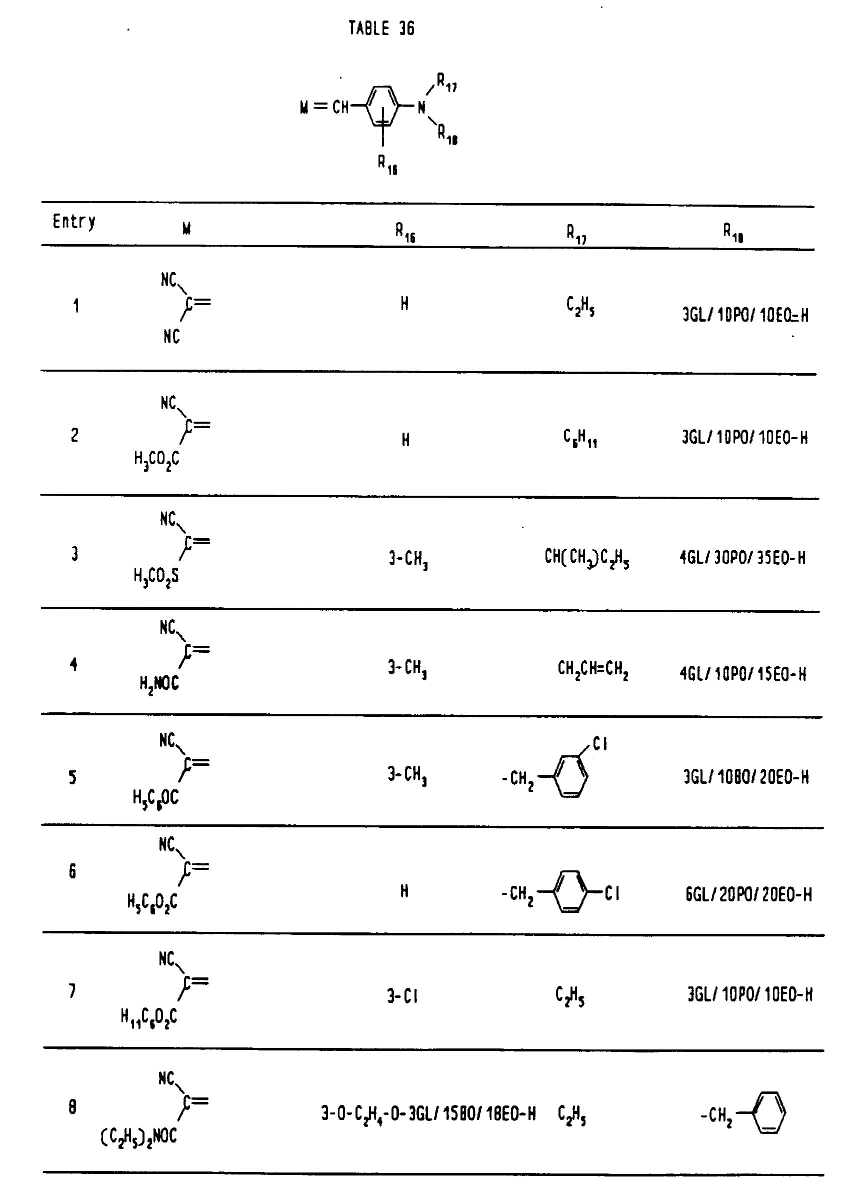

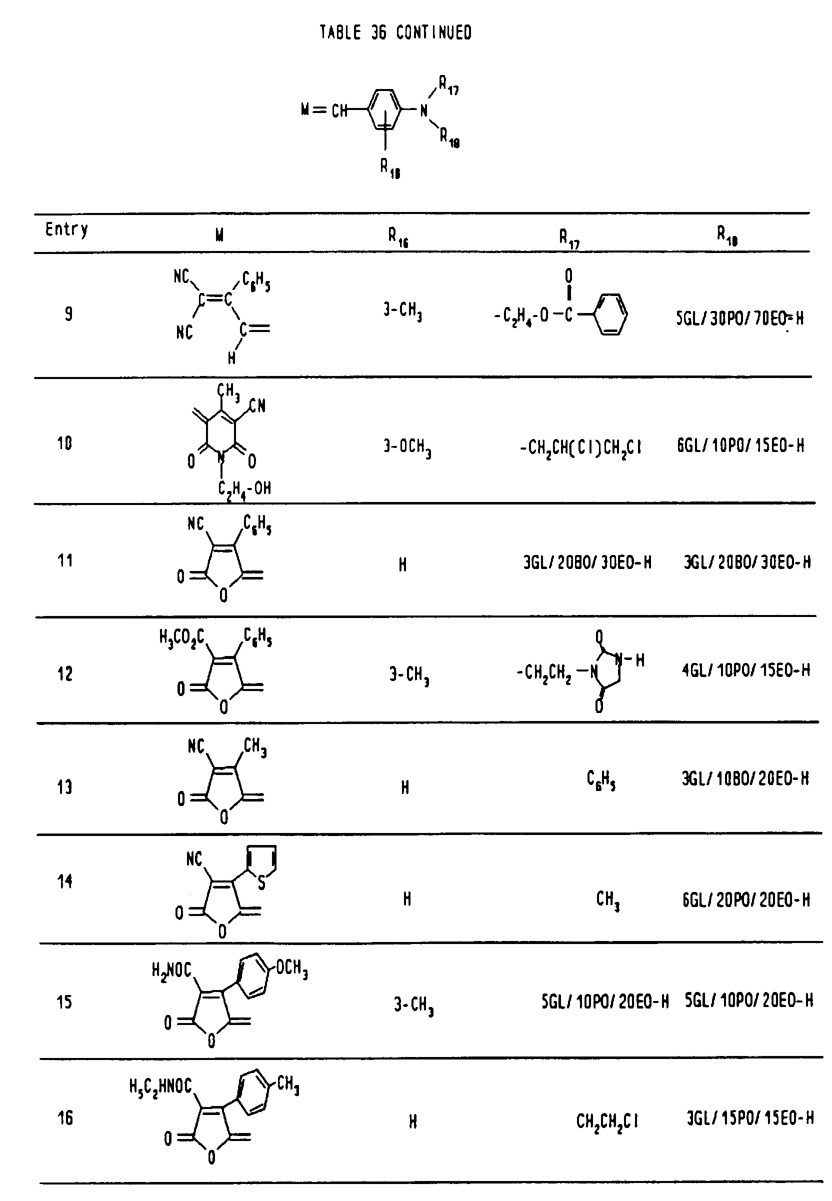

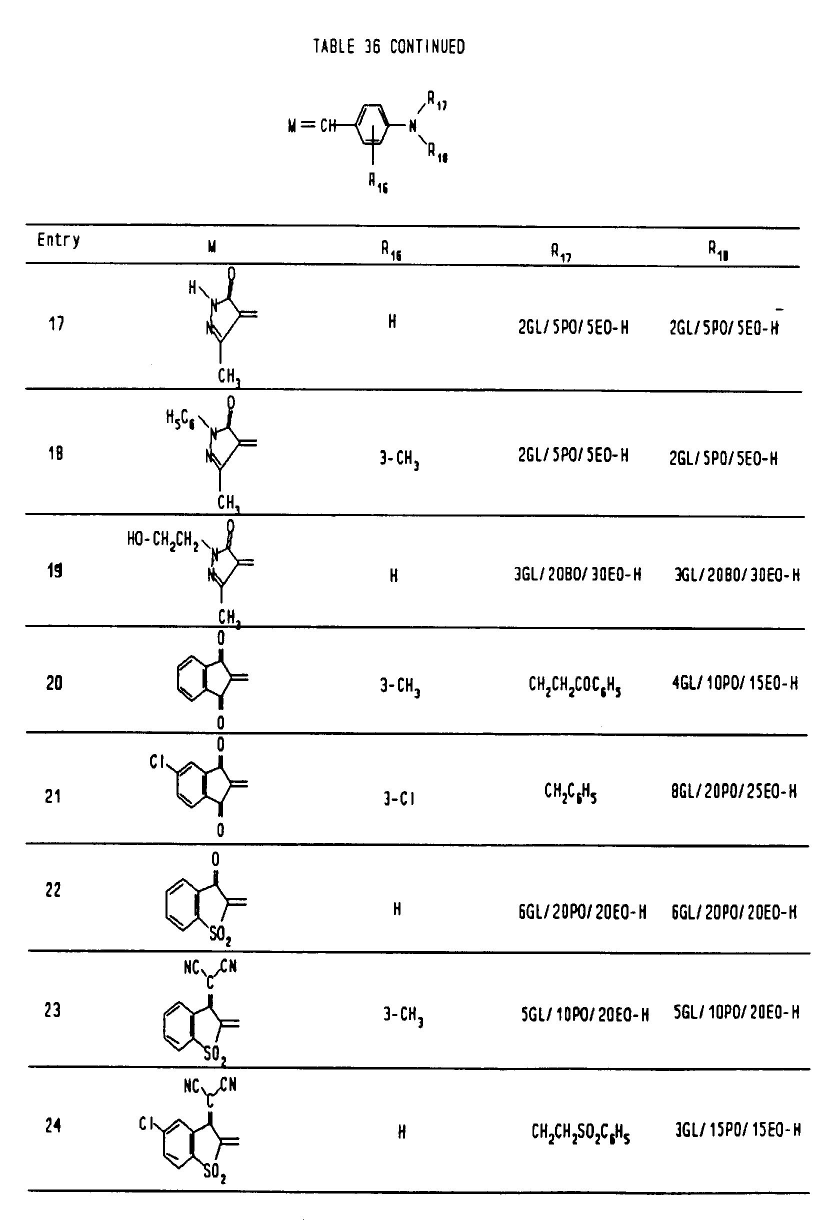

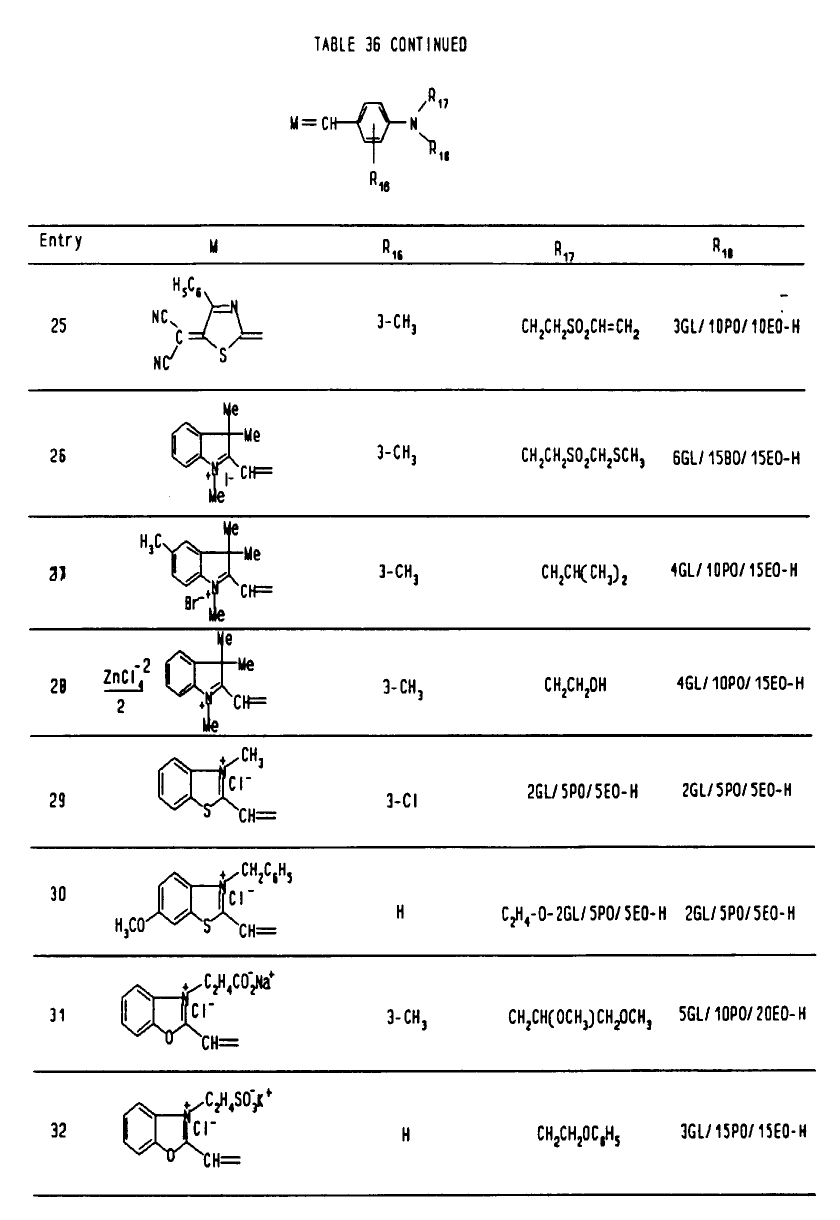

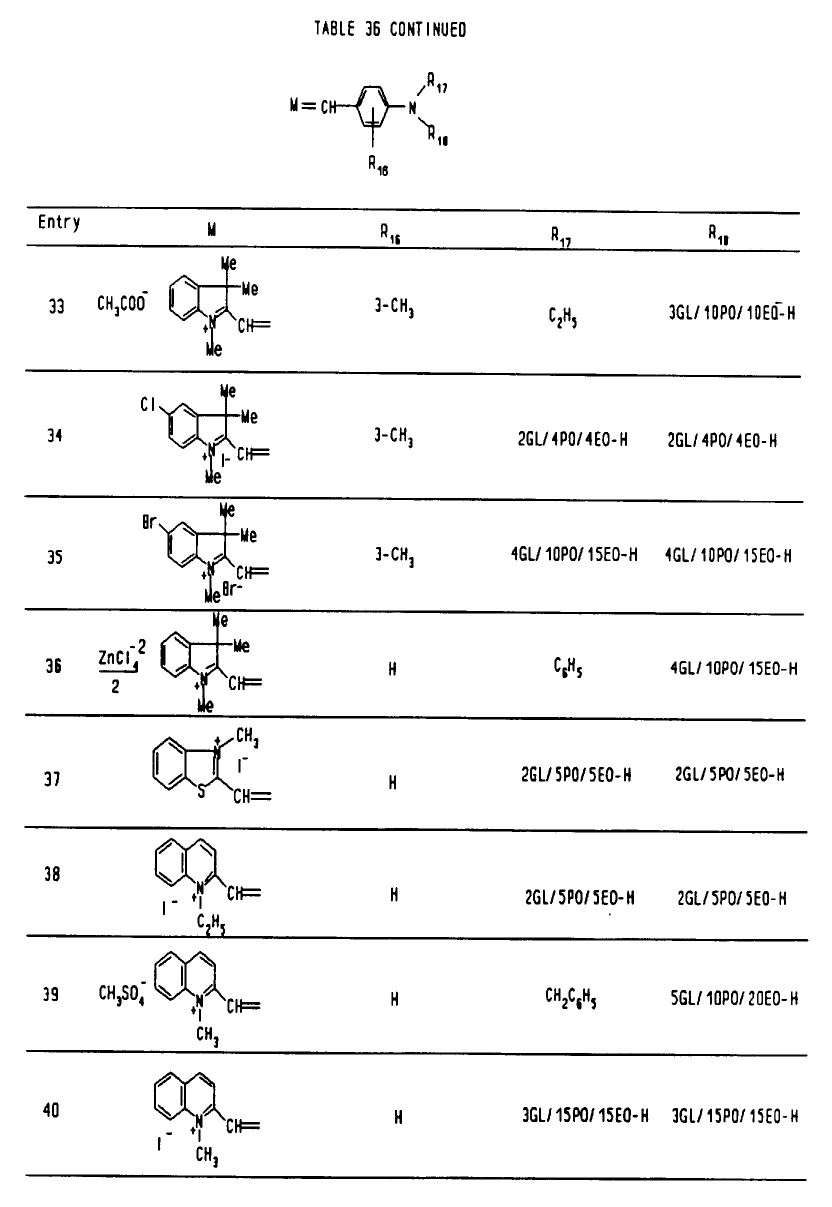

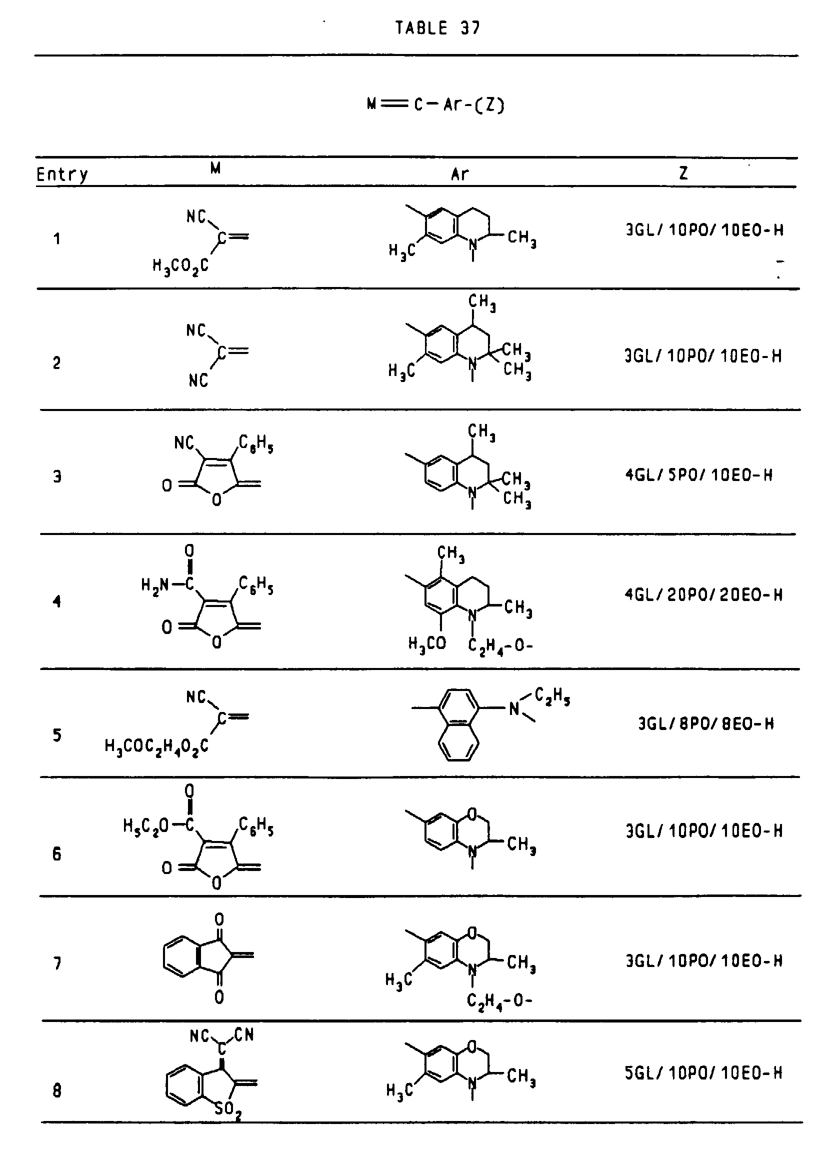

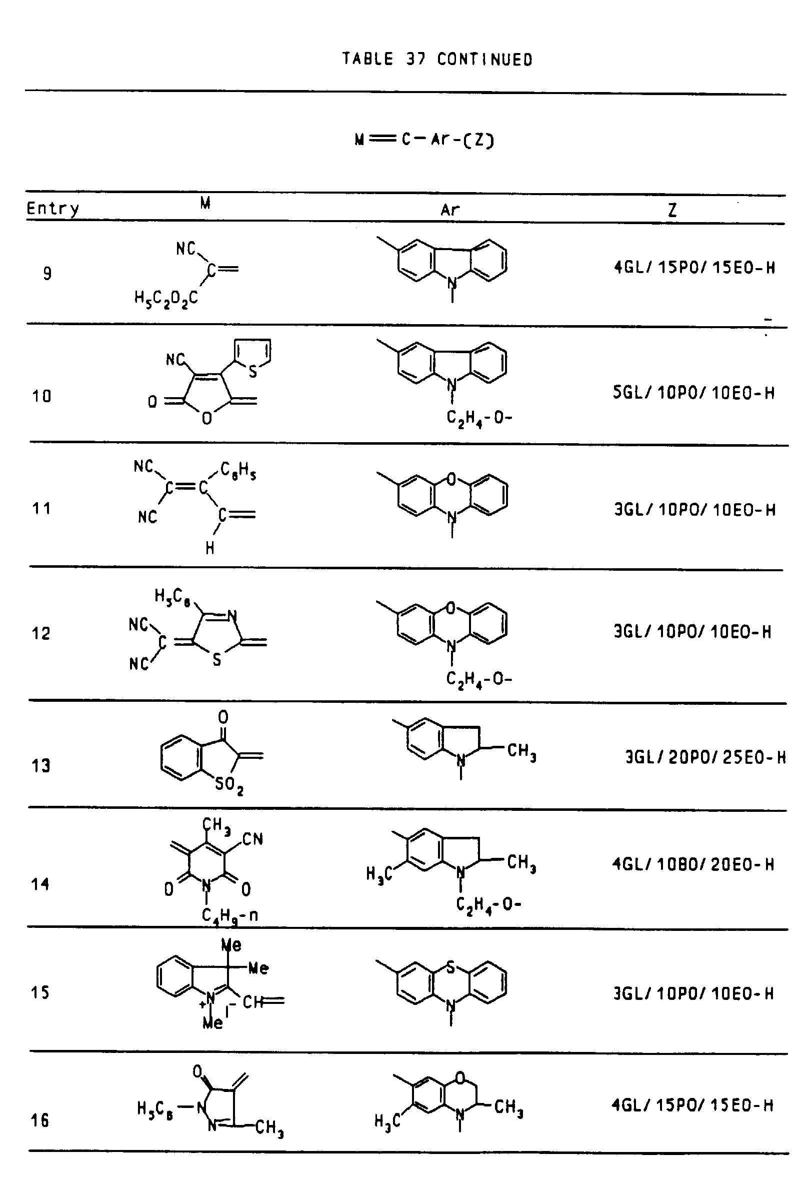

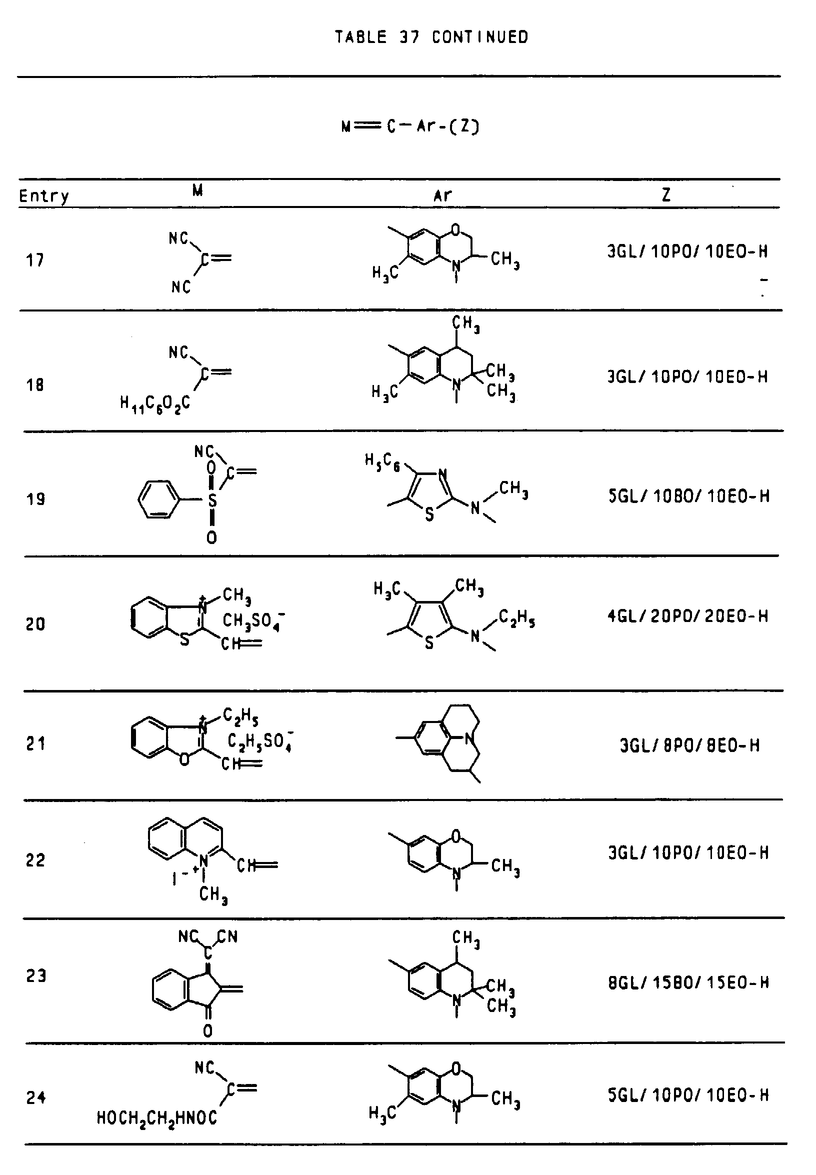

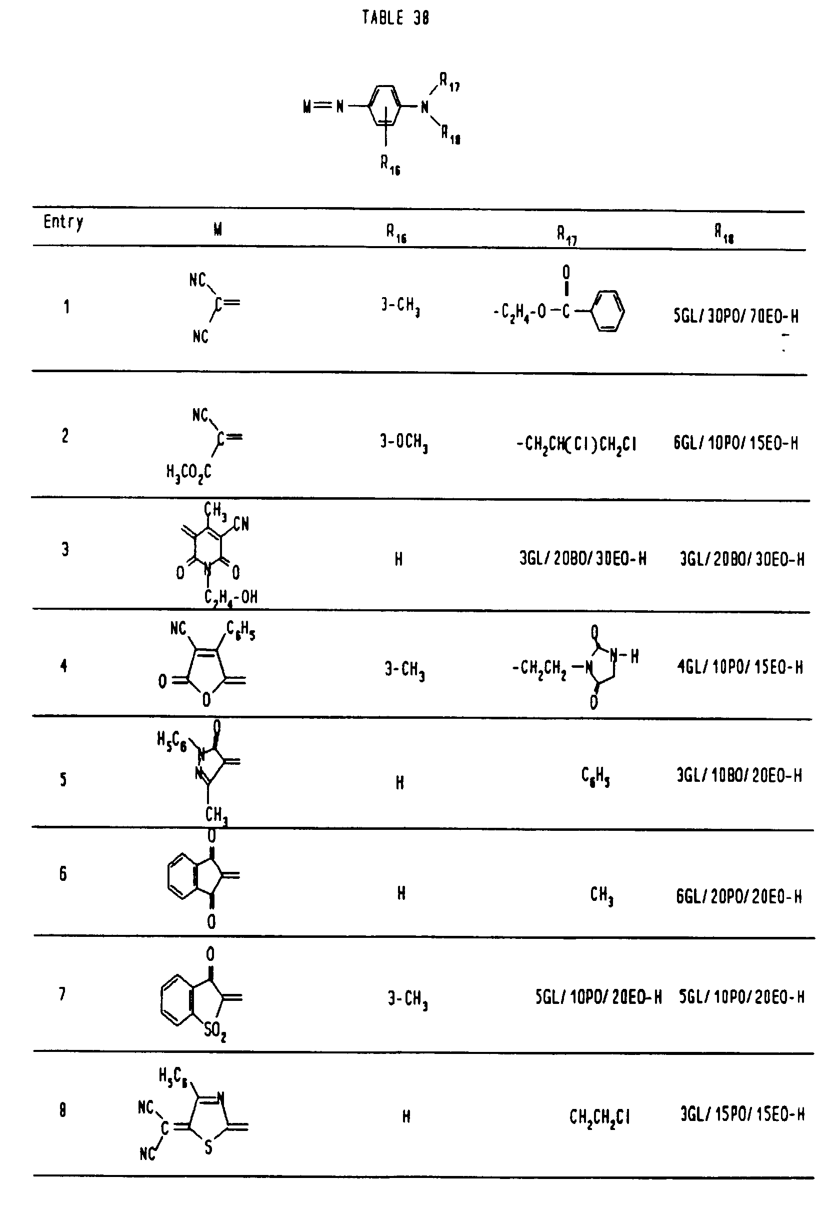

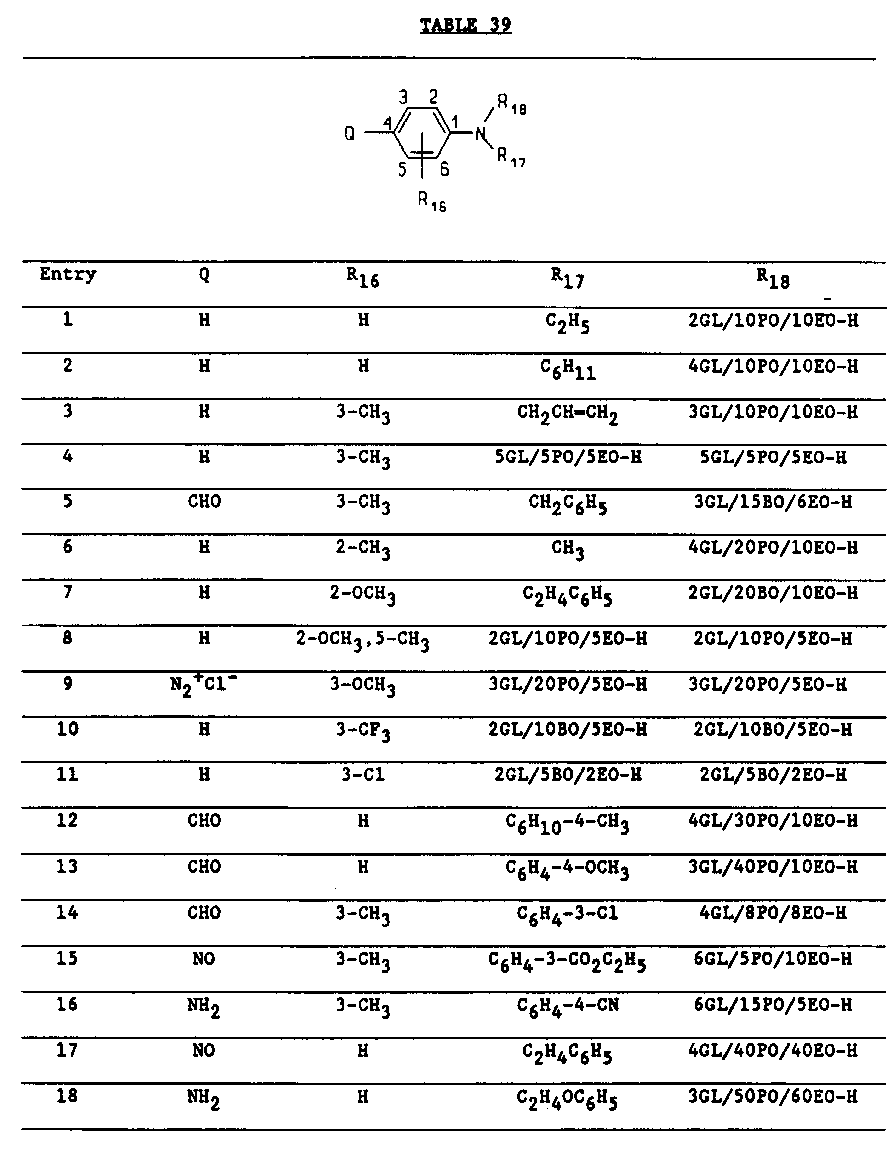

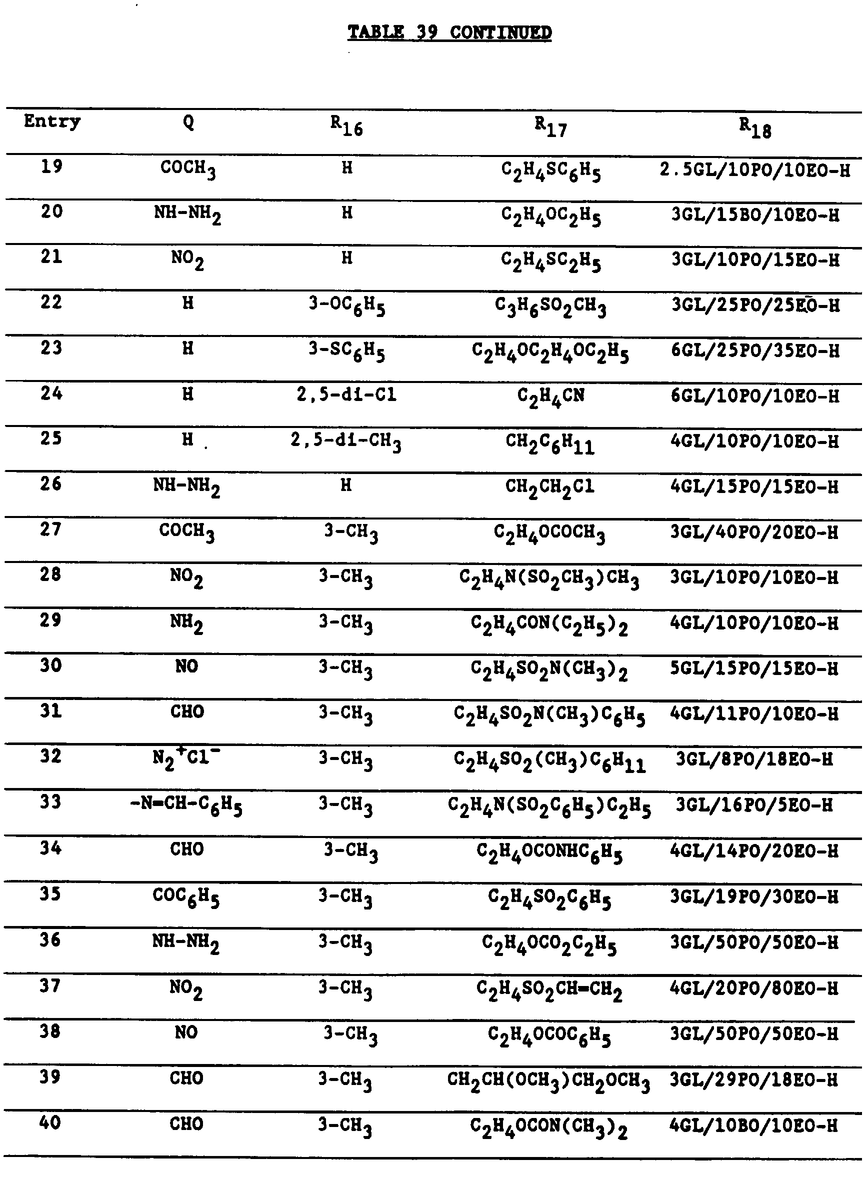

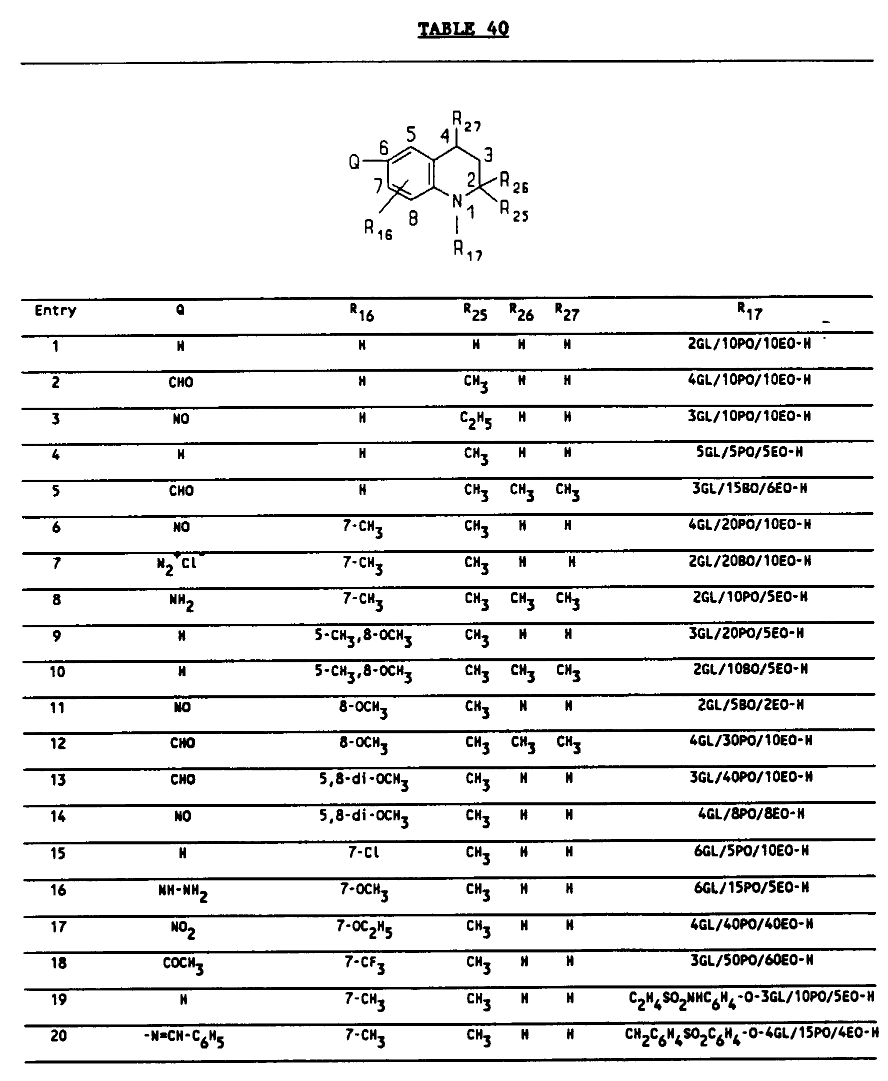

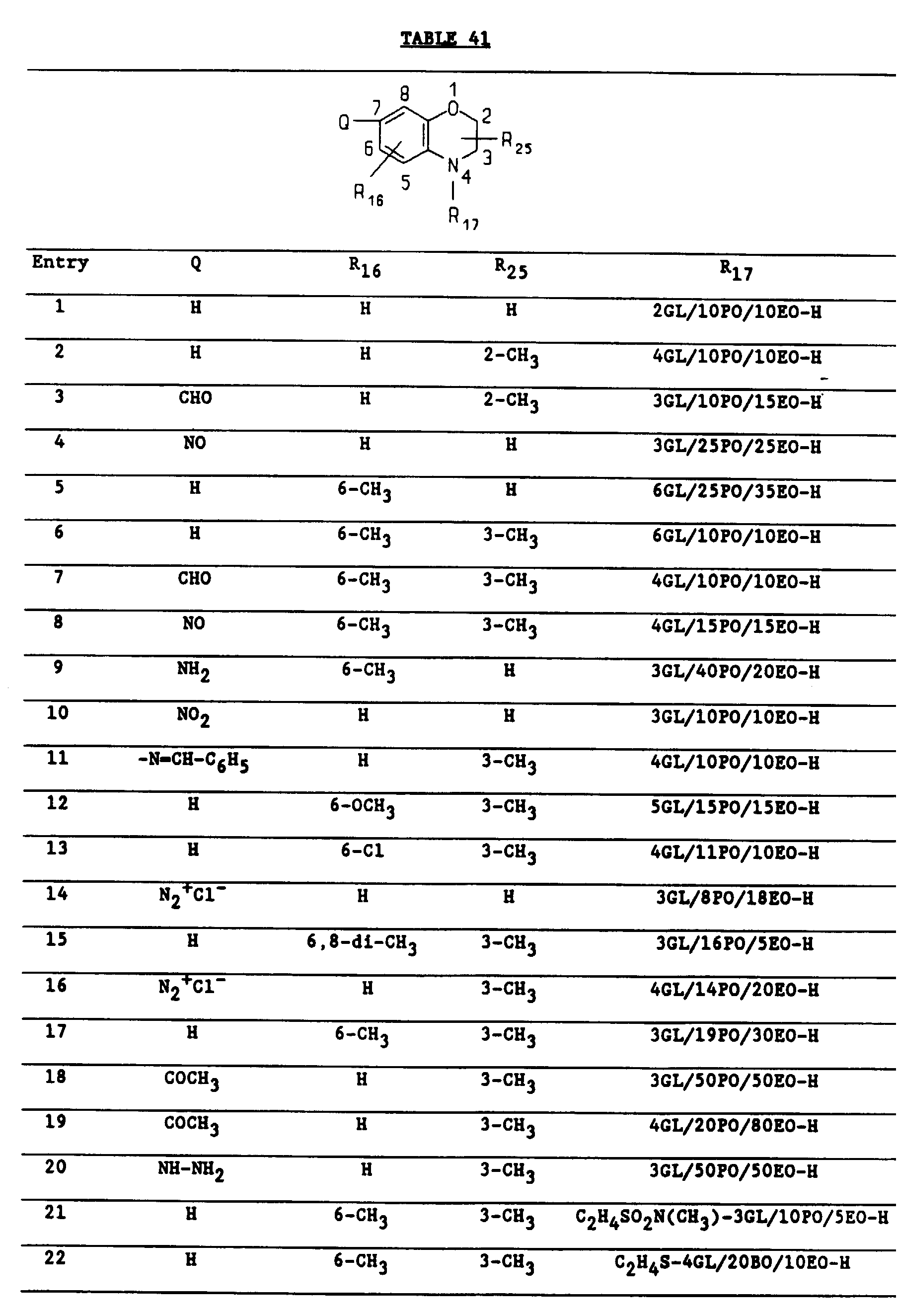

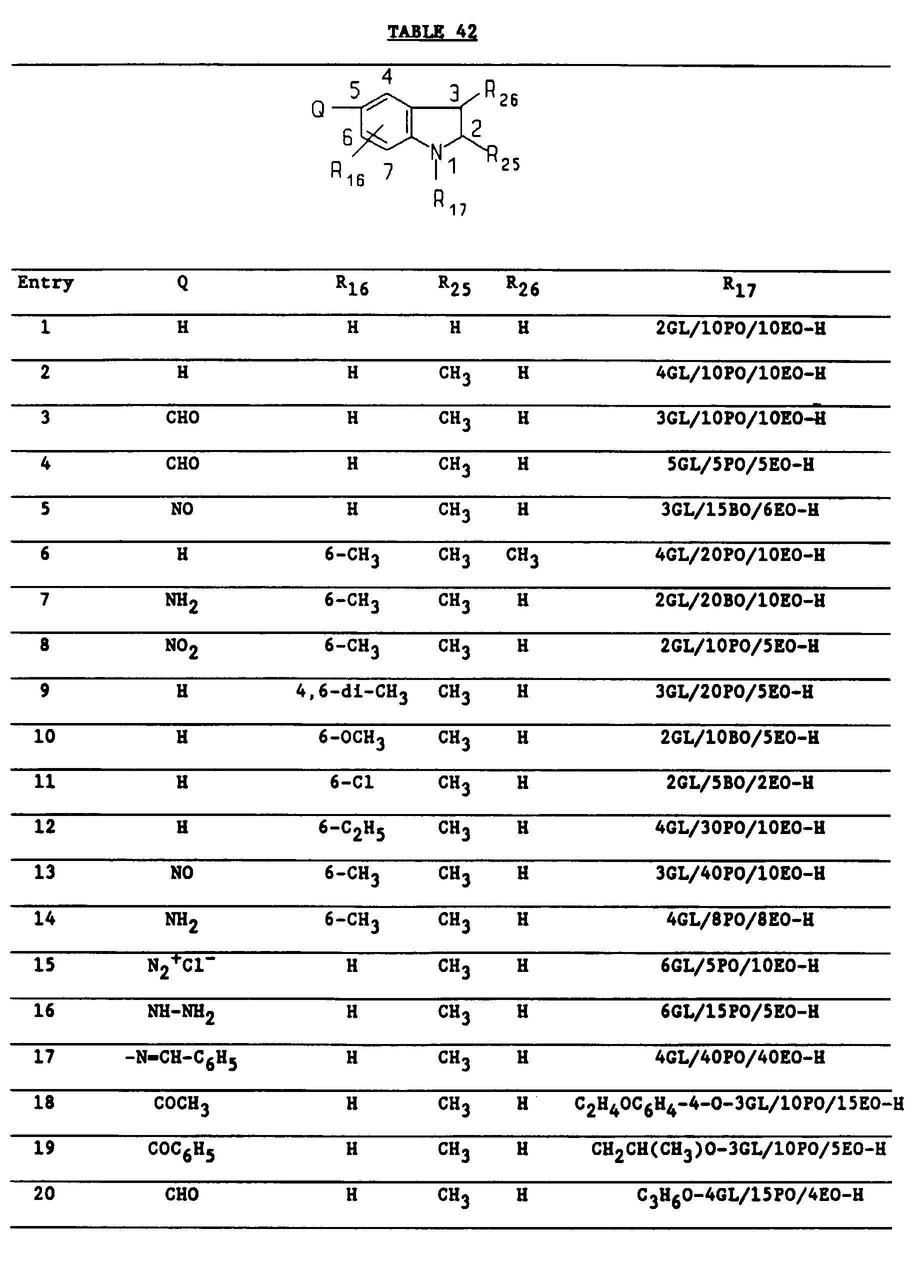

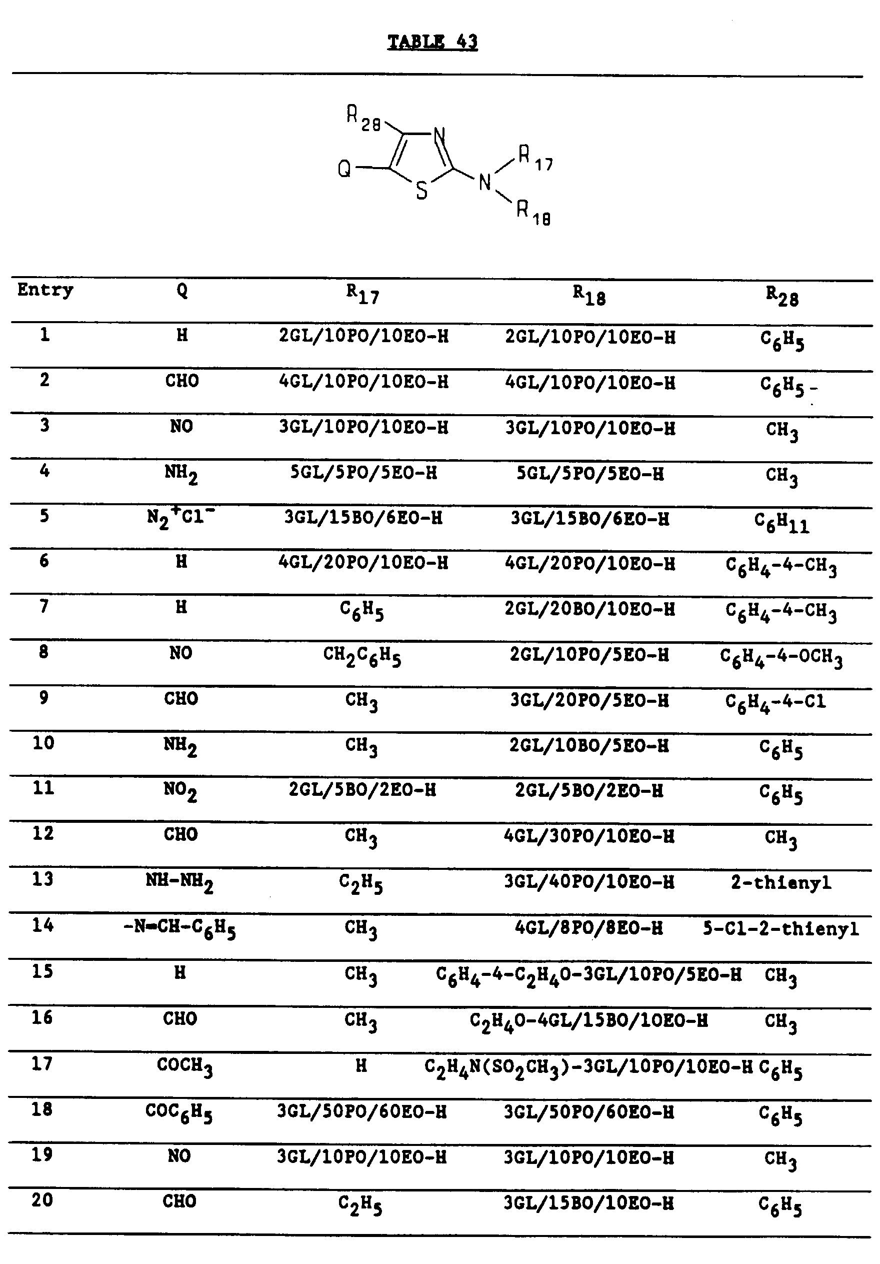

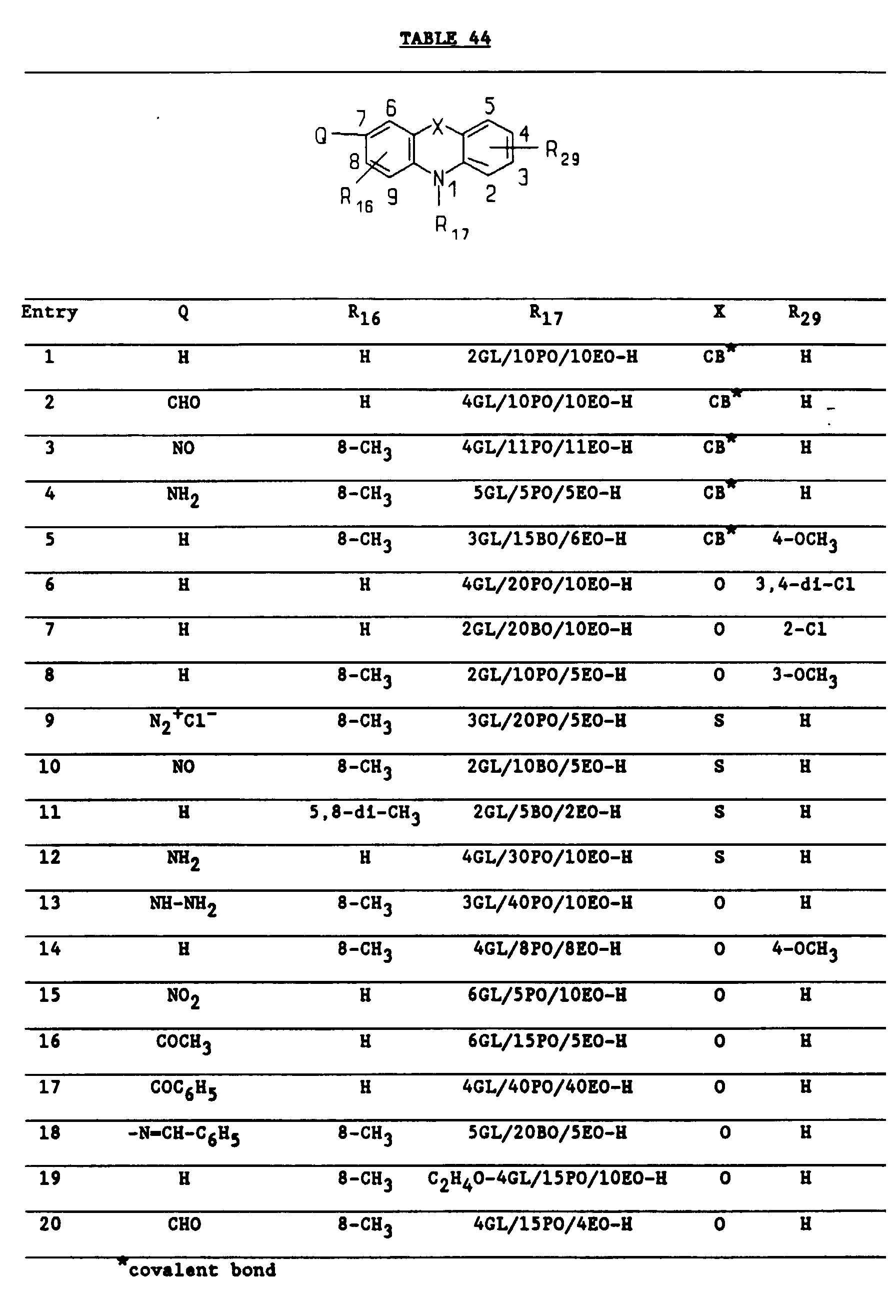

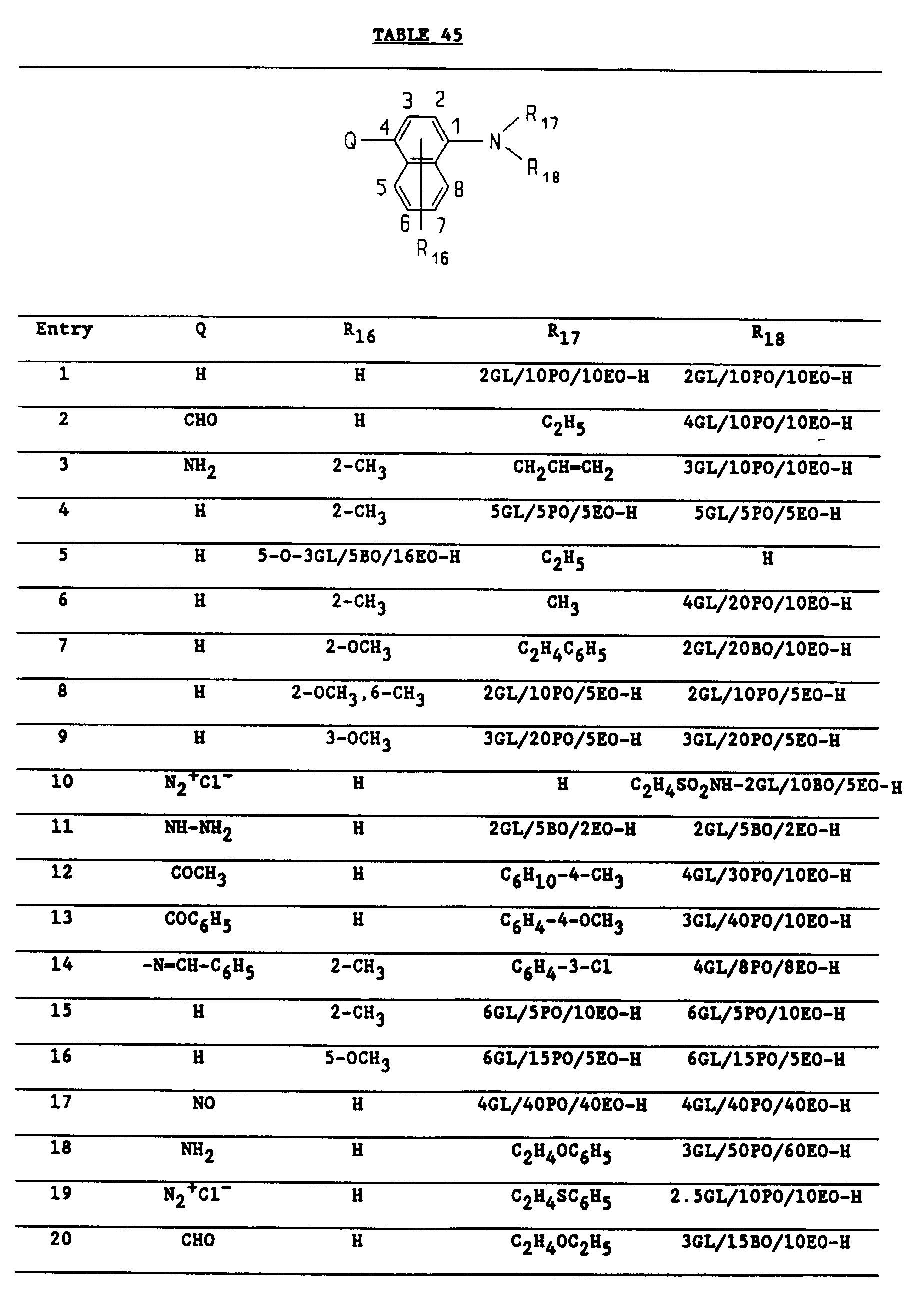

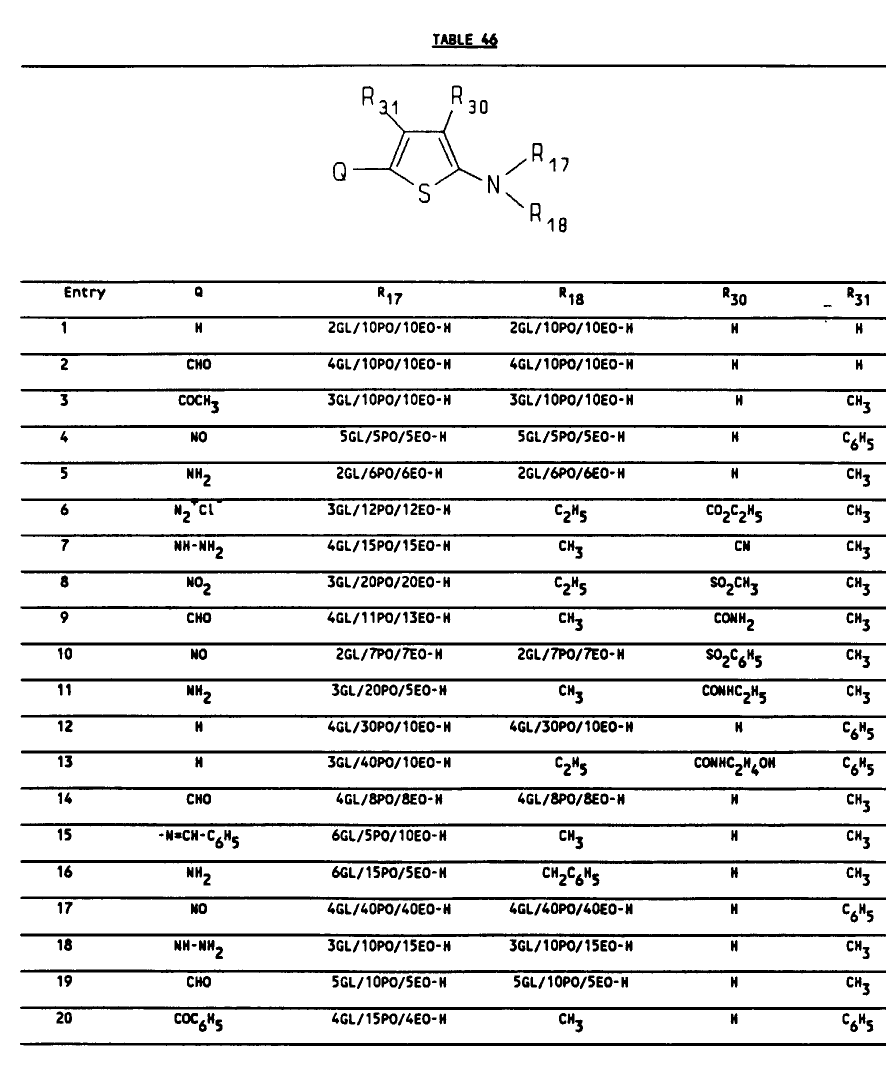

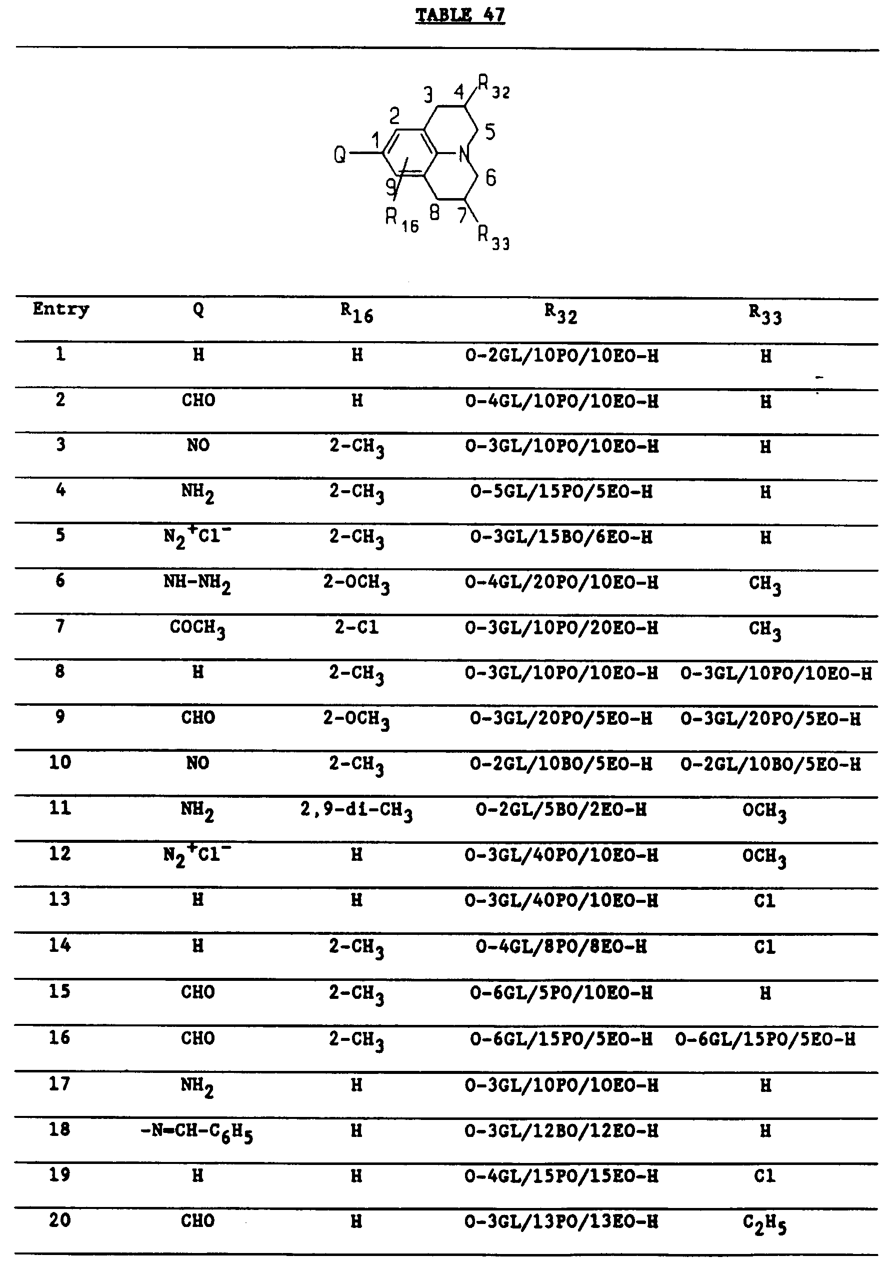

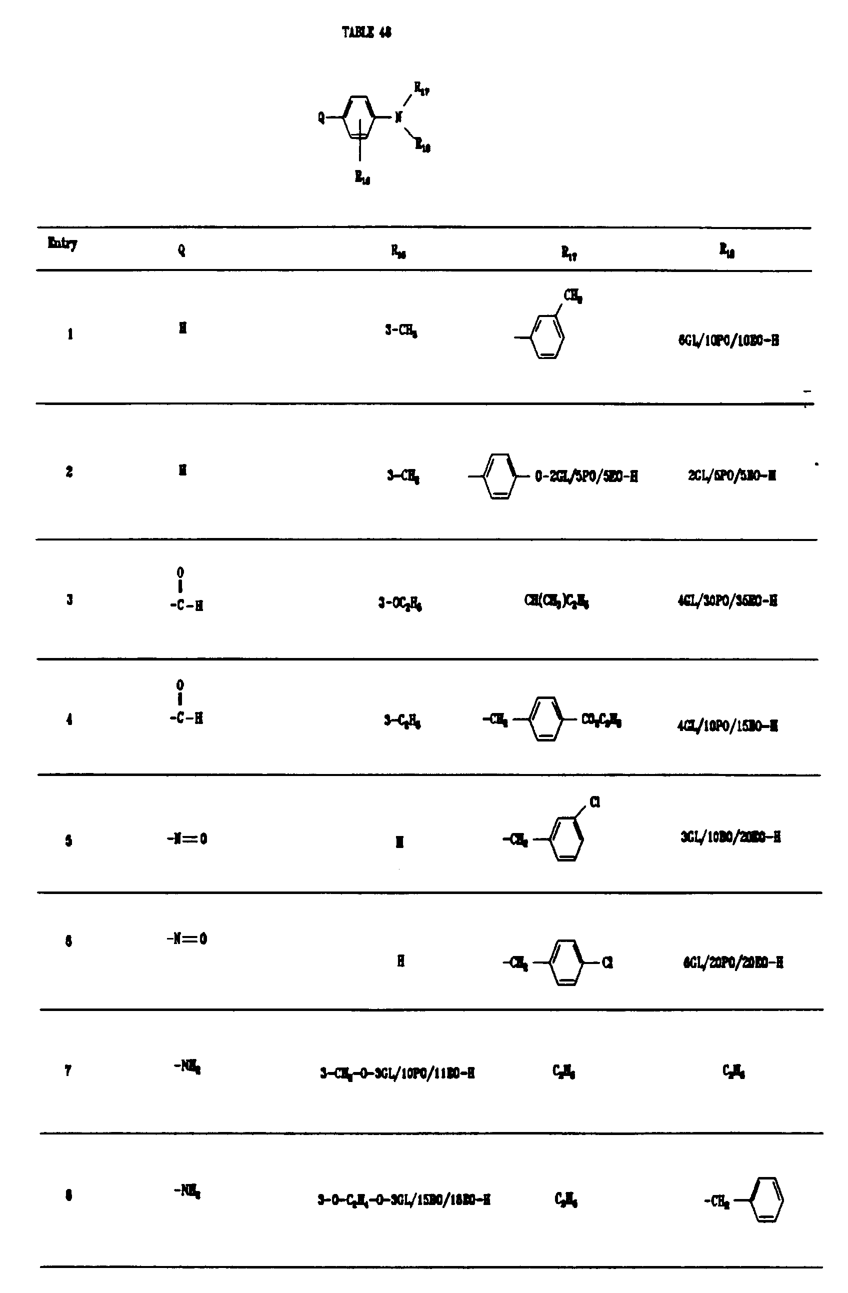

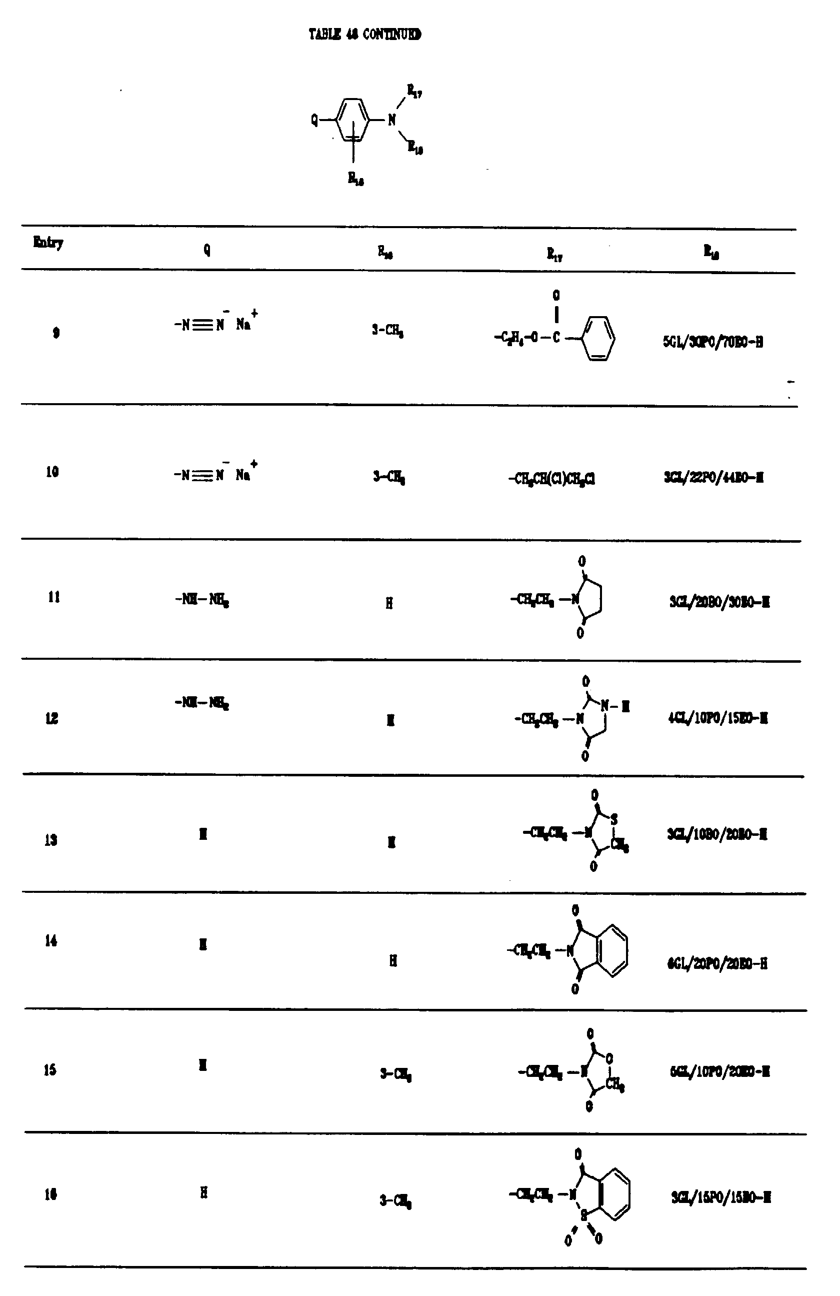

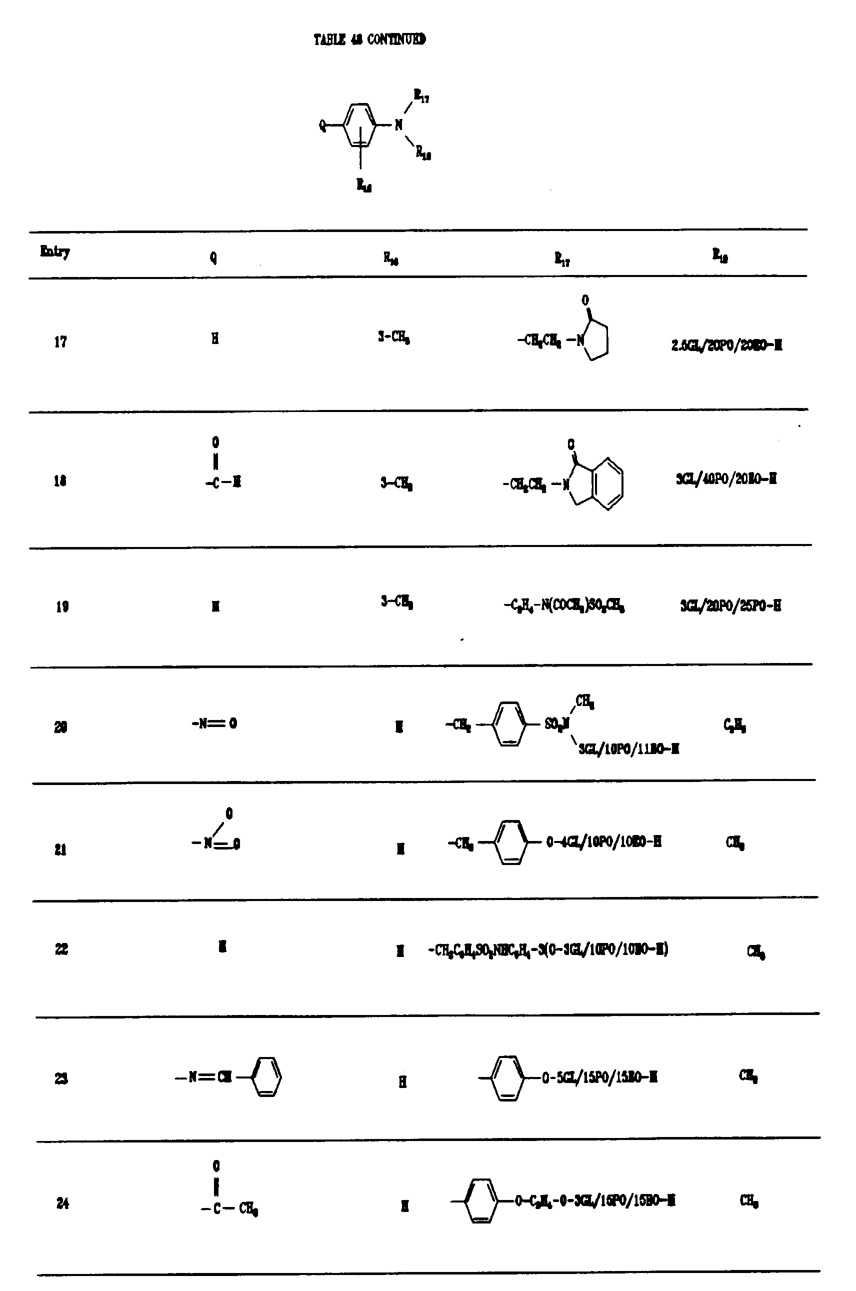

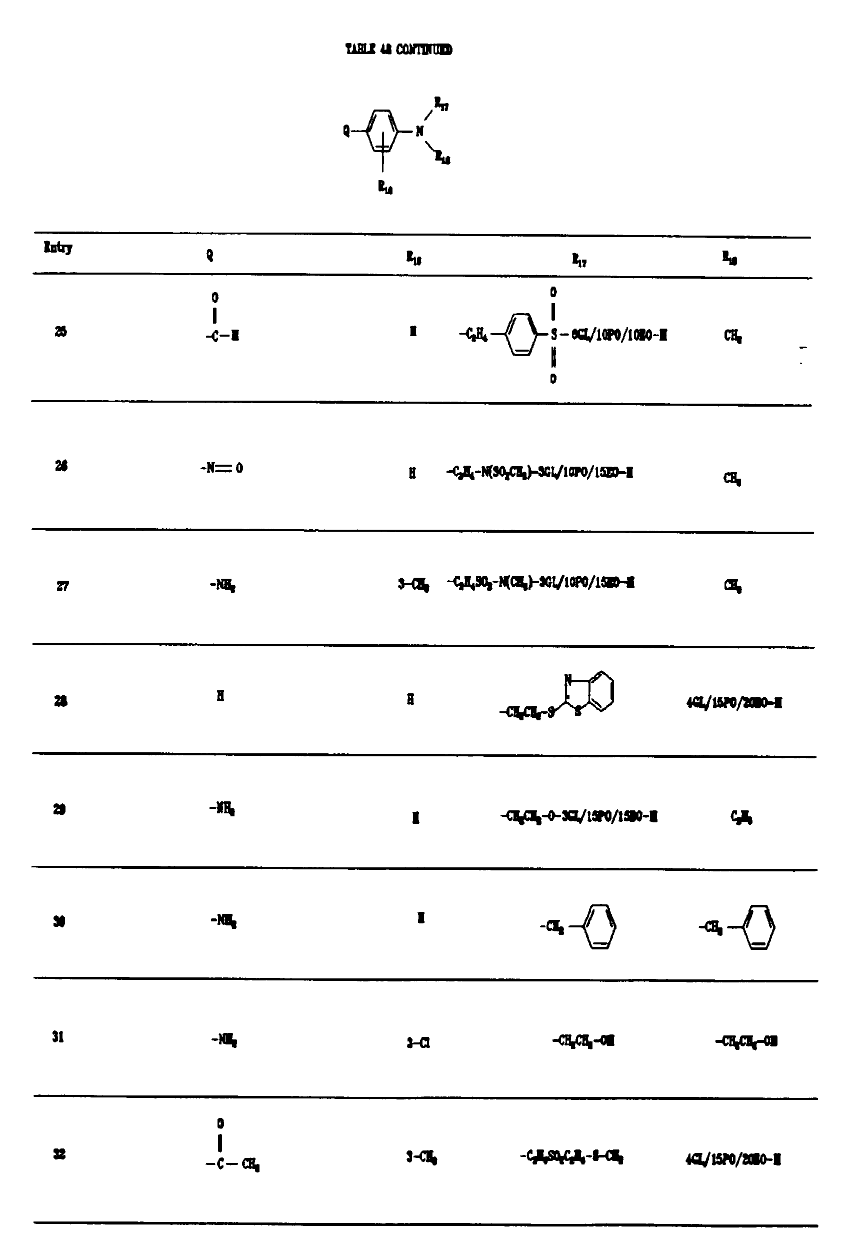

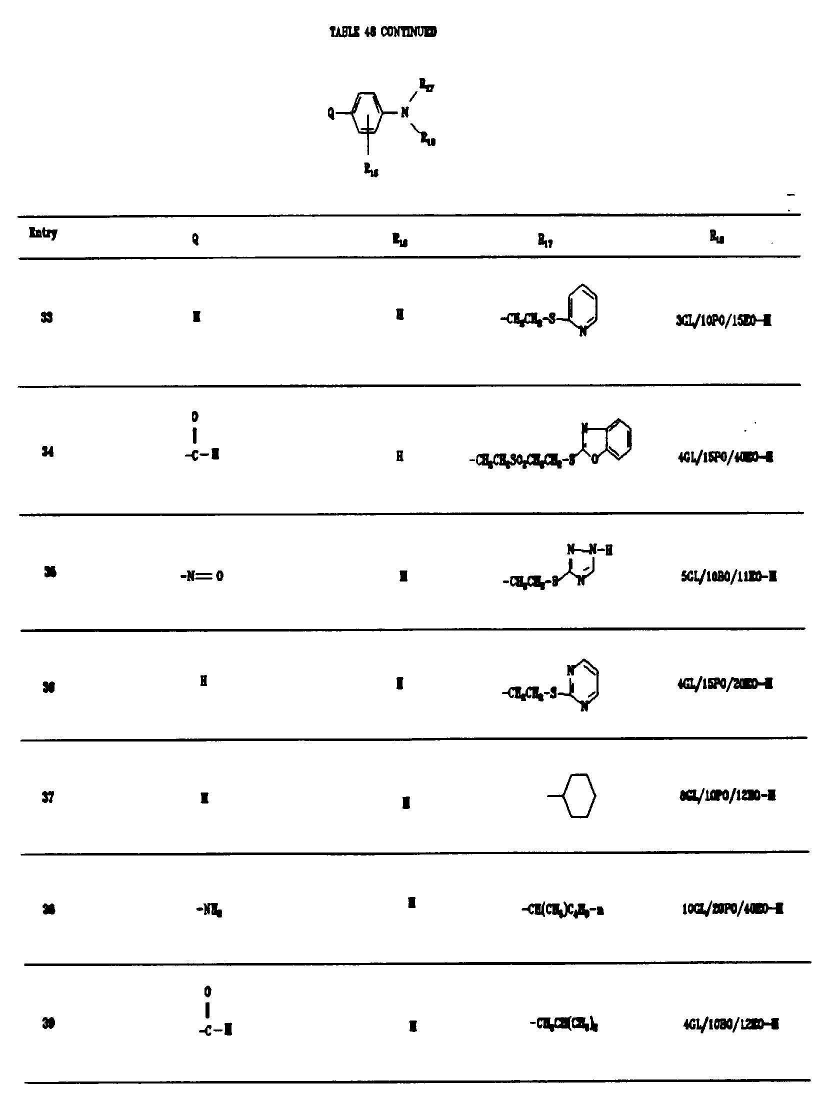

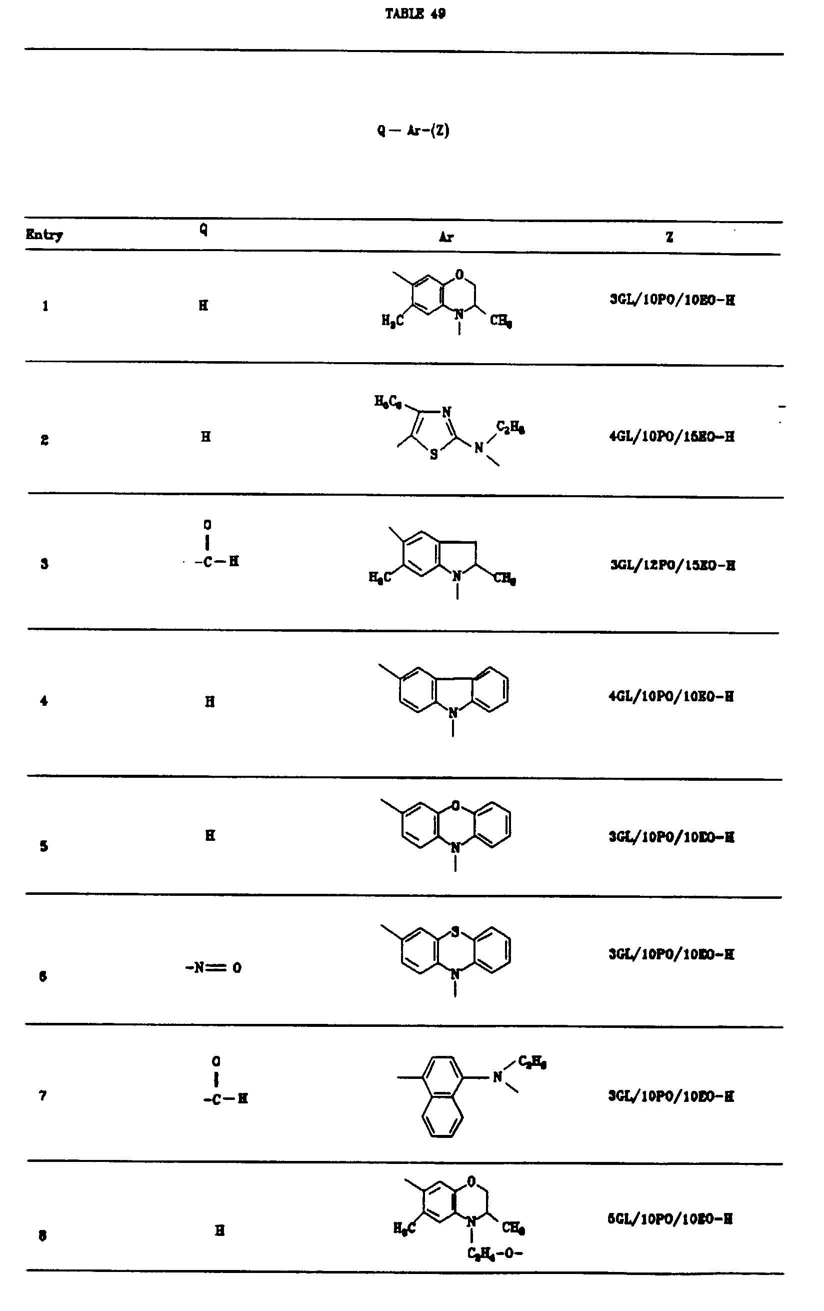

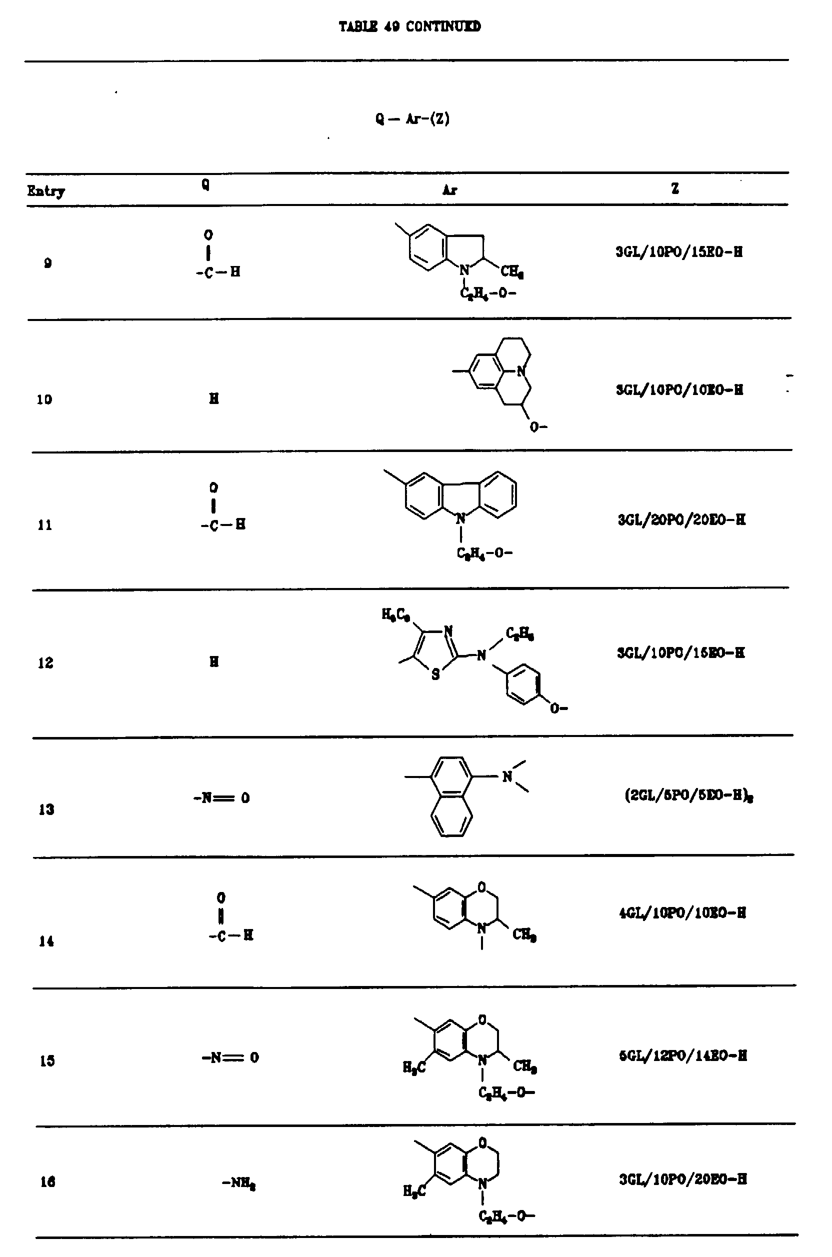

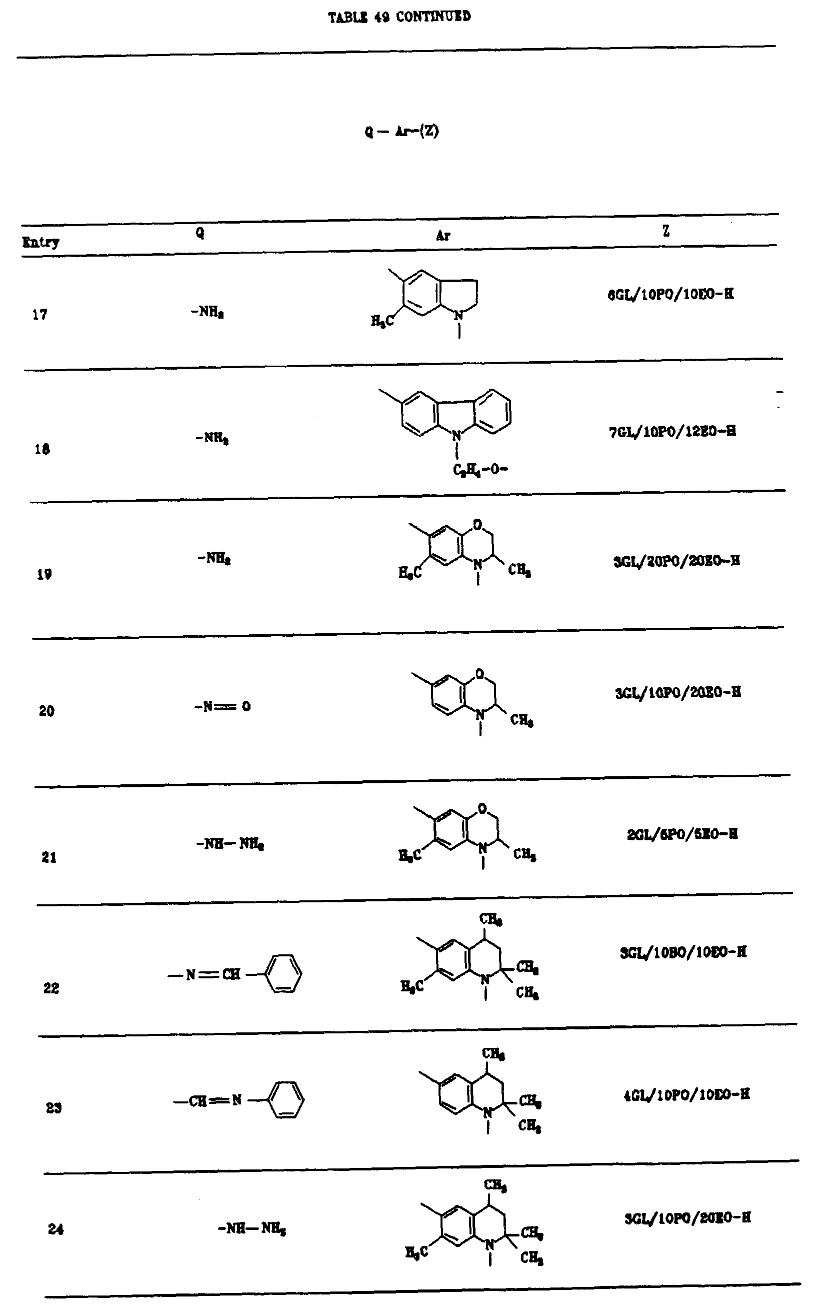

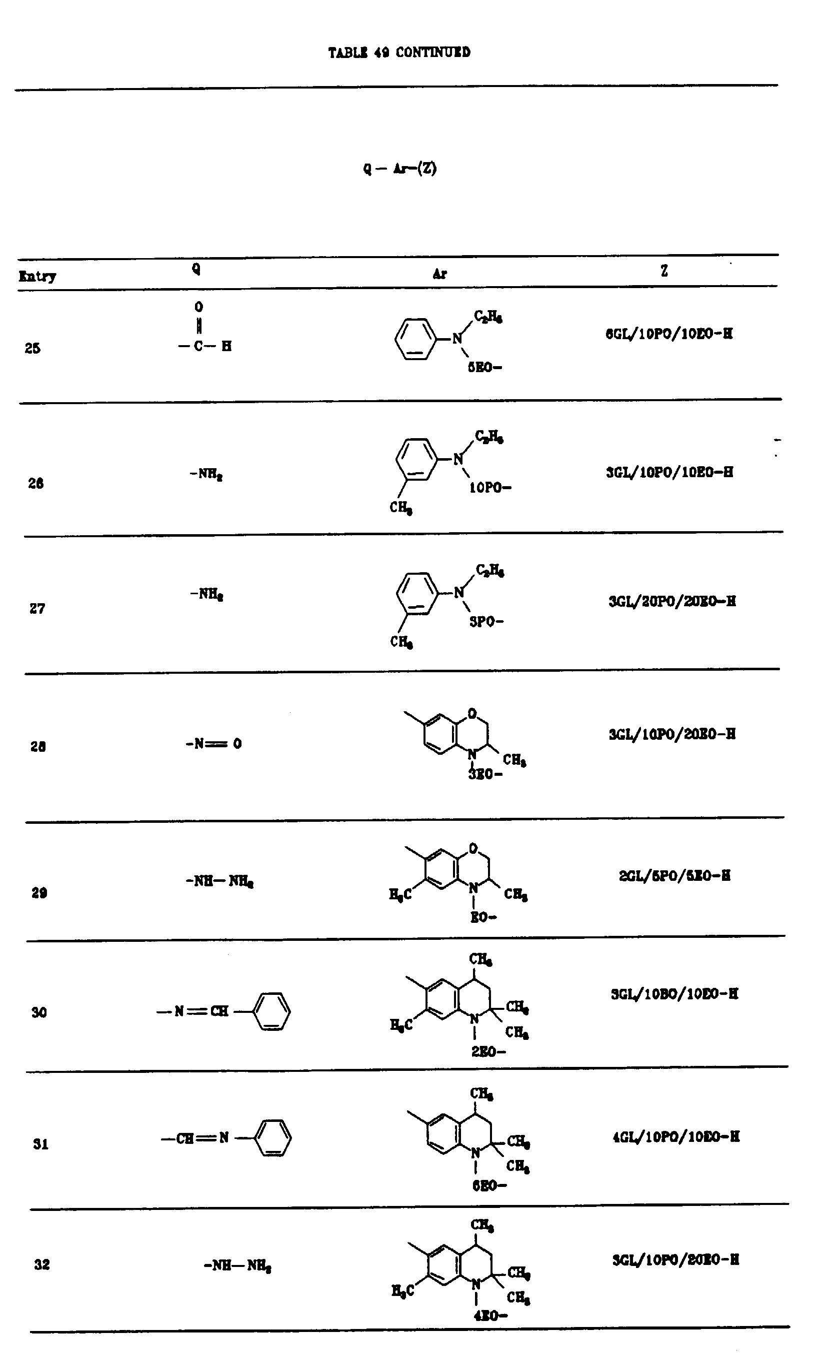

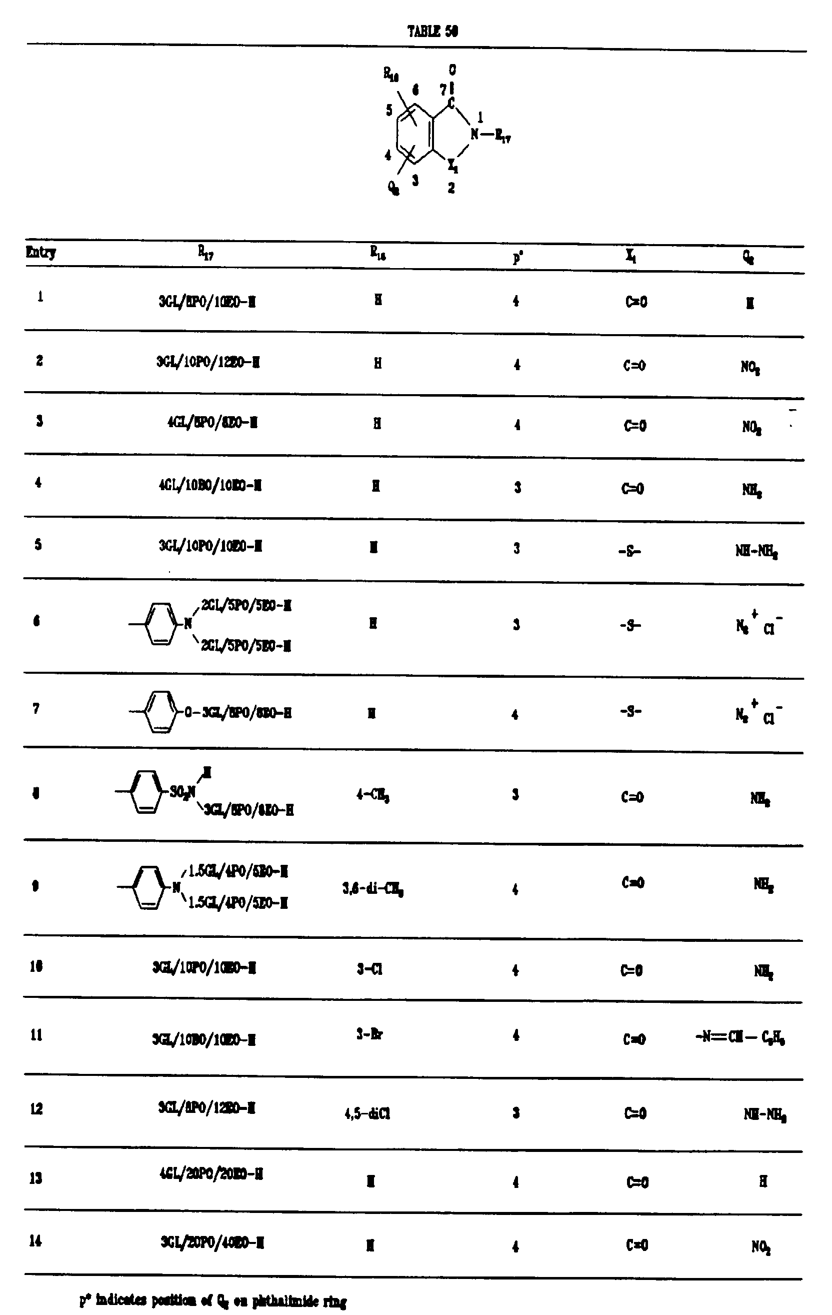

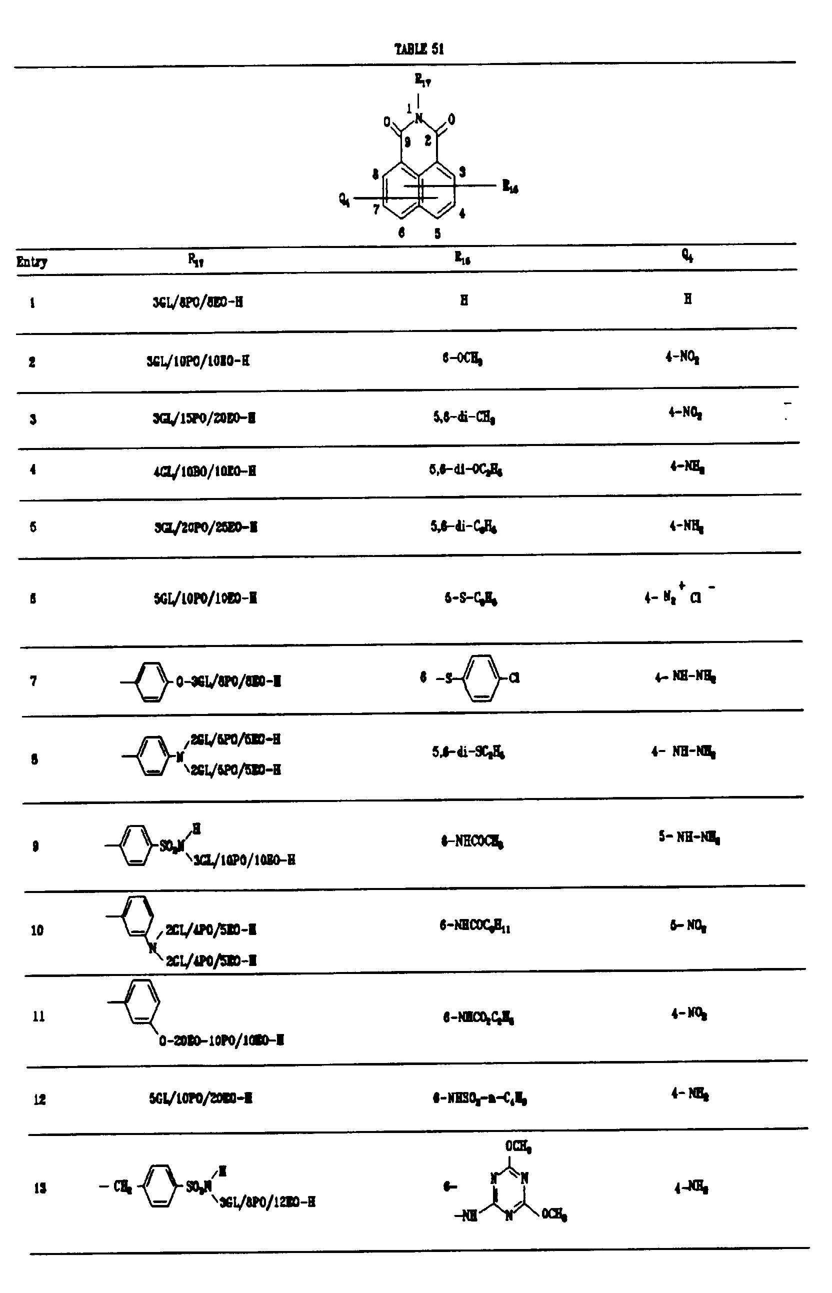

## Claims

1. A process for preparing a compound having the formula
Y-(Z)₁₋₆
wherein
Y is the residue of an organic nucleophile;
each group Z is a poly(oxyalkylene) moiety comprising at least one glycidol segment comprising at least one glycidol residue, said process comprising the steps of:
1. providing a reaction system containing an initial reactant having at least one glycidol segment comprised of at least one glycidol residue of formula -CH₂CH(OH)CH₂O- or -CH₂CH(OH)CH₂OH, said glycidol segment containing at least one primary hydroxyl group and at least one secondary hydroxyl group;
2. contacting said reaction system with a first epoxide reactant material comprised of a secondary hydroxyl producing epoxide having three or more carbon atoms;
3. contacting said reaction system with a second epoxide reactant material comprised of a primary hydroxyl producing epoxide,
the addition of said epoxide reactant materials being in a selective sequence firstly to produce a secondary hydroxyl containing epoxide residue segment linked directly to at least one primary oxy site on said glycidol segment and secondly to terminate at least a major portion of the resulting poly(oxyalkylene) chains or branches with primary hydroxyl groups.

2. A process as claimed in claim 1 wherein said first epoxide reactant material is added in stoichiometric excess of at least a major portion of the total hydroxyl groups in said glycidol segment, and wherein said second epoxide reactant material is added in stoichiometric excess of at least a major portion of the total secondary hydroxyl groups in the product from step 2.

3. A process as claimed in either of Claims 1 and 2 wherein in steps 2 and 3, the first and second epoxide reactant materials respectively are added in stoichiometric excess of the total hydroxyl groups present in the glycidol segment and present in the poly(oxyalkylene) moiety from step 2.

4. A process as claimed in any one of Claims 1 to 3 wherein the molar ratio of each of said first and second epoxide reactant materials to total glycidol residues is from 1/1 to 50/1.

5. A process as claimed in any one of Claims 1 to 4 wherein the molar ratio of each of said first and second epoxide reactant materials to total glycidol residues is from 2/1 to 20/1.

6. A process as claimed in any one of Claims 1 to 5 wherein said first epoxide reactant material is propylene oxide or butylene oxide or mixtures thereof, and said second epoxide reactant material is ethylene oxide.

7. A process as claimed in any one of Claims 1 to 6 for preparing a compound having the formula
Y-(Z)₁₋₄
wherein group Y and each group Z are as defined in Claim 1.

8. A process as claimed in any one of Claims 1 to 7 wherein said initial reaction system has at least one polyglycidol segment comprising at least two glycidol residues.

9. A process as claimed in any one of Claims 1 to 8 wherein said initial reaction system has at least one polyglycidol segment having from two to eight linked glycidol residues.

10. A process as claimed in either one of Claims 8 and 9 wherein said initial reaction system has at least one polyglycidol segment linked directly to at least two terminating moieties.

11. A process as claimed in any one of Claims 1 to 10, for preparing a compound wherein each Z moiety has a molecular weight of from 200 to 10,000.

12. A process as claimed in any one of Claims 1 to 11 for preparing a compound wherein said glycidol residues comprise at least 0.5 mole percent of all epoxide residues in Z.

13. A process as claimed in any one of Claims 1 to 12 for preparing a compound wherein said glycidol residues comprise from 8.0 to 22.0 mole percent of all epoxide residues in Z.

14. A process as claimed in any one of Claims 1 to 13 for preparing a compound wherein in said group Z the first epoxide segment produced in step 2 contains a total of from 2 to 15 residues of propylene oxide, butylene oxide or mixtures thereof, and the second epoxide segment produced in step 3 contains from 2 to 50 residues of ethylene oxide.

15. A process as claimed in any one of Claims 1 to 14 wherein the total number of first and second epoxide segments produced in steps 2 and 3 respectively does not exceed 200.

16. A process as claimed in any one of Claims 1 to 15 wherein said glycidol segment is directly bonded to the reactive site of a nucleophile selected from primary or secondary amine, hydroxy, mercapto, sulfinic acid, sulfonamide, imide or sulfoic imide compounds.

17. A process as claimed in any one of Claims 1 to 16 wherein said glycidol segment is connected directly to an aromatic compound through or by an oxy, thio, sulfinyl, sulphonamido or imido linkage.

18. A process as claimed in any one of Claims 1 to 17 wherein said glycidol segment is linked directly to a nitrogen linked directly to an aromatic compound.

19. A process as claimed in any one of Claims 1 to 18 for preparing a compound wherein said residue of an organic nucleophile is a residue of an organic chromophore or an organic chromophore intermediate.

20. A process as claimed in any one of Claims 1 to 19 for preparing a compond wherein said residue of an organic nucleophile is a residue of an azo, methine or azamethine chromophore and said chromophore is linked to from 1 to 4 Z groups.

21. A process as claimed in any one of Claims 1 to 20 for preparing a compound wherein said residue of an organic nucleophile is selected from compounds of the formulae:
Q-N=N-Ar, M=CH-Ar, M=N-Ar and D-N=N-Ar;
wherein Q is selected from unsubstituted or substituted: phenyl; naphthyl; thiazol-2-yl; benzothiazol-2-yl; 1,3,4-thiadiazol-2-yl; 1,2,4-thiadiazol-5-yl; isothiazol-5-yl; isoxazol-5-yl; 2,1-benzisothiazol-3-yl; 2-thienyl; 3- and 4-pyridyl; pyrazol-5-yl; 3- and 4-phthalimidyl; 1,2,4-triazol-3-yl; and 4,5(3,3-dimethyl-1-oxotetramethylene)thiazol-2-yl;
wherein Ar is selected from substituted or unsubstituted; anilines; naphthylamines; indoles; diphenylamines; 1,2,3,4-tetrahydroquinolines; 3,4-dihydro-2H-1,4-benzoxazines; 2-aminothiazoles; 2,3-dihydroindoles; carbazoles; phenoxazines; phenothiazines; 2-aminothiophenes; aminopyridines and julolidines;
wherein D is an aromatic heterocyclic radical having a quaternary nitrogen atom, said radical being selected from unsubstituted or substituted: thiazol-2-yl; benzothiazol-2-yl; 1,3,4-thiadiazol-2-yl; 1,2,4-thiadiazol-5-yl; isothiazol-5-yl; 1,2-benzisothiazol-3-yl; pyrazol-5-yl; 1,3,4-triazol-2-yl; 3- or 4-pyridyl; and 4,5-(3,3-dimethyl-1-oxotetramethylene)- thiazol-2-yl; and
wherein M is an active methylene residue; and
wherein said residue of an organic nucleophile is linked to from 1 to 4 Z moieties.

22. A process as claimed in any one of Claims 1 to 21 for preparing a compound wherein Y is derived from an organic nucleophile selected from primary and secondary amines or from organic nucleophiles of the formulae 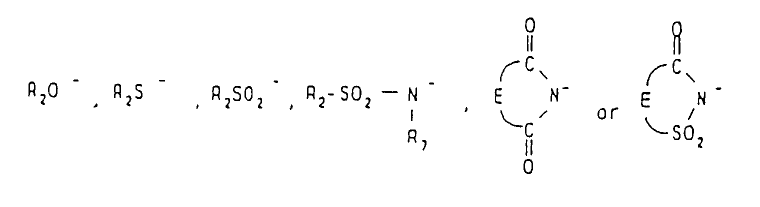 wherein:
R₂ is selected from substituted or unsubstituted alkyl of 1-20 carbons, substituted or unsubstituted aryl of 6-10 ring carbons, substituted or unsubstituted cycloalkyl of 5-7 ring carbons;
R₇ is selected from hydrogen or R₂; and
E comprises a divalent ring moiety.

23. A process as claimed in any one of Claims 1 to 22 for preparing a compound wherein Y is linked to each Z moiety through a -O-, -S-, -SO₂-, -N(R₃), -SO₂N(R₃), or -N(SO₂R₄) linkage wherein:
R₃ is selected from hydrogen, -Z, or an unsubstituted or substituted group selected from alkyl, aryl or cycloalkyl, and
R₄ is an unsubstituted or substituted group selected from alkyl, aryl, or cycloalkyl.

24. A process as claimed in claim 23 for preparing a compound wherein Y is the residue of an organic nucleophile selected from : substituted or unsubstituted anilines; 1,2,3,4-tetrahydroquinolines; 3,4-dihydro-2H-1,4-benzoxazines; 2-aminothiazoles; indoles; 2,3-dihydroindoles; carbazoles; naphthylamines; phenoxazines; phenothiazines; diphenylamines; julolidines; 2-aminothiophenes; and aminopyridines.

25. A process as claimed in any one of Claims 1 to 24 for preparing a compound wherein Y is an organic chromophore intermediate linked to Z by a linking agent selected from oxygen, sulfur, -SO₂-, -SO₂N(R₁)-, -N(SO₂R₂)-; -N(R₁)-, -COO- or -CON(R₁)-;
wherein R₁ is selected from hydrogen; lower alkyl; lower alkyl substituted with hydroxy, aryloxy, halogen, cycloalkyl or phenyl; cycloalkyl; phenyl; phenyl substituted with lower alkyl, lower alkoxy, halogen, hydroxy, alkanoylamino, carbalkoxy, carboxy, cyano and alkanoyloxy; and R₂ represents the compounds listed for R₁ except for hydrogen.

26. A composition comprising a polymeric material reacted or admixed with a compound prepared from a process as claimed in any one of Claims 1 to 25, said compound comprising from 0.0001 to 10.0 weight percent of said composition.

27. A composition as claimed in claim 26 wherein said polymeric material is thermoplastic.

28. A composition as claimed in either of Claims 26 and 27 wherein said polymeric material is a polyolefin.

29. A composition as claimed in Claim 26 wherein said polymeric material is thermosetting.

30. A composition as claimed in claim 29 wherein said polymeric material is a polyurethane formed by reacting a polyol selected from hydroxyl terminated polyesters and polyethers, with a polyisocyanate together in a solution with said compound.

31. A composition as claimed in Claim 26 wherein said polyisocyanate is an aromatic polyisocyanate.

## Patentansprüche

1. Verfahren zur Herstellung einer Verbindung der Formel
Y-(Z)₁₋₆
wobei
Y der Rest einer organischen nukleophilen Substanz ist, jede Gruppe Z eine Poly(oxyalkylen)-Einheit ist, umfassend mindestens ein Glycidolsegment, umfassend mindestens einen Glycidolrest, wobei das Verfahren die folgenden Stufen umfaßt:
1. Bereitstellen eines Reaktionssystems, enthaltend einen Anfangsreaktionsteilnehmer mit mindestens einem Glycidolsegment, bestehend aus mindestens einem Glycidolrest der Formel -CH₂CH(OH)CH₂O- oder - CH₂CH(OH)CH₂OH, wobei das Glycidolsegment mindestens eine primäre Hydroxylgruppe und mindestens eine sekundäre Hydroxylgruppe umfaßt;
2. Zusammenbringen dieses Reaktionssystems mit einem ersten Epoxidreaktionsmaterial, bestehend aus einem eine sekundäre Hydroxylgruppe bildenden Epoxid mit drei oder mehr Kohlenstoffatomen;
3. Zusammenbringen dieses Reaktionssystems mit einem zweiten Epoxidreaktionsmaterial, bestehend aus einem eine primäre Hydroxylgruppe bildenden Epoxid,
wobei die Zugabe der Epoxidreaktionsmaterialien in selektiver Reihenfolge erfolgt, um zunächst ein eine sekundäre Hydroxylgruppe enthaltendes Epoxidrestsegment zu bilden, das direkt an mindestens eine primäre Oxystelle des Glycidolsegments gebunden ist, und als zweites mindestens einen Hauptteil der erhaltenen Poly(oxyalkylen)-Ketten oder -Zweige mit primären Hydroxylgruppen zu terminieren.

2. Verfahren nach Anspruch 1, wobei das erste Epoxidreaktions material in einem stöchiometrischen Überschuß von mindestens einem Hauptteil der Gesamthydroxylgruppen in dem Glycidolsegment zugesetzt wird und wobei das zweite Epoxidreaktionsmaterial in einem stöchiometrischen Überschuß von mindestens einem Hauptteil der gesamten sekundären Hydroxylgruppen in dem Produkt der Stufe 2 zugesetzt wird.

3. Verfahren nach Anspruch 1 oder 2, wobei in den Stufen 2 und 3 das erste und zweite Epoxidreaktionsmaterial jeweils in einem stöchiometrischen Überschuß der gesamten Hydroxylgruppen in dem Glycidolsegment und in der Poly(oxyalkylen)-Einheit der Stufe 2 zugesetzt wird.

4. Verfahren nach einem der Ansprüche 1 bis 3, wobei das Molverhältnis von jedem des ersten und zweiten Epoxidreaktionsmaterials zu den Gesamtglycidolresten 1 : 1 bis 50 : 1 beträgt.

5. Verfahren nach einem der Ansprüche 1 bis 4, wobei das Molverhältnis bei jedem des ersten und zweiten Epoxidreaktionsmaterials zu den Gesamtglycidolresten 2 : 1 bis 20 : 1 beträgt.

6. Verfahren nach einem der Ansprüche 1 bis 5, wobei das erste Epoxidreaktionsmaterial Propylenoxid oder Butylenoxid oder ein Gemisch davon und das zweite Epoxidreaktionsmaterial Ethylenoxid ist.

7. Verfahren nach einem der Ansprüche 1 bis 6 zur Herstellung einer Verbindund der Formel
Y-(Z)₁₋₄
wobei die Gruppe Y und jede Gruppe Z wie in Anspruch 1 definiert sind.

8. Verfahren nach einem der Ansprüche 1 bis 7, wobei das Anfangsreaktionssystem mindestens ein Polyglycidolsegment enthält, umfassend mindestens zwei Glycidolreste.

9. Verfahren nach einem der Ansprüche 1 bis 8, wobei das Anfangsreaktionssystem mindestens ein Polyglycidolsegment enthält mit zwei bis acht verbundenen Glycidolresten.

10. Verfahren nach einem der Ansprüche 8 und 9, wobei das Anfangsreaktionssystem mindestens ein Polyglycidolsegment enthält das direkt an mindestens zwei terminierende Einheiten gebunden ist.

11. Verfahren nach einem der Ansprüche 1 bis 10 zur Herstellung einer Verbindung, bei der jede Einheit Z ein Molekulargewicht von 200 bis 10 000 besitzt.

12. Verfahren nach einem der Ansprüche 1 bis 11 zur Herstellung einer Verbindung, bei der die Glycidolreste mindestens 0,5 mol-% aller Epoxidreste in Z umfassen.

13. Verfahren nach einem der Ansprüche 1 bis 12 zur Herstellung einer Verbindung, bei der die Glycidolreste 8,0 bis 22,0 mol-% aller Epoxidreste in Z umfassen.

14. Verfahren nach einem der Ansprüche 1 bis 13 zur Herstellung einer Verbindung, bei der in der Gruppe Z das erste Epoxidsegment, das in Stufe 2 gebildet worden ist, insgesamt 2 bis 15 Reste von Propylenoxid, Butylenoxid oder Gemischen davon umfaßt und das zweite Epoxidsegment, das in Stufe 3 gebildet worden ist, 2 bis 50 Reste von Ethylenoxid umfaßt.

15. Verfahren nach einem der Ansprüche 1 bis 14, wobei die Gesamtzahl der ersten und zweiten Epoxidsegmente, die in Stufe 2 bzw. 3 gebildet worden sind, 200 nicht übersteigt.

16. Verfahren nach einem der Ansprüche 1 bis 15, wobei das Glycidolsegment direkt an die reaktionsfähige Stelle einer nukleophilen Substanz, ausgewählt aus primären oder sekundären Amin-, Hydroxy-, Mercapto-, Sulfinsäure-, Sulfonamid-, Imid- oder Sulfonimid-Verbindungen, gebunden ist.

17. Verfahren nach einem der Ansprüche 1 bis 16, wobei das Glycidolsegment direkt an eine aromatische Verbindung gebunden ist durch oder über eine Oxy-, Thio-, Sulfinyl-, Sulfonamido- oder Imido-Bindung.

18. Verfahren nach einem der Ansprüche 1 bis 17, wobei das Glycidolsegment direkt an einen Stickstoff gebunden ist, der direkt an eine aromatische Verbindung gebunden ist.

19. Verfahren nach einem der Ansprüche 1 bis 18 zur Herstellung einer Verbindung, bei der der Rest einer organischen nukleophilen Substanz ein Rest eines organischen Chromophors oder eines organischen Chromophorzwischenproduktes ist.

20. Verfahren nach einem der Ansprüche 1 bis 19 zur Herstellung einer Verbindung, bei der der Rest einer organischen nukleophilen Substanz ein Rest eines Azo-, Methin- oder Azamethin-Chromophors ist und der Chromophor an 1 bis 4 Gruppen Z gebunden ist.

21. Verfahren nach einem der Ansprüche 1 bis 20 zur Herstellung einer Verbindung, bei der der Rest einer organischen nukleophilen Substanz ausgewählt ist aus Verbindungen der Formeln
Q-N=N-Ar, M=CH-Ar, M=N-Ar und D-N=N-Ar;
wobei Q ausgewählt ist aus unsubstituiertem oder substituiertem Phenyl; Naphthyl, Thiazol-2-yl; Benzothiazol-2-yl; 1,3,4-Thiadiazol-2-yl; 1,2,4-Thiadiazol-5-yl; Isothiazol-5-yl; Isoxazol-5-yl; 2,1-Benzisothiazol-3-yl; 2-Thienyl; 3- und 4-Pyridyl; Pyrazol-5-yl; 3- und 4-Phthalimidyl; 1,2,4-Triazol-3-yl; und 4,5(3,3-Dimethyl-1-oxotetramethylen)thiazol-2-yl;
wobei Ar ausgewählt ist aus substituierten oder unsubstituierten Anilinen; Naphthylaminen; Indolen; Diphenylaminen; 1,2,3,4-Tetrahydrochinolinen; 3,4-Dihydro-2H-1,4-benzoxazinen; 2-Aminothiazolen; 2,3-Dihydroindolen; Carbazolen; Phenoxazinen; Phenothiazinen; 2-Aminothiophenen; Aminopyridinen und Julolidinen;
wobei D ein aromatischer heterocyclischer Rest ist mit einem quaternären Stickstoffatom, wobei der Rest ausgewählt ist aus substitutiertem oder unsubstituiertem Thiazol-2-yl; Benzothiazol-2-yl; 1,3,4-Thiadiazol-2-yl; 1,2,4-Thiadiazol-5-yl; Isothiazol-5-yl; 1,2-Benzisothiazol-3-yl; Pyrazol-5-yl; 1,3,4-Triazol-2-yl; 3- oder 4-Pyridyl; und 4,5-(3,3-Dimethyl-1-oxotetramethylen)-thiazol-2-yl; und
wobei M ein aktiver Methylenrest ist und wobei dieser Rest einer organischen nukleophilen Substanz an 1 bis 4 Einheiten Z gebunden ist.

22. Verfahren nach einem der Ansprüche 1 bis 21 zur Herstellung einer Verbindung, bei der Y abgeleitet ist von einer organischen nukleophilen Substanz, ausgewählt aus primären und sekundären Aminen oder von organischen nukleophilen Substanzen der Formeln: 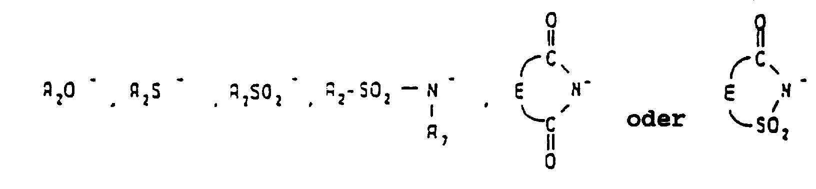 wobei
R₂ ausgewählt ist aus substituiertem oder unsubstituiertem Alkyl mit 1 bis 20 Kohlenstoffatomen, substituiertem oder unsubstituiertem Aryl mit 6 bis 10 Ringkohlenstoffatomen, substituiertem oder unsubstituiertem Cycloalkyl mit 5 bis 7 Ringkohlenstoffatomen,
R₇ ausgewählt ist aus Wasserstoff oder R₂; und
E eine zweiwertige Ringeinheit umfaßt.

23. Verfahren nach einem der Ansprüche 1 bis 22 zur Herstellung einer Verbindung, bei der Y an jede Einheit Z gebunden ist über eine -O-, -S-, -SO₂-, -N(R₃) -, -SO₂N(R₃) - oder -N (SO₂R₄) -Bindung wobei R₃ ausgewählt ist aus Wasserstoff, -Z oder einer unsubstituierten oder substituierten Gruppe, ausgewählt aus Alkyl, Aryl oder Cycloalkyl und R₄ eine unsubstituierte oder substituierte Gruppe ist ausgewählt aus Alkyl, Aryl oder cycloalkyl.

24. Verfahren nach Anspruch 23 zur Herstellung einer Verbindung; bei der Y der Rest einer organischen, nukleophilen Substanz ist, ausgewählt aus substituierten oder unsubstituierten Anilinen; 1,2,3,4-Tetrahydrochinolinen; 3,4-Dihydro-2H-1,4-benzoxazinen; 2-Aminothiazolen; Indolen; 2,3-Dihydroindolen; Carbazolen; Naphthylaminen; Phenoxazinen; Phenothiazinen; Diphenylaminen; Julolidinen; 2-Aminothiophenen und Aminopyridinen.

25. Verfahren nach einem der Ansprüche 1 bis 24 zur Herstellung einer Verbindung, bei der Y ein organisches Chromophorzwischenprodukt ist, das an Z gebunden ist über ein Bindungsmittel, ausgewählt aus Sauerstoff, Schwefel, -SO₂-, -SO₂N(R₁)-, -N(SO₂R₂)-; ^{-N(R}1^{)-, COO oder CON(R}1^{)-;}
wobei R₁ ausgewählt ist aus Wasserstoff; niederem Alkyl; niederem Alkyl, substituiert mit Hydroxy, Aryloxy, Halogen, Cycloalkyl oder Phenyl; Cycloalkyl; Phenyl; Phenyl, substituert mit niederem Alkyl, niederem Alkoxy, Halogen, Hydroxy, Alkanoylamino, Carbalkoxy, Carboxy, Cyano und Alkanoyloxy; und R₂ die für R₁ angegebenen Verbindungen bedeutet außer Wasserstoff.

26. Zusammensetzung umfassend ein polymeres Material, das umgesetzt oder vermischt ist mit einer Verbindung, die nach einem Verfahren nach einem der Ansprüche 1 bis 25 hergestellt worden ist, wobei die Verbindung 0,0001 bis 10,0 Gew.-Teile der Zusammensetzung ausmacht.

27. Zusammensetzung nach Anspruch 26, wobei das polymere Material thermoplastisch ist.

28. Zusammensetzung nach einem der Ansprüche 26 und 27, wobei das polymere Material ein Polyolefin ist.

29. Zusammensetzung nach Anspruch 26, wobei das polymere Material heißhärtend ist.

30. Zusammensetzung nach Anspruch 29, wobei das polymere Material ein Polyurethan ist, gebildet durch Umsetzen eines Polyols, ausgewählt aus Hydroxyl-terminierten Polyestern und Polyethern, mit einem Polyisocyanat, gemeinsam in Lösung mit der Verbindung.

31. Zusammensetzung nach Anspruch 26, wobei das Polyisocyanat ein aromatisches Polyisocyanat ist.

## Revendications

1. Procédé de préparation d'un composé ayant la formule
Y-(Z)₁₋₆
où
Y est un reste d'un nucléophile organique ;
chaque groupe Z est un radical poly(oxyalkylène) comprenant au moins un segment glycidol comprenant au moins un reste glycidol, ledit procédé comprenant les étapes de :
1. fournir un système de réaction contenant un réactif initial ayant au moins un segment glycidol comprenant au moins un reste glycidol de formule -CH₂CH(OH)CH₂O- ou -CH₂CH(OH)CH₂OH, ledit ; segment glycidol contenant au moins un groupe hydroxyle primaire et au moins un groupe hydroxyle secondaire ;
2. mettre en contact ledit système de réaction avec un premier matériau réactif époxyde comprenant un époxyde produisant un hydroxyle secondaire ayant 3 atomes de carbone ou plus ;
3. mettre en contact ledit système de réaction avec un second matériau réactif époxyde comprenant un époxyde produisant un hydroxyle primaire,
l'addition desdits matériaux réactifs époxydes étant en séquence sélective d'abord pour produire un segment de reste époxyde contenant un hydroxyle secondaire lié directement à au moins un site oxy primaire sur ledit segment glycidol et deuxièment pour terminer au moins une portion majoritaire des chaînes obtenues poly(oxyalkylène) ou des branches avec des groupes hydroxyles primaires.

2. Procédé selon la revendication 1 où ledit premier matériau réactif époxyde est ajouté en excès stoechiométrique d'au moins une portion majeure des groupes hydroxyles totaux dans ledit segment glycidol, et où ledit second matériau réaction époxyde est ajouté en excès stoechiométrique d'au moins une portion majoritaire des groupes hydroxyles secondaires totaux dans le produit de l'étape 2.

3. Procédé selon l'une des revendications 1 et 2, où aux étapes 2 et 3, le premier et le second matériaux réactifs époxydes respectivement sont ajoutés en excès stoechiométrique des groupes hydroxyles totaux présents dans le segment glycidol et présents dans le radical poly(oxyalkylène) de l'étape 2.

4. Procédé selon l'une quelconque des revendications 1 à 3, où le rapport molaire desdits premier et second matériaux réactifs époxydes respectivement par rapport aux restes glycidols totaux est de 1/1 à 50/1.

5. Procédé selon l'une quelconque des revendications 1 à 4, où le rapport molaire desdits premier et second matériaux réactifs époxydes respectivement par rapport aux restes glycidols totaux est de 2/1 à 20/1.

6. Procédé selon l'une quelconque des revendications 1 à 5, où ledit premier matériau réactif époxyde est l'oxyde de propylène ou l'oxyde de butylène ou leurs mélanges et ledit second matériau réactif époxyde est l'oxyde d'éthylène.

7. Procédé selon l'une quelconque des revendications 1 à 6, pour préparer un composé ayant la formule :
Y-(Z)₁₋₄
où le groupe Y et chaque groupe Z sont tels que définis à la revendication 1.

8. Procédé selon l'une quelconque des revendications 1 à 7, où ledit système de réaction initial a au moins un segment polyglycidol comprenant au moins deux restes glycidol.

9. Procédé selon l'une quelconque des revendications 1 à 8, où ledit système de réaction initial a au moins un segment polyglycidol ayant de 2 à 8 restes glycidols reliés entre eux.

10. Procédé selon l'une quelconque des revendications 8 et 9, où ledit système de réaction initial a au moins un segment polyglycidol fixé directement à au moins deux radicaux de terminaison.

11. Procédé selon l'une quelconque des revendications 1 à 10, pour préparer un composé où chaque radical Z a un poids moléculaire de 200 à 10 000.

12. Procédé selon l'une quelconque des revendications 1 à 11, pour préparer un composé où lesdits restes glycidols comprennent au moins 0,5% molaire de tous les restes époxydes dans Z.

13. Procédé selon l'une quelconque des revendications 1 à 12, pour préparer un composé où lesdits restes glycidols comprennent de 8,0 à 22,0% molaire de tous les restes époxydes dans Z.

14. Procédé selon l'une quelconque des revendications 1 à 13, pour préparer un composé où dans ledit groupe Z le premier segment époxyde produit à l'étape 2 contient un total de 2 à 15 restes d'oxyde de propylène, oxyde de butylène ou leurs mélanges, et le second segment époxyde produit à l'étape 3 contient de 2 à 50 restes d'oxyde d'éthylène.

15. Procédé selon l'une quelconque des revendications 1 à 14, où le nombre total du premier et du second segment époxyde produit aux étapes 2 et 3 respectivement ne dépasse pas 200.

16. Procédé selon l'une quelconque des revendications 1 à 15, où ledit segment glycidol est directement lié au site réactif d'un nucléophile choisi parmi les composés amine primaire ou secondaire, hydroxy, mercapto, acide sulfinique, sulfonamide, imide ou imide sulfoïque.

17. Procédé selon l'une quelconque des revendications 1 à 16, où ledit segment glycidol est relié directement à un composé aromatique par l'intermédiaire d'une liaison oxy, thio, sulfinyle, sulfonamido ou imido.

18. Procédé selon l'une quelconque des revendications 1 à 17, où ledit segment glycidol est relié directement à un azote lié directement à un composé aromatique.

19. Procédé selon l'une quelconque des revendications 1 à 18, pour préparer un composé où ledit reste d'un nucléophile organique est un reste d'un chromophore organique ou d'un intermédiaire chromophore organique.

20. Procédé selon l'une quelconque des revendications 1 à 19, pour préparer un composé où ledit reste d'un nucléophile organique est un reste d'un chromophore azo, méthine ou azaméthine et ledit chromophore est lié à 1 à 4 groupes Z.

21. Procédé selon l'une quelconque des revendications 1 à 20 pour préparer un composé où ledit reste d'un nucléophile organique est choisi parmi les composés des formules :
Q-N=N-Ar, M=CH-Ar, M=N-Ar et D-N=N-Ar ;
où Q est choisi parmi les groupes non substitués ou substitués :
phényle, naphtyle, thiazol-2-yle, benzothiazol-2-yle, 1,3,4-thiadiazol-2-yle, 1,2,4-thiadiazol-5-yle, isothiazol-5-yle, isoxazol-5-yle, 2,1-benzisothiazol-3-yle, 2-thiényle, 3- et 4-pyridyle, pyrazol-5-yle, 3- et 4-phtalimidyle, 1,2,4-triazol-3-yle, et 4,5-(3,3-diméthyl-1-oxotétraméthylène)thiazol-2-yle ;
où Ar est choisi parmi les groupes substitués ou non substitués; anilines, naphtylamines, indoles, diphénylamines, 1,2,3,4-tétrahydroquinolines, 3,4-dihydro-2H-1,4-benzoxazines, 2-aminothiazoles, 2,3-dihydroindoles, carbazoles, phénoxazines, phénothiazines, 2-aminothiophènes, aminopyridines et julolidines;
où D est un radical hétérocyclique aromatique ayant un atome d'azote quaternaire, ledit radical étant choisi parmi les groupes non substitués ou substitués: thiazol-2-yle, benzothiazol-2-yle, 1,3,4-thiadiazol-2-yle, 1,2,4-thiadiazol-5-yle, isothiazol-5-yle, 1,2-benzisothiazol-3-yle, pyrazol-5-yle, 1,3,4-triazol-2-yle, 3- ou 4-pyridyle et 4,5-(3,3-diméthyl-1-oxotétraméthylène)-thiazol-2-yle; et
où M est un reste méthylène actif; et où ledit reste d'un nucléophile organique est fixé à 1 à 4 radicaux Z.

22. Procédé selon l'une quelconque des revendications 1 à 21 pour préparer un composé où Y dérive d'un nucléophile organique choisi parmi les amines primaires ou secondaires ou les nucléophiles organiques de formules 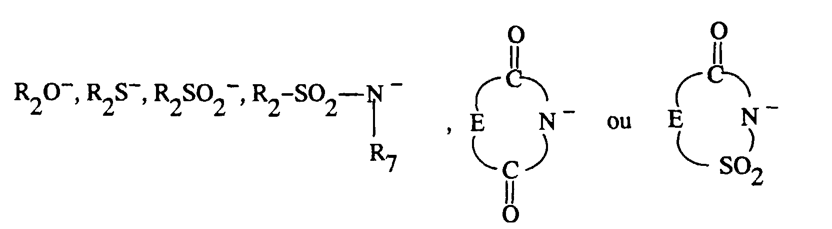 où
R₂ est choisi parmi les groupes alkyles substitués ou non substitués de 1-20 atomes de carbone, aryles substitués ou non substitués de 6-10 atomes de carbone dans le cycle, les cycloalkyles substitués ou non substitués de 5-7 atomes de carbone dans le cycle ;
R₇ est choisi parmi l'hydrogène ou R₂ ; et
E comprend un radical cyclique divalent.

23. Procédé selon l'une quelconque des revendications 1 à 22, pour préparer un composé où Y est relié à chaque radical Z par -O-, -S-, -SO₂-, -N(R₃), -SO₂N(R₃), ou -N(SO₂R₄) où :
R₃ est choisi parmi l'hydrogène, -Z ou un groupe non substitué ou substitué choisi parmi un alkyle, aryle ou cycloalkyle, et
R₄ est un groupe non substitué ou substitué choisi parmi les groupes alkyles, aryles ou cycloalkyles.

24. Procédé selon la revendication 23 pour préparer un composé où Y est le reste d'un nucléophile organique choisi parmi : les anilines substituées ou non substituées ; 1,2,3,4-tétrahydroquinolines, 3,4-dihydro-2H-1,4-benzoxazines, 2-aminothiazoles, indoles, 2,3-dihydroindoles, carbazoles, naphtylamines, phénoxazines, phénothiazines, diphénylamines, julolidines, 2-aminothiophènes et aminopyridines.

25. Procédé selon l'une quelconque des revendications 1 à 24, pour préparer un composé où Y est un intermédiaire chromophore organique fixé à Z par un agent de liaison choisi parmi l'oxygène, le soufre, -SO₂-, -SO₂N(R₁)-, -N(SO₂R₂)-, -N(R₁)-, -COO- ou -CON(R₁)- ;
où R₁ est choisi parmi l'hydrogène; un alkyle inférieur; un alkyle inférieur substitué par hydroxy, aryloxy, halogène, cycloalkyle ou phényle; cycloalkyle; phényles phényle substitué par alkyle inférieur, alcoxy inférieur, halogène, hydroxy, alcanoylamino, carbalcoxy, carboxy, cyano et alcanoyloxy ; et R₂ représente les composés répertoriés pour R₁ sauf l'hydrogène.

26. Composition comprenant un matériau polymère qu'on a fait réagir ou qu'on a mélangé avec un composé préparé selon un procédé revendiqué à l'une quelconque des revendications 1 à 25, ledit composé comprenant de 0,0001 à 10,0% en poids de ladite composition.

27. Composition selon la revendication 26, où ledit matériau polymère est thermoplastique.

28. Composition selon l'une quelconque des revendications 26 et 27, où ledit matériau polymère est une polyoléfine.

29. Composition selon la revendication 26, où ledit matériau polymère est thermodurcissable.

30. Composition selon la revendication 29, où ledit matériau polymère est un polyuréthane formé par la mise en réaction d'un polyol choisi parmi des polyesters et des polyéthers à terminaison hydroxyle, avec un polyisocyanate en présence d'une solution dudit composé.

31. Composition selon la revendication 26, où ledit polyisocyanate est un polyisocyanate aromatique.
